(19) Europäisches Patentamt
European Patent Office
Office européen des brevets

(11) EP 1 463 770 B1

(12) **EUROPEAN PATENT SPECIFICATION**

(45) Date of publication and mention of the grant of the patent:
**04.07.2007 Bulletin 2007/27**

(21) Application number: **03702017.9**

(22) Date of filing: **07.01.2003**

(51) Int Cl.:
***C08G 61/12*** *(2006.01)*

(86) International application number:
**PCT/US2003/000334**

(87) International publication number:
**WO 2003/057755 (17.07.2003 Gazette 2003/29)**

(54) **ORGANIC COMPOSITION**

ORGANISCHE ZUSAMMENSETZUNG

COMPOSITION ORGANIQUE

(84) Designated Contracting States:
**DE FR GB NL**

(30) Priority: **08.01.2002 US 347195 P**
**30.05.2002 US 384303 P**

(43) Date of publication of application:
**06.10.2004 Bulletin 2004/41**

(73) Proprietor: **Honeywell International Inc.**
**Morristown, New Jersey 07960 (US)**

(72) Inventors:
- **APEN, Paul, G.**
  **San Francisco, CA 94123 (US)**
- **ZHEREBIN, Ruslan**
  **Daily City, CA 94015 (US)**
- **LI, Bo**
  **San Jose, CA 95148 (US)**
- **KOROLEV, Boris, A.**
  **San Jose, CA 95126 (US)**
- **LAU, Kreisler, S.**
  **Sunnyvale, CA 94087 (US)**
- **KANSCHIK-CONRADSEN, Andreas**
  **30926 Seelze (DE)**
- **KELLERMEIER, Bernd**
  **30926 Seelze (DE)**
- **DEMEL, Sonja**
  **30926 Seelze (DE)**
- **WERNER, Christian**
  **30926 Seelze (DE)**
- **SULLIVAN, Edward, J.**
  **Campbell, CA 95008 (US)**

(74) Representative: **Hucker, Charlotte Jane et al**
**Gill Jennings & Every LLP**
**Broadgate House**
**7 Eldon Street**
**London EC2M 7LH (GB)**

(56) References cited:
**WO-A-01/29052**
**WO-A-01/78110**
**WO-A-02/081546**
**US-A- 4 918 158**

- **REICHERT V R ET AL: "HIGHLY CROSS-LINKED POLYMERS BASED ON ACETYLENE DERIVATIVES OF TETRAPHENYLADAMANTANE" MACROMOLECULES, AMERICAN CHEMICAL SOCIETY. EASTON, US, vol. 27, no. 24, 21 November 1994 (1994-11-21), pages 7030-7034, XP000480228 ISSN: 0024-9297**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The invention relates to a composition, and in particular, tetrasubstituted adamantane derivatives, and oligomers or polymers thereof linked via unsubstituted or substituted aryl units, to a process for its preparation and to its use, inter alia as a dielectric or insulation material in microelectronic components.

Background of the Invention

Dielectrics are widely used in the semiconductor industry, e.g. as insulation material between conductive lines, such as integrated circuits, microchips, multichip modules, laminated circuit boards or other microelectronic components.

The advances in the semiconductor industry rest on the continuing development of new generations of integrated circuits that display a higher capacity and functionality at the same time as the dimensions become smaller. Since the conductive lines thus have to be ever finer and more densely packed, the capacitance between the neighbouring conductive lines increases, which is associated with a series of disadvantages, such as increased current consumption, longer signal delay time and more crosstalk.

Methods used to deposit dielectric materials may be divided into two categories: spin-on deposition (hereinafter SOD) and chemical vapor deposition (hereinafter CVD). Efforts to develop lower dielectric constant materials include altering the chemical composition (organic, inorganic, blend of organic/inorganic) or changing the dielectric matrix (porous, non-porous). Table I summarizes the development of several materials having dielectric constants ranging from 2.0 to 3.5. (PE = plasma enhanced; HDP = high-density plasma) However, many of these dielectric materials and matrices disclosed in the publications shown in Table 1 fail to exhibit many of the necessary or optimal physical and chemical properties needed for low k dielectric materials, such as higher mechanical stability, high thermal stability, high glass transition temperature, high modulus or hardness, while at the same time still being able to be processed on to a substrate, wafer, or other surface. Therefore, it may be useful to investigate other compounds and materials that may be used as dielectric materials and layers, even though these compounds or materials may not be currently contemplated as dielectric materials in their present form.

Table I

| MATERIAL | DEPOSITION METHOD | DIELECTRIC CONSTANT (k) | REFERENCE |
|---|---|---|---|
| Fluorinated silicon oxide (SiOF) | PE-CVD; HDP-CVD | 3.3-3.5 | US Patent 6,278,174 |
| Hydrogen Silsesquioxane (HSQ) | SOD | 2.0-2.5 | US Patents 4,756,977; 5,370,903; and 5,486,564; International Patent Publication WO 00/40637; E.S. Moyer et al., "Ultra Low k Silsesquioxane Based Resins", Concepts and Needs for Low Dielectric Constant < 0.15 μm Interconnect Materials: Now and the Next Millennium, Sponsored by the American Chemical Society, pages 128-146 (November 14-17, 1999) |
| Methyl Silsesquioxane (MSQ) | SOD | 2.4-2.7 | US Patent 6,143,855 |
| Polyorganosilicon | SOD | 2.5-2.6 | US Patent 6,225,238 |
| Fluorinated Amorphous Carbon (a-C:F) | HDP-CVD | 2.3 | US Patent 5,900,290 |
| Benzocyclobutene (BCB) | SOD | 2.4-2.7 | US Patent 5,225,586 |

(continued)

| MATERIAL | DEPOSITION METHOD | DIELECTRIC CONSTANT (k) | REFERENCE |
|---|---|---|---|
| Polyarylene Ether (PAE) | SOD | 2.4 | US Patents 5,986,045; 5,874,516; and 5,658,994 |
| Parylene (N and F) | CVD | 2.4 | US Patent 5,268,202 |
| Polyphenylenes | SOD | 2.6 | US Patents 5,965,679 and 6,288,188B1; and Waeterloos et al., "Integration Feasibility of Porous SiLK Semiconductor Dielectric", Proc. Of the 2001 International Interconnect Tech. Conf., pp. 253-254 (2001). |
| Organosilsesquixoane | CVD, SOD | < 3.9 | WO 01/29052 |
| Fluorosilsesquioxane | CVD, SOD | < 3.9 | WO 01/29141 |

Unfortunately, numerous organic SOD systems under development with a dielectric constant between 2.0 and 3.5 suffer from certain drawbacks in terms of mechanical and thermal properties as described above; therefore a need exists in the industry to develop improved processing and performance for dielectric films in this dielectric constant range.

Reichert and Mathias describe compounds and monomers that comprise adamantane molecules, which are in the class of cage-based molecules and are taught to be useful as diamond substitutes. (Polym, Prepr. (Am. Chem. Soc., Div. Polym. Chem.), 1993, Vol. 34 (1), pp. 495-6; Polym, Prepr. (Am. Chem. Soc., Div. Polym. Chem.), 1992, Vol. 33 (2), pp. 144-5; Chem. Mater., 1993, Vol. 5 (1), pp. 4-5; Macromolecules, 1994, Vol. 27 (24), pp. 7030-7034; Macromolecules, 1994, Vol. 27 (24), pp. 7015-7023; Polym, Prepr. (Am. Chem. Soc., Div. Polym. Chem.), 1995, Vol. 36 (1), pp. 741-742; 205th ACS National Meeting, Conference Program, 1993, pp. 312; Macromolecules, 1994, Vol. 27 (24), pp. 7024-9; Macromolecules, 1992, Vol. 25 (9), pp. 2294-306; Macromolecules, 1991, Vol. 24 (18), pp. 5232-3; Veronica R. Reichert, PhD Dissertation, 1994, Vol. 55-06B; ACS Symp. Ser.: Step-Growth Polymers for High-Performance Materials, 1996, Vol. 624, pp. 197-207; Macromolecules, 2000, Vol. 33 (10), pp. 3855-3859; Polym, Prepr. (Am. Chem. Soc., Div. Polym. Chem.), 1999, Vol. 40 (2), pp. 620-621; Polym, Prepr. (Am. Chem. Soc., Div. Polym. Chem.), 1999, Vol. 40 (2), pp. 577-78; Macromolecules, 1997, Vol. 30 (19), pp. 5970-5975; J. Polym. Sci, Part A: Polymer Chemistry, 1997, Vol. 35 (9), pp. 1743-1751; Polym, Prepr. (Am. Chem. Soc., Div. Polym. Chem.), 1996, Vol. 37 (2), pp. 243-244; Polym, Prepr. (Am. Chem. Soc., Div. Polym. Chem.), 1996, Vol. 37 (1), pp. 551-552; J. Polym. Sci., Part A: Polymer Chemistry, 1996, Vol. 34 (3), pp. 397-402; Polym, Prepr. (Am. Chem. Soc., Div. Polym. Chem.), 1995, Vol. 36 (2), pp. 140-141; Polym, Prepr. (Am. Chem. Soc., Div. Polym. Chem.), 1992, Vol. 33 (2), pp. 146-147; J. Appl. Polym. Sci., 1998, Vol. 68 (3), pp. 475-482). The adamantane-based compounds and monomers described by Reichert and Mathias are preferably used to form polymers with adamantane molecules at the core of a thermoset. The compounds disclosed by Reichert and Mathias in their studies, however, comprise only one isomer of the adamantane-based compound by design choice. Structure A shows this symmetrical *para*-isomer 1,3,5,7-tetrakis[4'-(phenylethynyl)phenyl]adamantane:

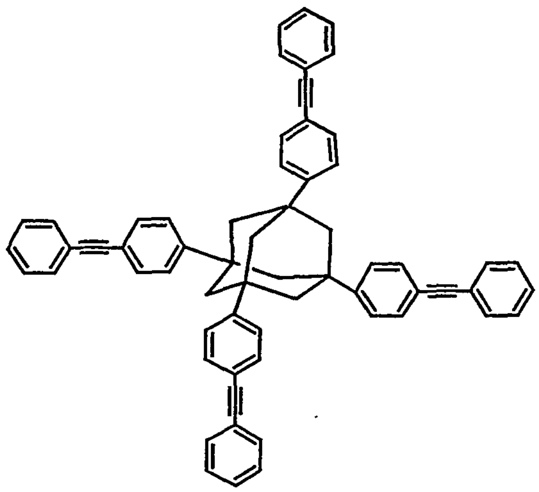

In other words, Reichert and Mathias in their individual and joint work contemplate a useful polymer comprising only one isomeric form of the target adamantane-based monomer. A significant problem exists, however, when forming and processing polymers from the single isomer form (symmetrical "all-*para-"* isomer) 1,3,5,7-tetrakis[4'-(phenylethynyl) phenyl]adamantane of the adamantane-based monomer. According to the Reichert dissertation (supra) and Macromolecules, vol. 27, (pp. 7015-7034) (supra), the symmetrical *all-para-* isomer 1, 3, 5, 7-tetrakis[4'-(phenylethynyl)phenyl] adamantane "was found to be soluble enough in chloroform that a $^{1}H$ NMR spectrum could be obtained. However, acquisition times were found to be impractical for obtaining a solution $^{13}C$ NMR spectrum." Thus, the Reichert symmetrical *"*all-*para-"* isomer 1,3,5,7-tetrakis[4'-(phenylethynyl)phenyl]adamantane is insoluble in standard organic solvents and therefore, would not be useful in any application requiring solubility or solvent-based processing, such as flow coating, spin coating, or dip coating. See Comparative Example 1 below.

In our commonly assigned pending patent application PCT/US01/22204 filed October 17, 2001 (claiming the benefit of our commonly assigned pending patent applications US Serial No. 09/545058 filed April 7, 2000; US Serial No. 09/618945 filed July 19, 2000; US Serial No. 09/897936 filed July 5, 2001; US Serial No. 09/902924 filed July 10, 2001; and International Publication WO 01/78110 published October 18, 2001), we discovered a composition comprising an isomeric thermosetting monomer or dimer mixture, wherein the mixture comprises at least one monomer or dimer having the structure correspondingly

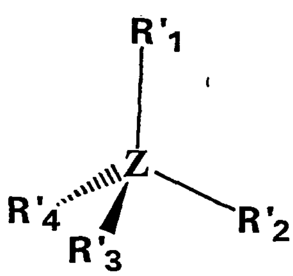

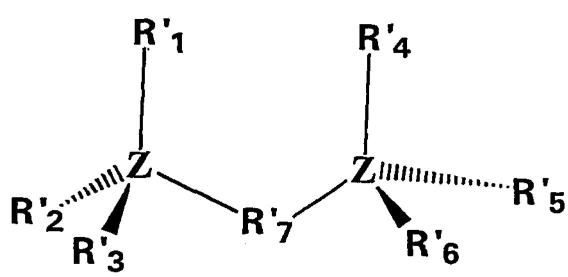

wherein Z is selected from a cage compound and a silicon atom; $R'_1$, $R'_2$, $R'_3$, $R'_4$, $R'_6$, and $R'_6$ are independently selected from an aryl, a branched aryl, and an arylene ether, and wherein at least one of the aryl, the branched aryl, and the arylene ether has an ethynyl group; and $R'_7$ is aryl or substituted aryl. We also disclose methods for formation of these thermosetting mixtures. This novel isomeric thermosetting monomer or dimer mixture is useful as a dielectric material in microelectronics applications and soluble in many solvents such as cyclohexanone. These desirable properties make this isomeric thermosetting monomer or dimer mixture ideal for film formation at thicknesses of 0.1 μm to 1.0μm.

In commonly assigned pending patent application PCT/USO1/5O182 filed December 31, 2001, we discovered a composition comprising: (a) thermosetting compound comprising monomer having the structure

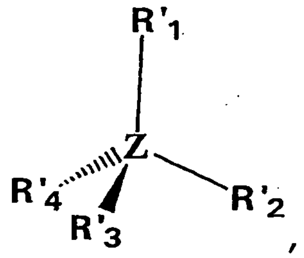

dimer having the structure

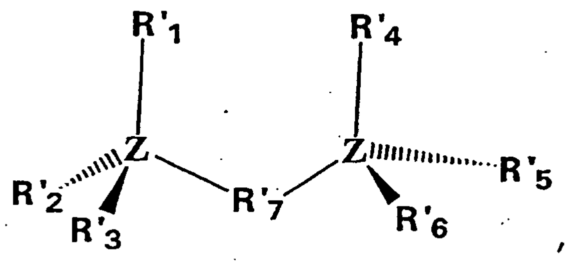

or a mixture of the monomer and dimer wherein Z is selected from cage compound and silicon atom; $R'_1$, $R'_2$, $R'_3$, $R'_4$, $R'_5$, and $R'_6$ are independently selected from aryl, branched aryl, and arylene ether; at least one of the aryl, branched aryl, and the arylene ether has an ethynyl group; $R'_7$ is aryl or substituted aryl; and at least one of $R'_1$, $R'_2$, $R'_3$, $R'_4$, $R'_5$, and $R'_6$ comprises at least two isomers; and (b) an adhesion promoter comprising compound having at least bifunctionality wherein the first functionality is capable of interacting with the thermosetting compound and the second functionality is capable of interacting with a substrate when the composition is applied to the substrate.

Although various methods are known in the art to lower the dielectric constant of a material, all, or almost all of them have disadvantages. Thus, there is still a need in the semiconductor industry to a) provide improved compositions and methods to lower the dielectric constant of dielectric layers; b) provide low dielectric constant materials with improved mechanical and thermal properties, such as thermal stability, glass transition temperature ($T_g$), and hardness; c) produce thermosetting compounds and dielectric materials that are capable of being solvated and spun-on to a wafer or layered material; and d) respond to the industry recognized need for versatile compositions that are capable of forming films or layers having a thickness as thin as 0.1 micron or as thick at least 1.0 $\mu$m and preferably, at least 1.5$\mu$m.

Summary of the Invention

The present invention responds to this need in the art by providing in one embodiment a composition comprising: (a) at least one monomer of Formula I

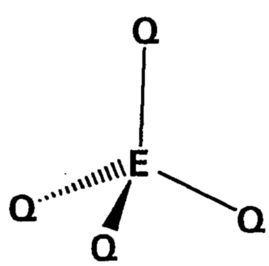

and (b) at least one oligomer or polymer of Formula II

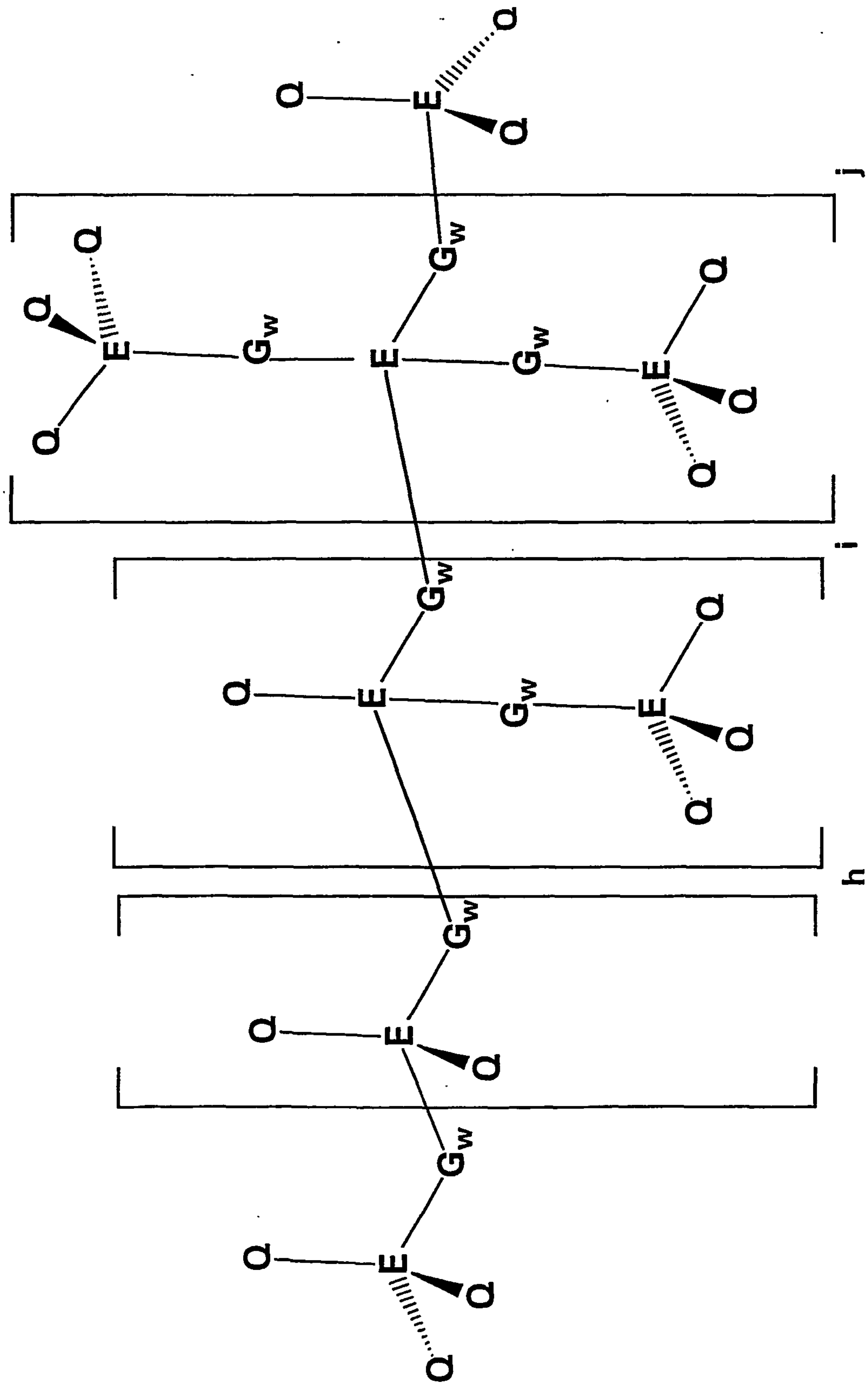

where E is a cage compound (defined below); each Q is the same or different and selected from hydrogen, aryl, branched aryl, and substituted aryl wherein the substituents include hydrogen, halogen, alkyl, aryl, substituted aryl, heteroaryl, aryl ether, alkenyl, alkynyl, alkoxyl, hydroxyalkyl, hydroxyaryl, hydroxyalkenyl, hydroxyalkynyl, hydroxyl, or carboxyl; G

is aryl or substituted aryl where substituents include halogen and alkyl; h is from 0 to 10; i is from 0 to 10; j is from 0 to 10; and w is 0 or 1. It is understood that when w is 0, two cage compounds are directly bonded. For each E having at least one Q attached thereto, preferably that E does not have more than one Q that is hydrogen and more preferably, that E has no Q that is hydrogen. When Q is substituted aryl, more preferably the aryl is substituted with alkenyl and alkynyl groups. The most preferred Q groups include (phenylethynyl)phenyl, bis(phenylethynyl)phenyl, phenylethynyl (phenylethynyl)phenyl, and (phenylethynyl)phenylphenyl moiety. Preferred aryls for G include phenyl, biphenyl, and terphenyl. The more preferred G group is phenyl. Preferably, w is one.

As used herein, the phrases "cage structure", "cage molecule", and "cage compound" are intended to be used interchangeably and refer to a molecule having at least eight atoms arranged such that at least one bridge covalently connects two or more atoms of a ring system. In other words, a cage structure, cage molecule, or cage compound comprises a plurality of rings formed by covalently bound atoms, wherein the structure, molecule, or compound defines a volume, such that a point located within the volume cannot leave the volume without passing through the ring. The bridge and/or the ring system may comprise one or more heteroatoms, and may contain aromatic groups, partially cyclic or acyclic saturated hydrocarbon groups, or cyclic or acyclic unsaturated hydrocarbon groups. Further contemplated cage structures include fullerenes, and crown ethers having at least one bridge. For example, an adamantane or diamantane is considered a cage structure, while a naphthalene or an aromatic spirocompound are not considered a cage structure under the scope of this definition, because a naphthalene or an aromatic spirocompound do not have one, or more than one bridge and thus, do not fall within the description of the cage compound above. Preferred cage compounds are adamantane and diamantane.

The present compositions advantageously have improved solubility (see Inventive Example 5 below). As a result; films having a thickness up to or greater than 1.5 microns may be produced from the present composition.

Another benefit of the present invention is that the present process for making adamantane and diamantane based compositions eliminates the Reichert bromination of adamantane step (see Comparative Example 1 below and Figure 1). Thus, the present process is made more commercially attractive.

Preferably, the present composition comprises (a) at least one adamantane monomer of Formula III

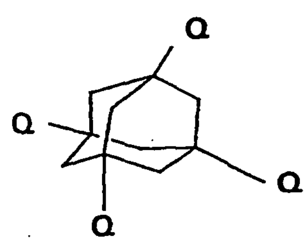

and (b) at least one oligomer or polymer of adamantane of Formula IV

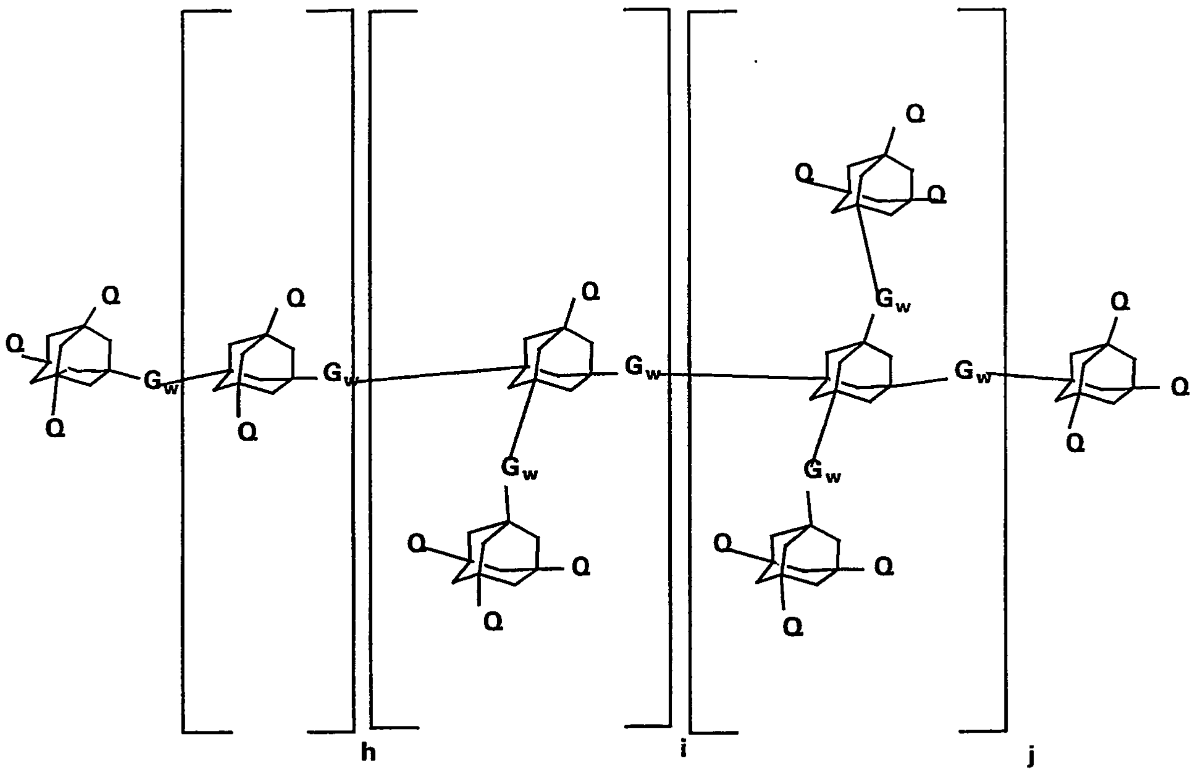

or (a) at least one diamantane monomer of Formula V

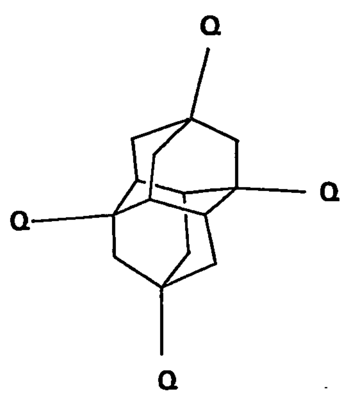

and (b) at least one oligomer or polymer of diamantane monomer of Formula VI

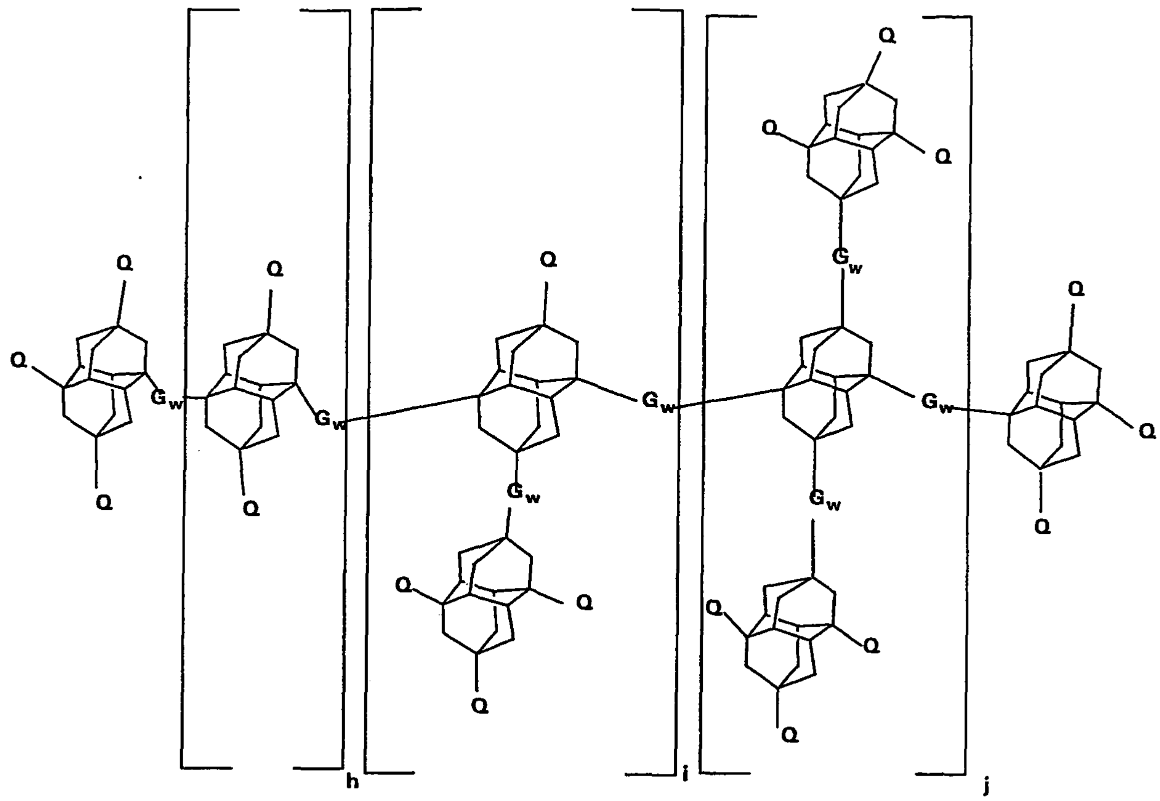

Where Q, $G_w$, h, i, j, and w are as previously defined.

Preferably, the present composition comprises (a) at least one adamantane monomer of Formula VIIA

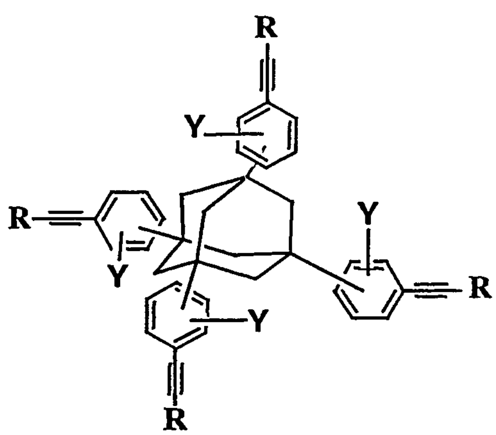

, Formula VIIB

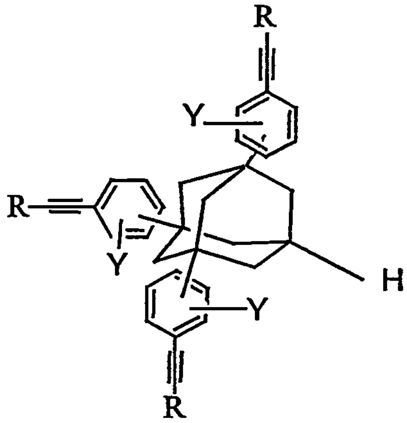

, Formula VIIC

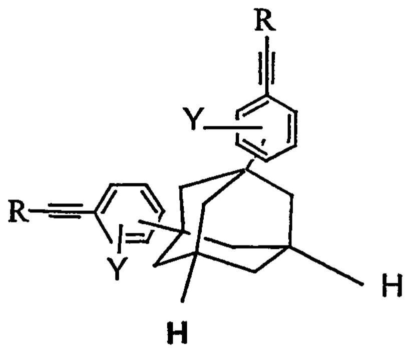

or Formula VIID

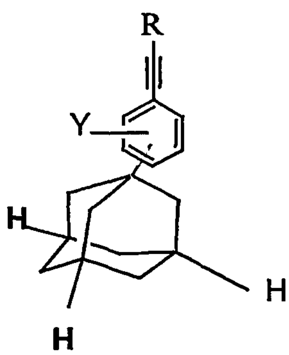

and (b) at least one oligomer or polymer of adamantane monomer of Formula VIII

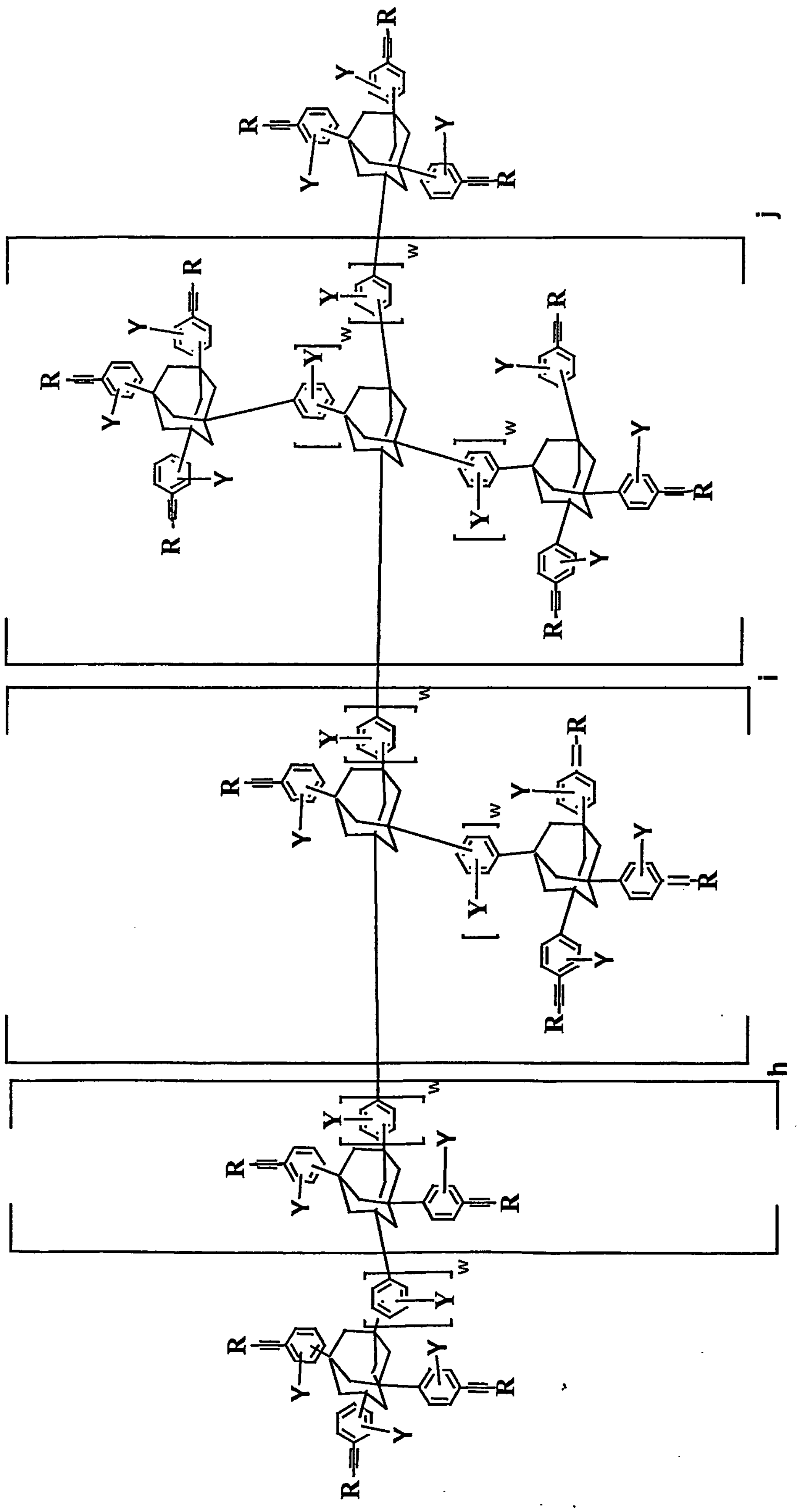

or preferably, at least one oligomer or polymer of adamantane monomer of the following formula

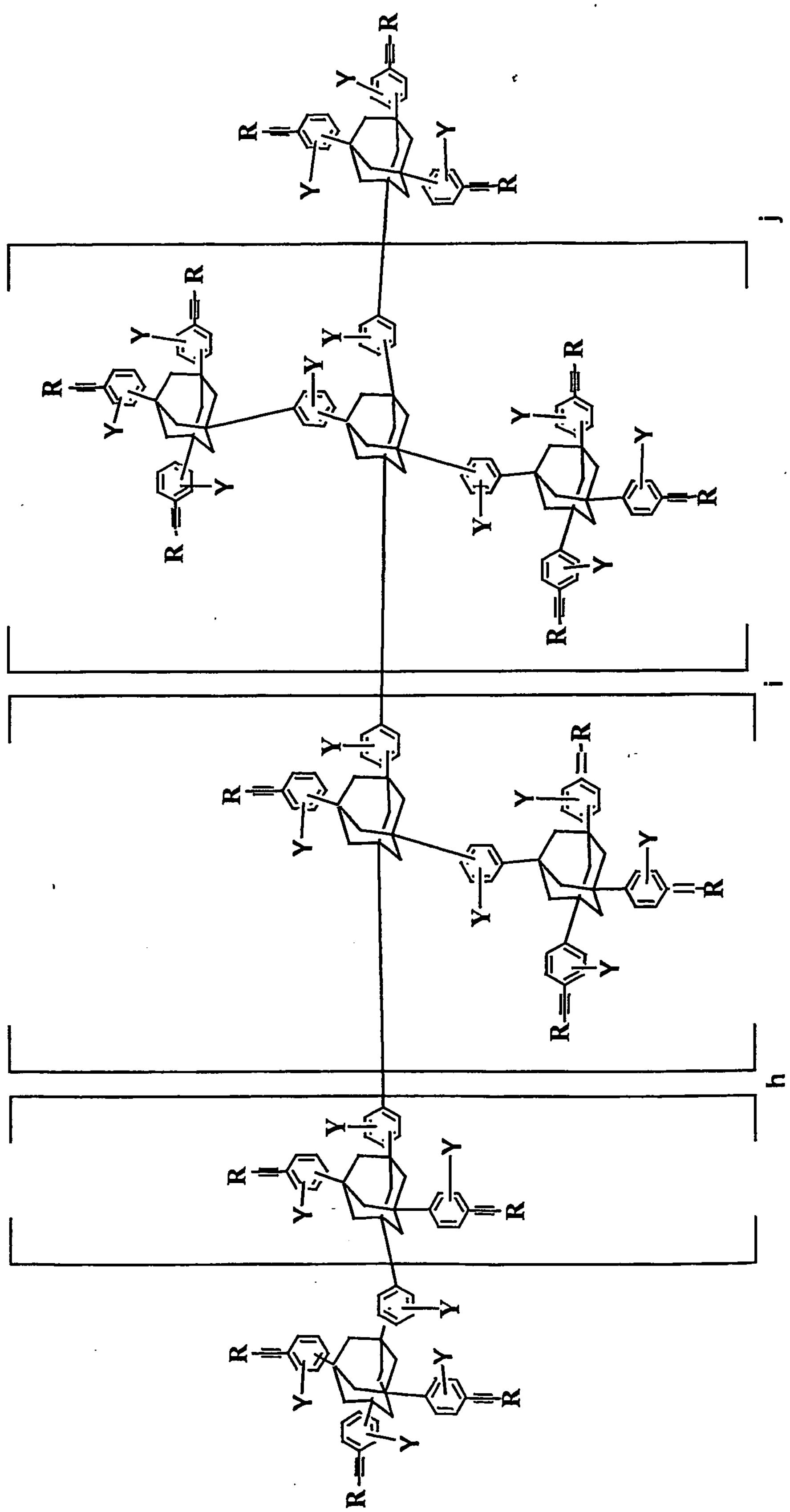

or (a) at least one diamantane monomer of Formula IXA

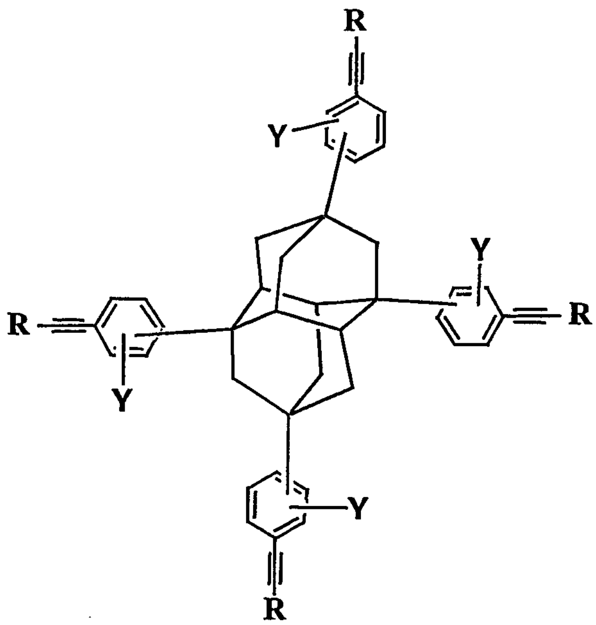

, Formula IX B

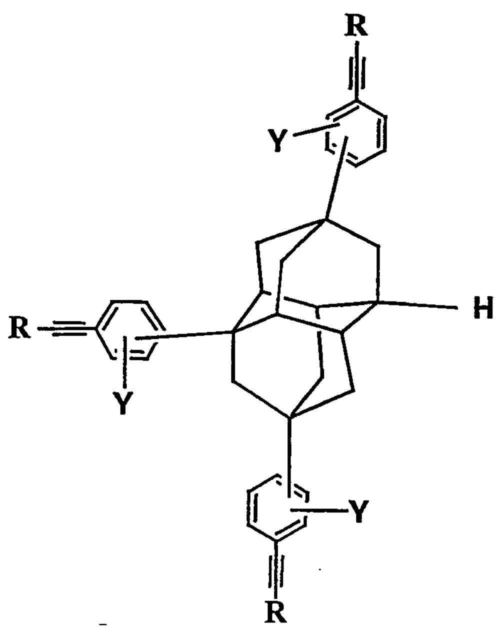

, Formula IXC

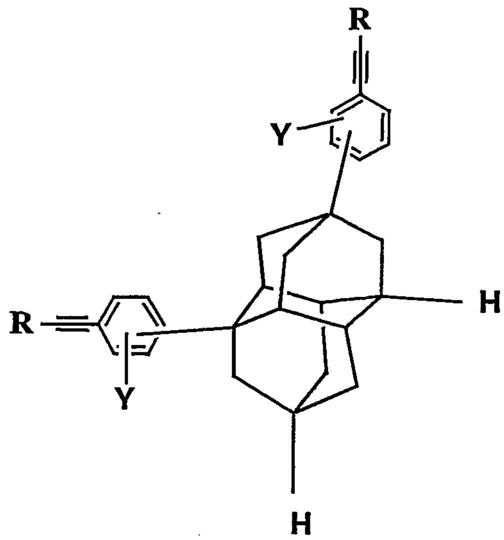

or Formula IXD

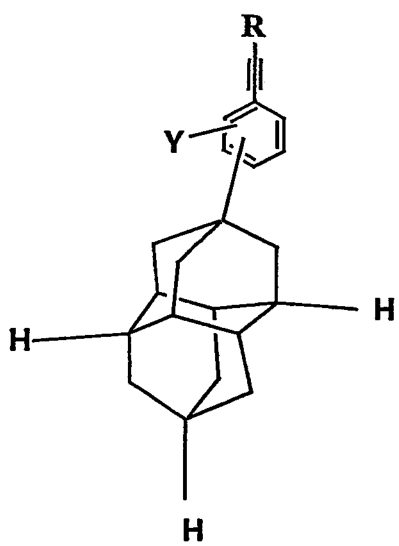

and (b) at least one oligomer or polymer of diamantane monomer of Formula X

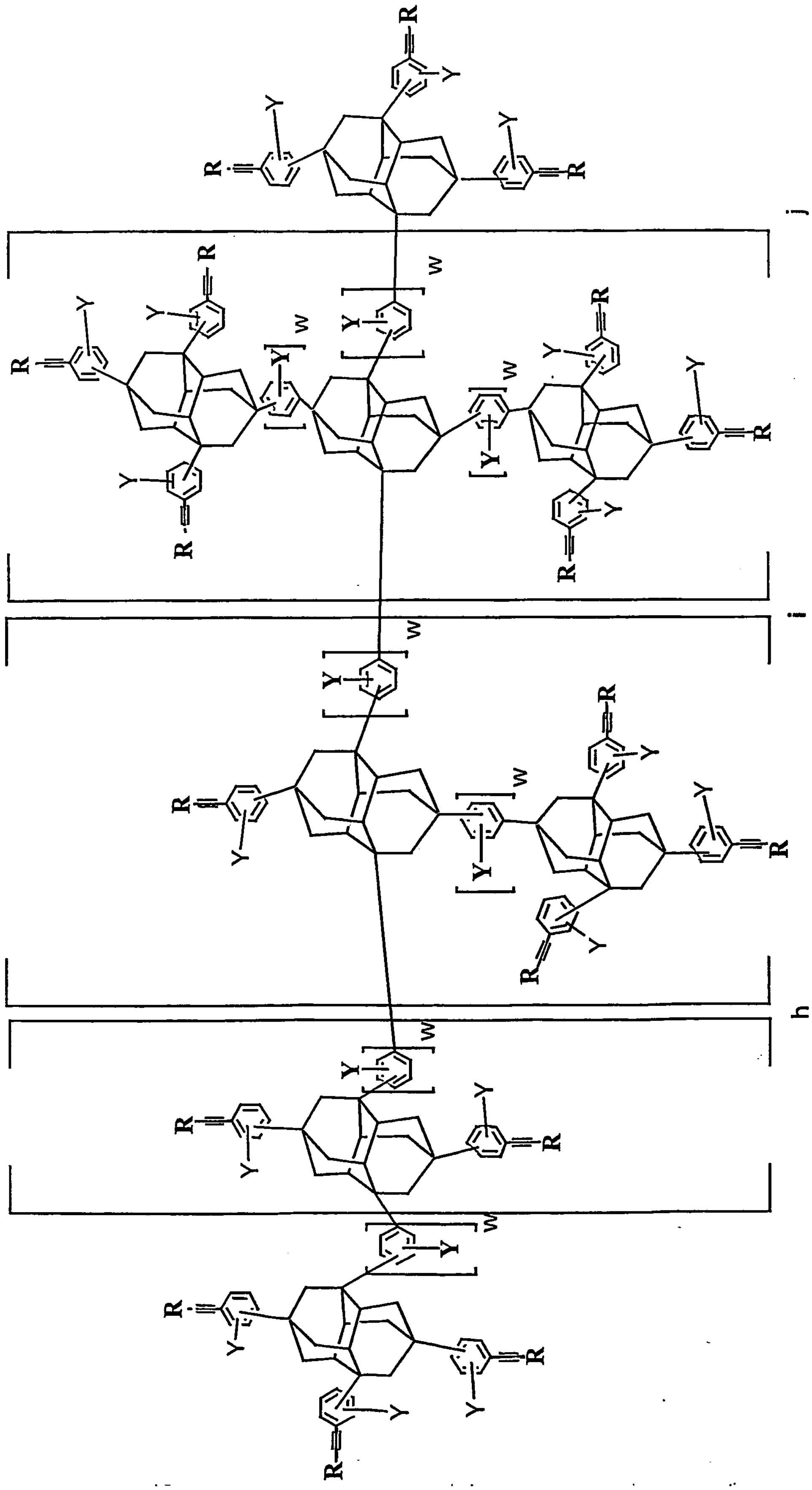

or preferably at least one oligomer or polymer of diamantane monomer of the following formula

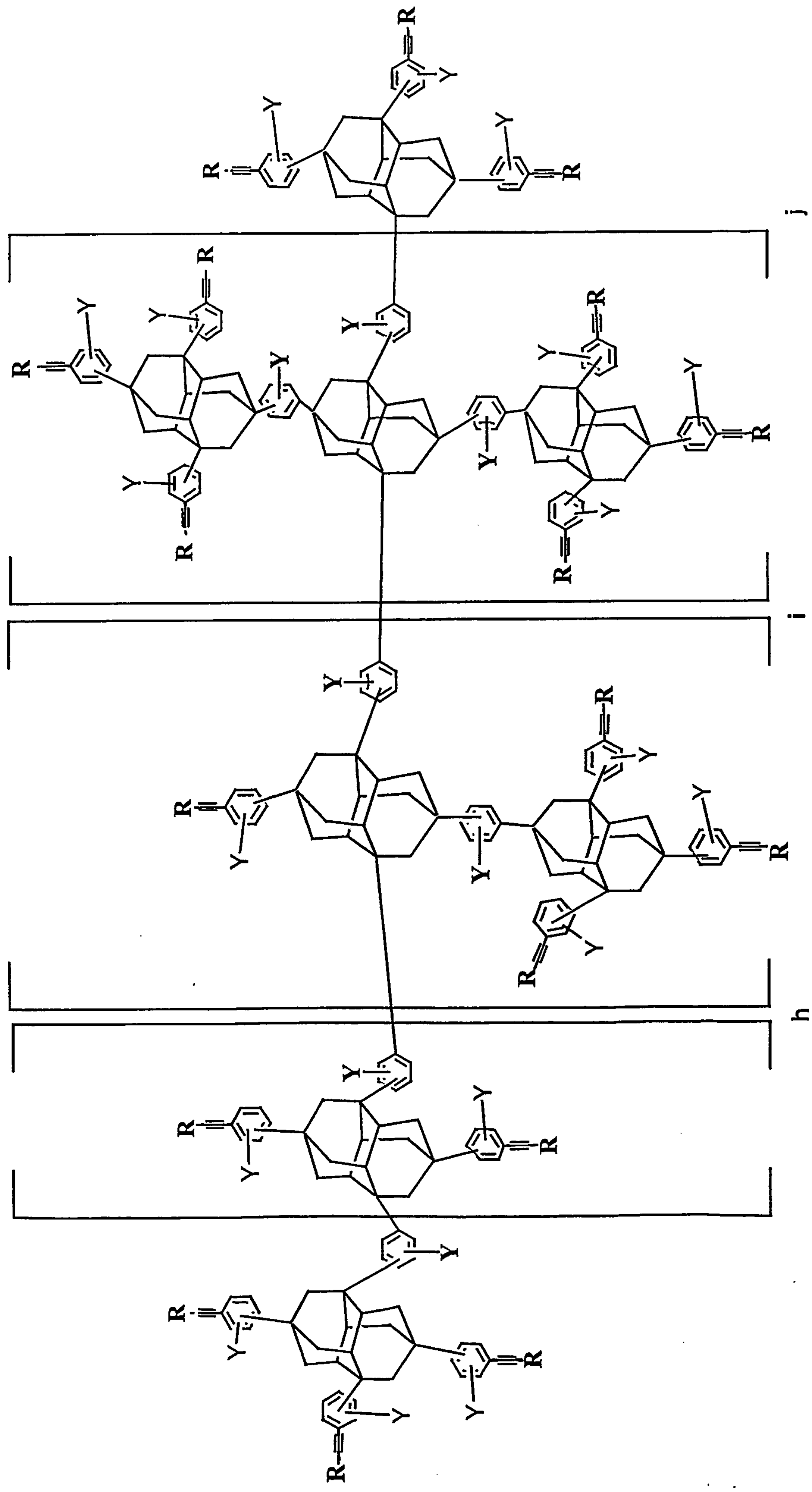

herein h is from 0 to 10; i is from 0 to 10; j is from 0 to 10; w is 0 or 1; each R in Formulae VII, VIII, IX, and X is the same or different and selected from hydrogen, halogen, alkyl, aryl, substituted aryl, heteroaryl, aryl ether, alkenyl, alkynyl, alkoxyl, hydroxyalkyl, hydroxyaryl, hydroxyalkenyl, hydroxyalkynyl, hydroxyl, or carboxyl; and each Y in Formulae VII, VIII, IX, and X is the same or different and selected from hydrogen, alkyl, aryl, substituted aryl, or halogen.

Formulae II, IV, VI, VIII, and X represent random or irregular structures in that any one of the units h, i, and j may or may not repeat numerous times before another unit is present. Thus, the sequence of units in Formulae II, IV, VI, VIII, and X above is random or irregular.

The present invention also provides a process for the preparation of the present compositions, as defined in claim 11. Preferably, the present composition comprises at least one oligomer or polymer of Formula IV above where Q, G, h, i, j, and w are as previously defined.

When all of h, i, and j are zero in Formula IV above, the adamantane dimer is as shown in Formula XI below

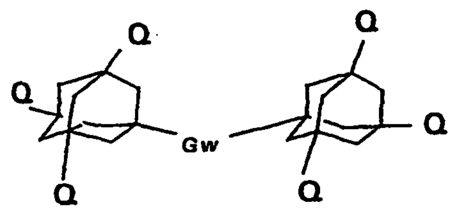

where Q and $G_w$ are as previously defined. When w is zero in Formula XI, examples of adamantane dimers are in the following Table 2

Table 2

| | |
|---|---|
| 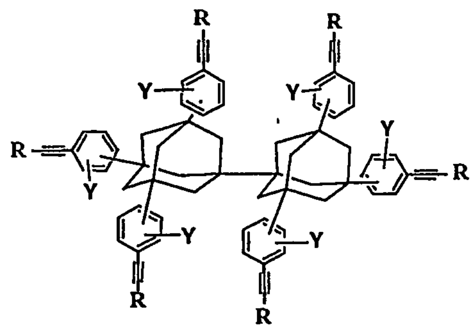 | 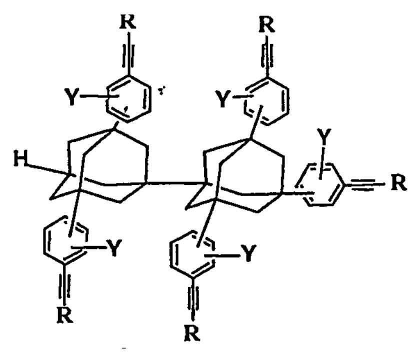 |
| 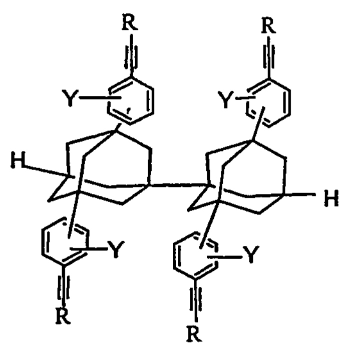 | 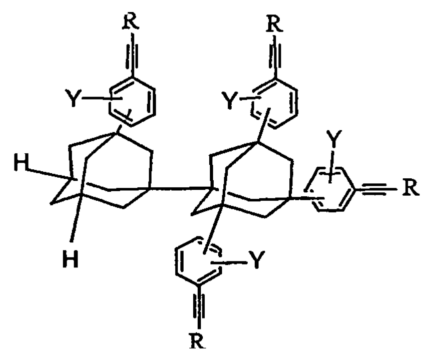 |

(continued)

| | |
|---|---|
| 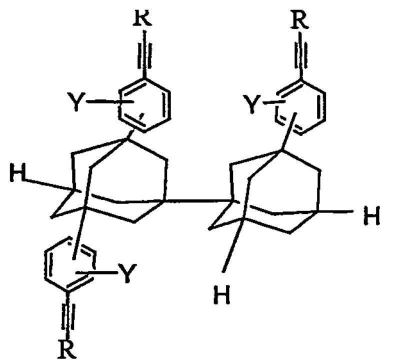 | 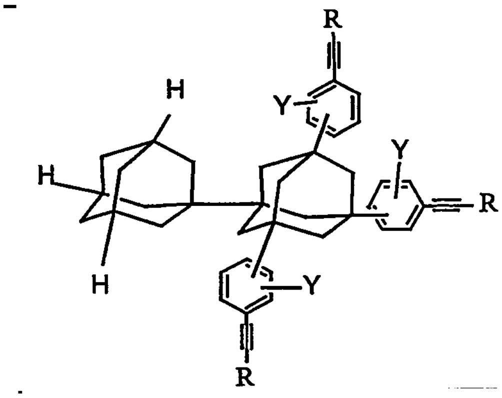 |
| 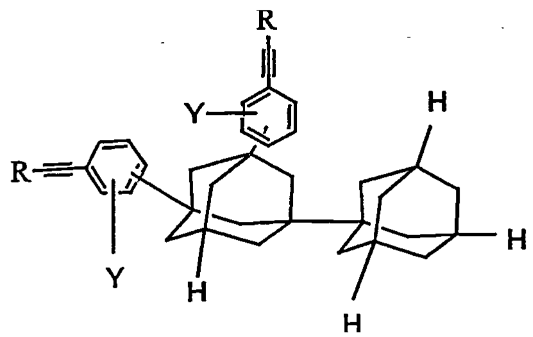 | 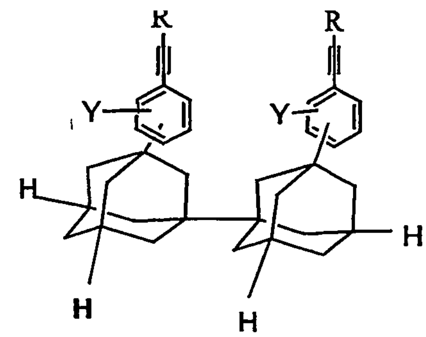 |
| 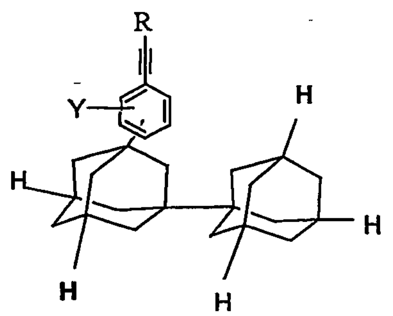 | 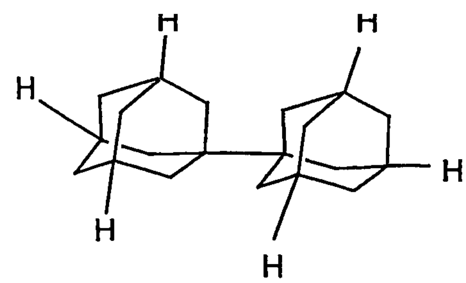 |

When w is preferably one in Formula XI, examples of preferred dimers are in the following Table 3

Table 3

| | |
|---|---|
| 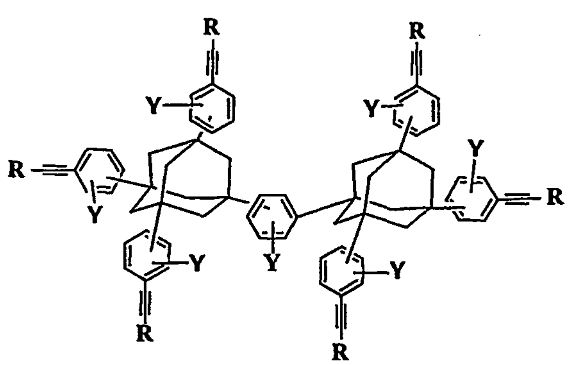 | 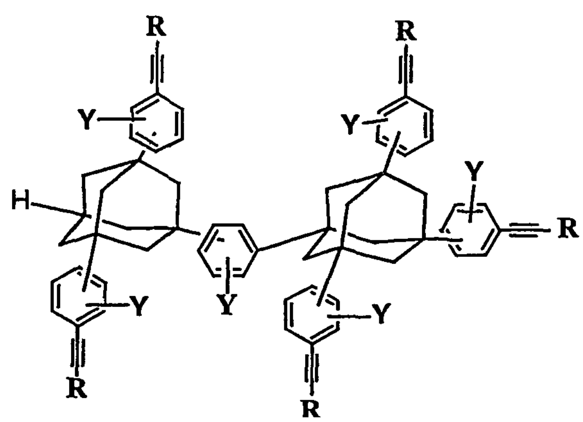 |

(continued)

| | |
|---|---|
| 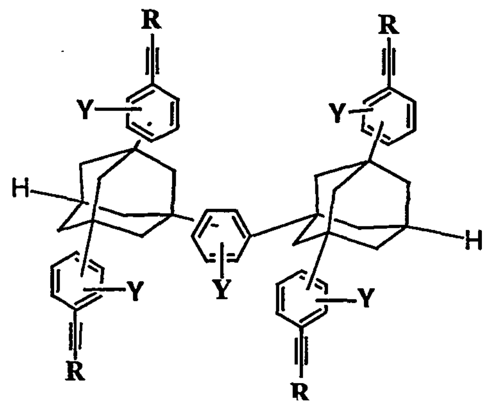 | 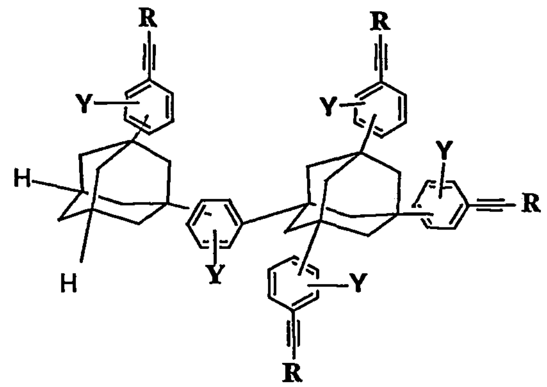 |
| 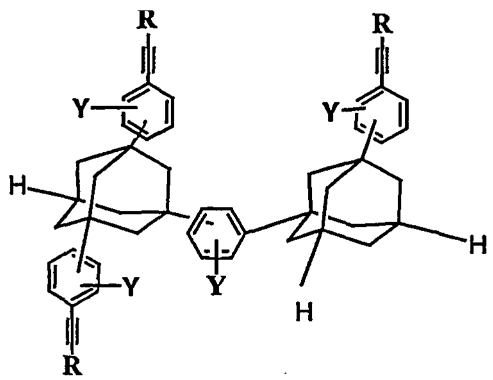 | 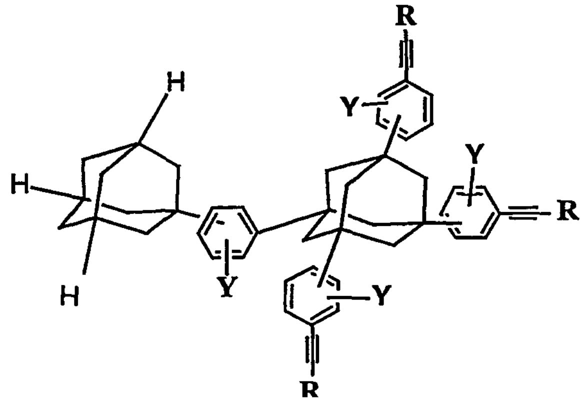 |
| 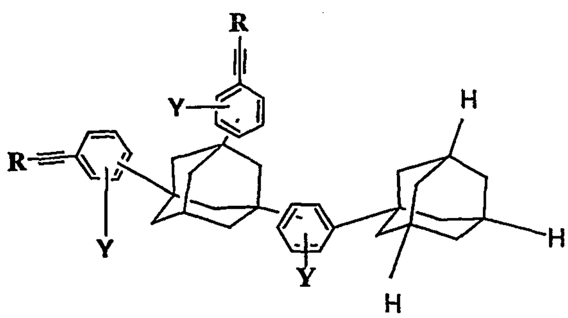 | 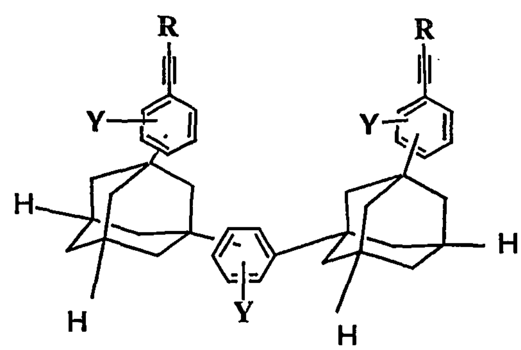 |
| 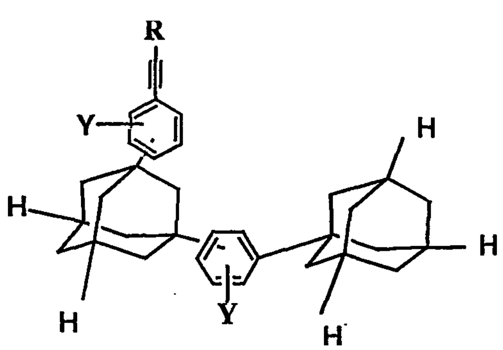 | 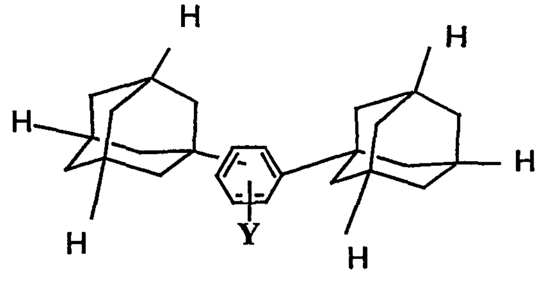 |

When h is 1 and i and j are zero in Formula IV above, the adamantane trimer is as shown in Formula XII below

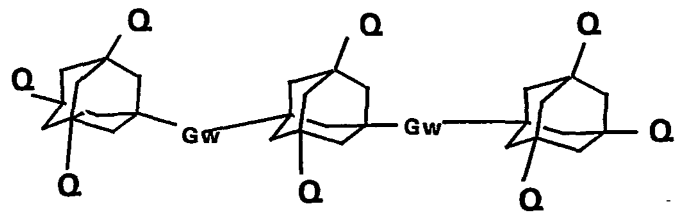

where Q and $G_w$ are as previously defined. When w is preferably one in Formula XII, examples of preferred trimers are in the following Table 4

Table 4

| |
|---|
| 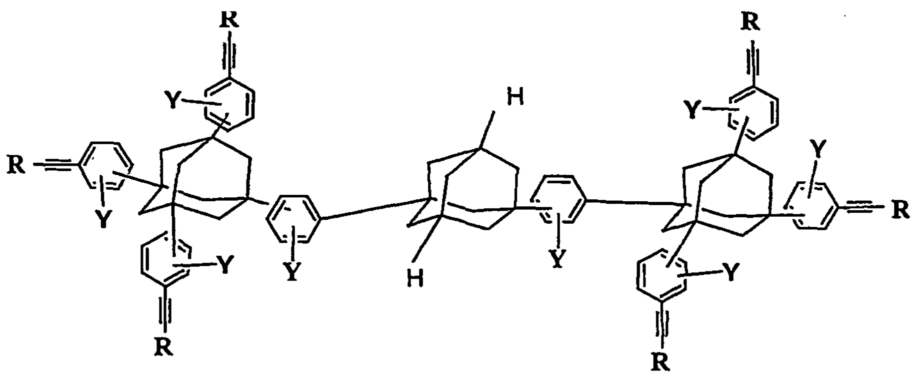 |
| 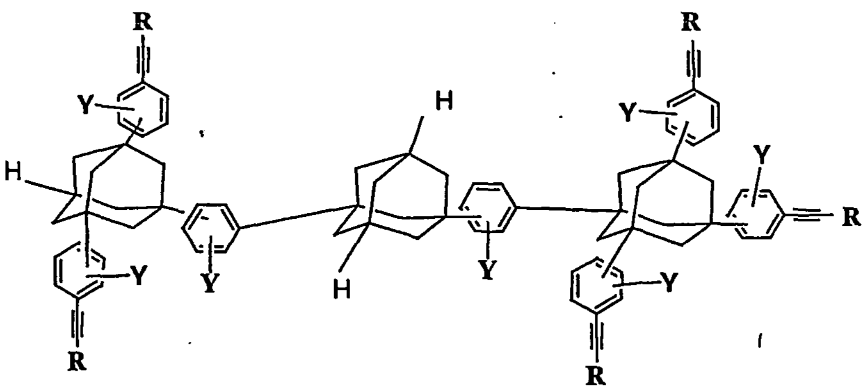 |
| 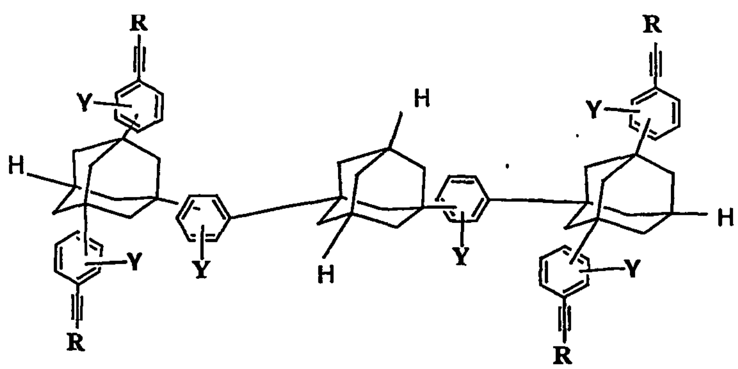 |

(continued)

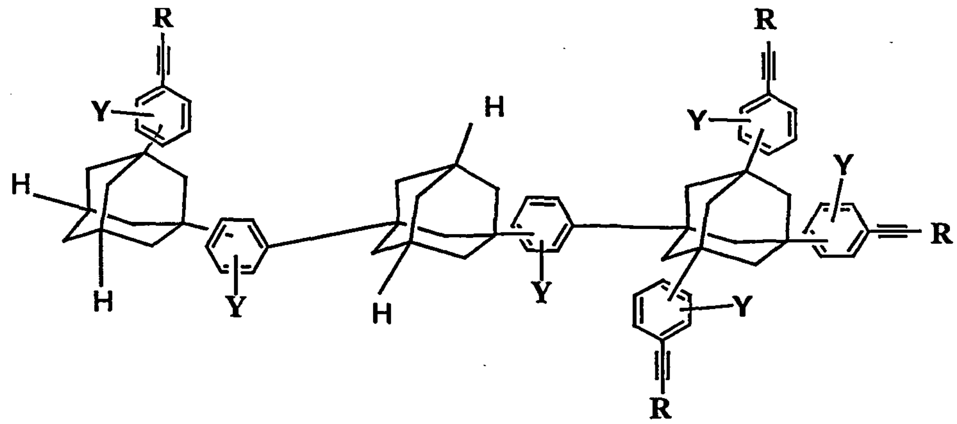

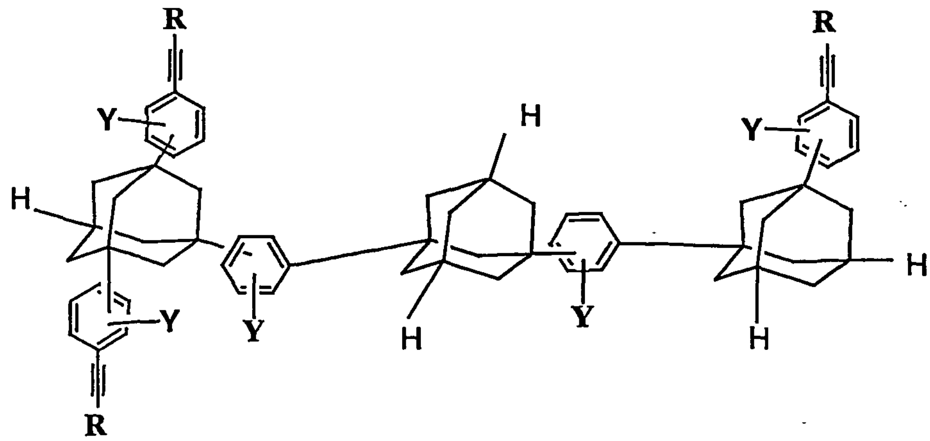

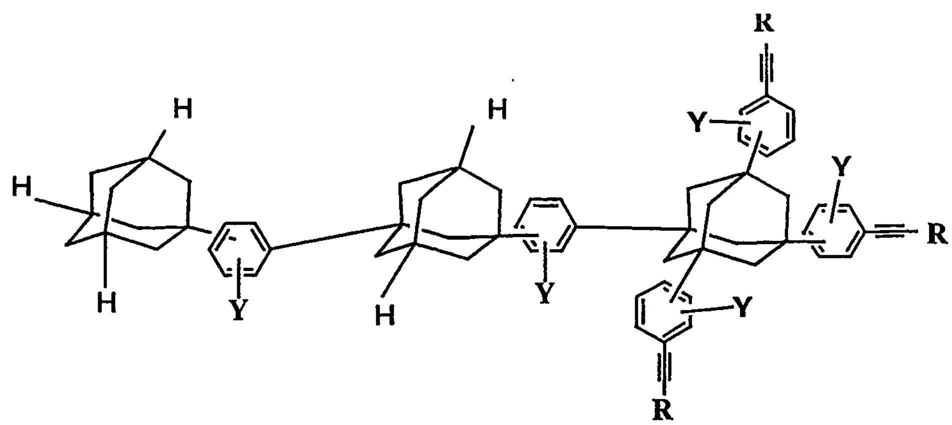

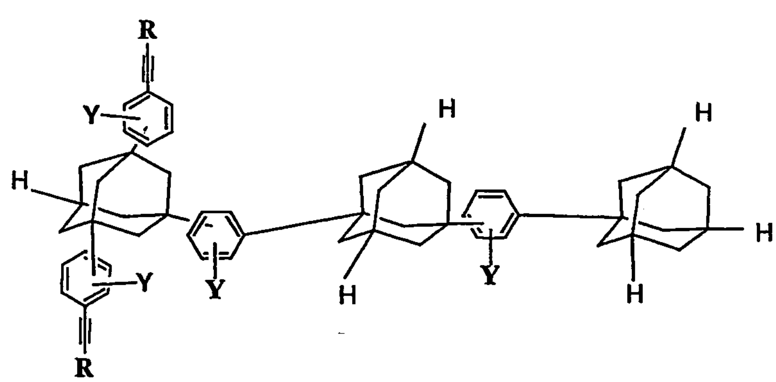

(continued)

| |
|---|
| 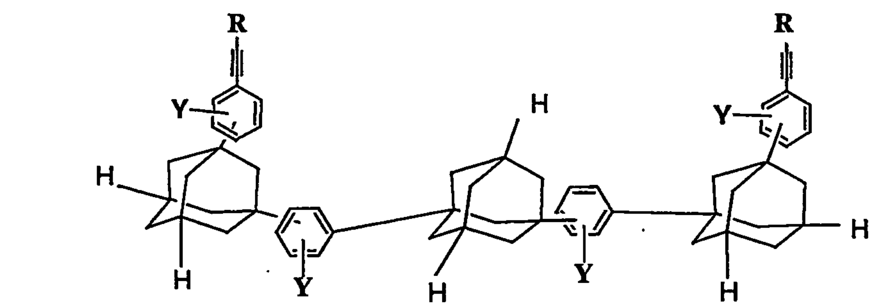 |
| 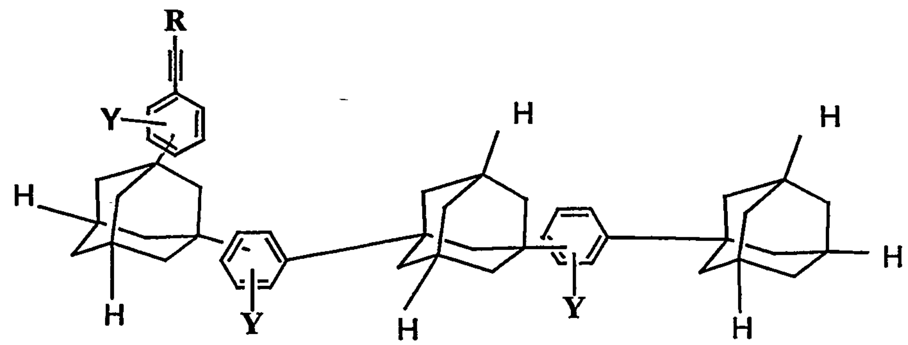 |
| 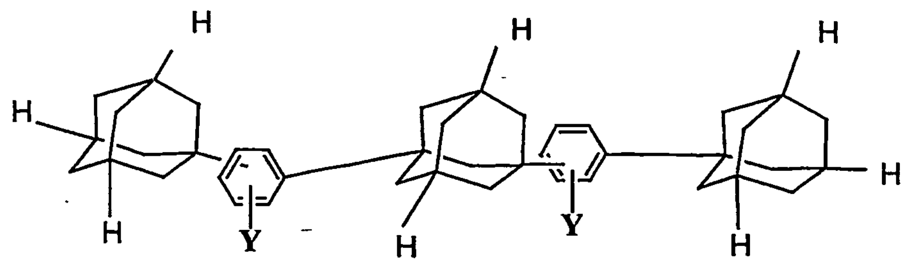 |
| 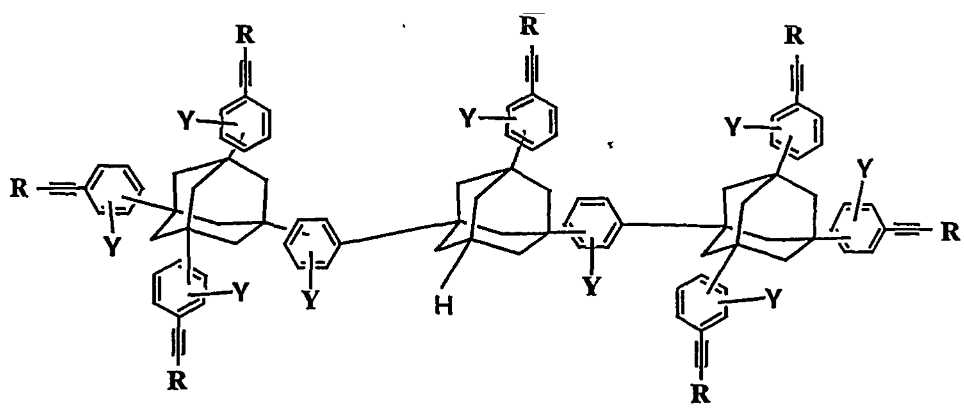 |

(continued)

| |
|---|
| 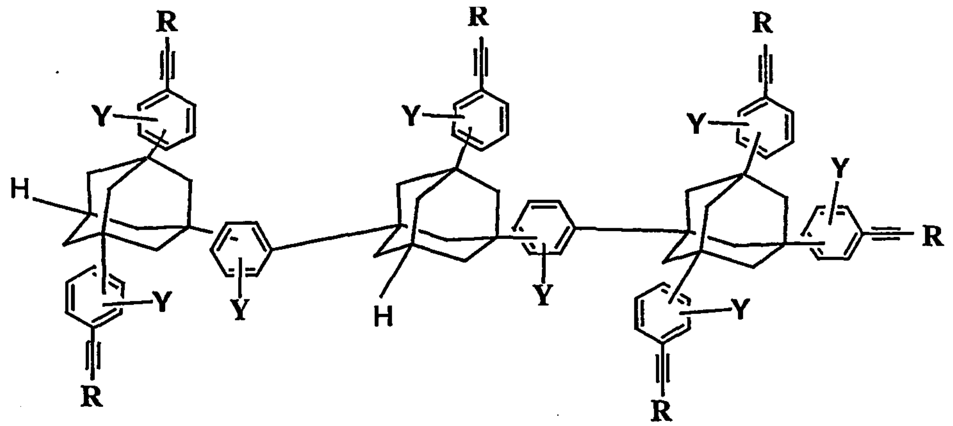 |
| 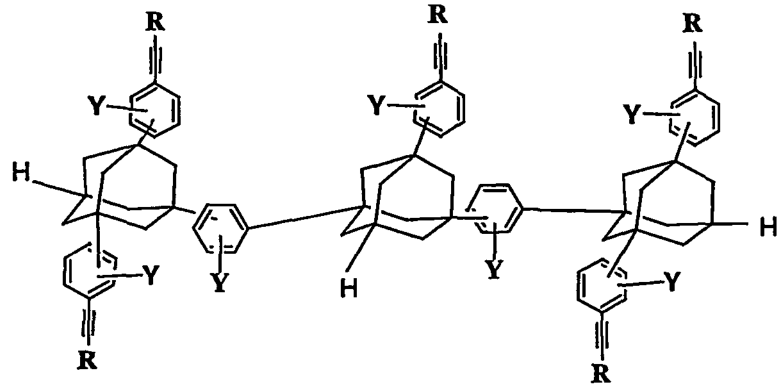 |
| 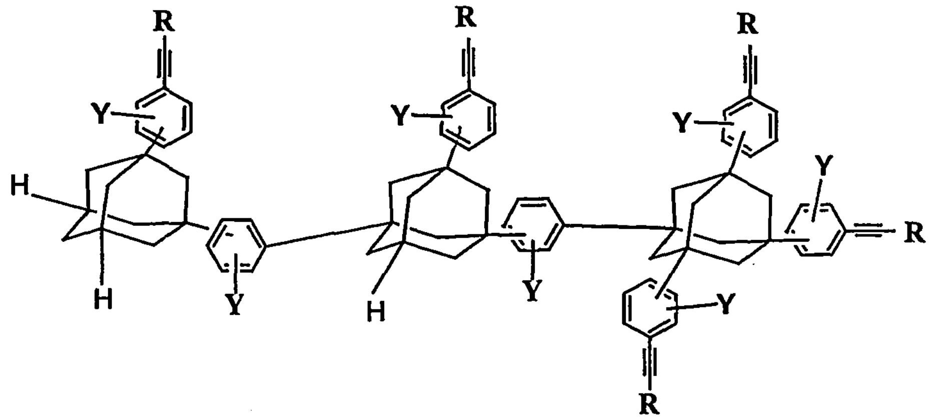 |
| 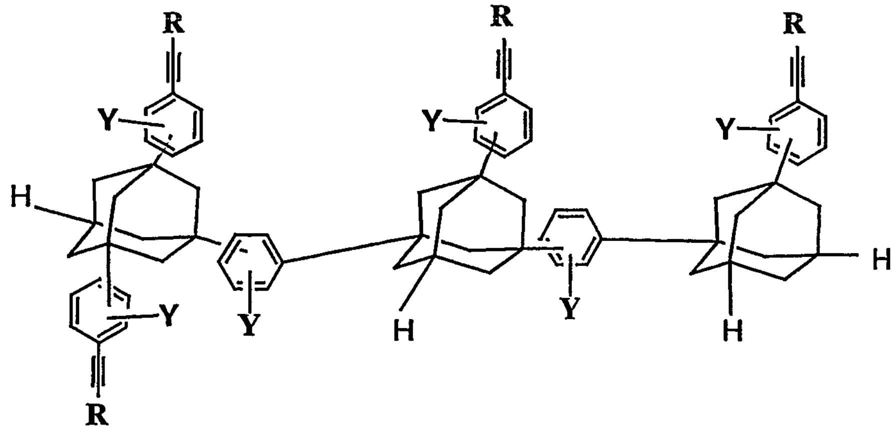 |

(continued)

| |
|---|
| 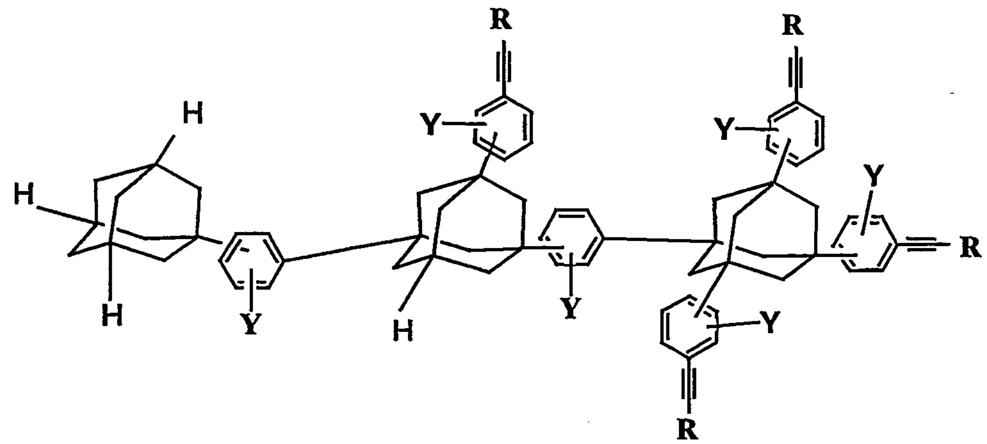 |
| 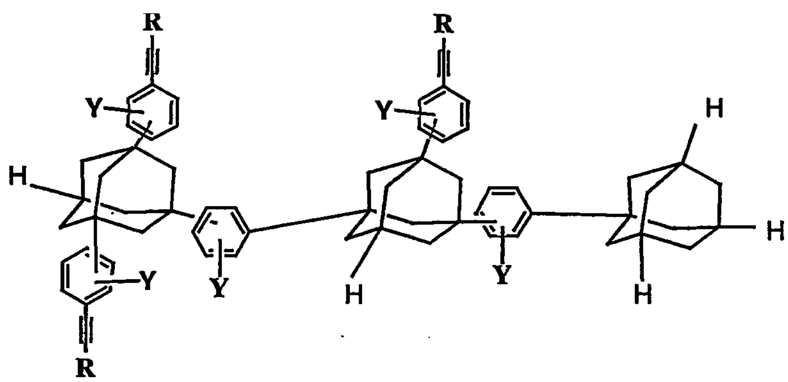 |
| 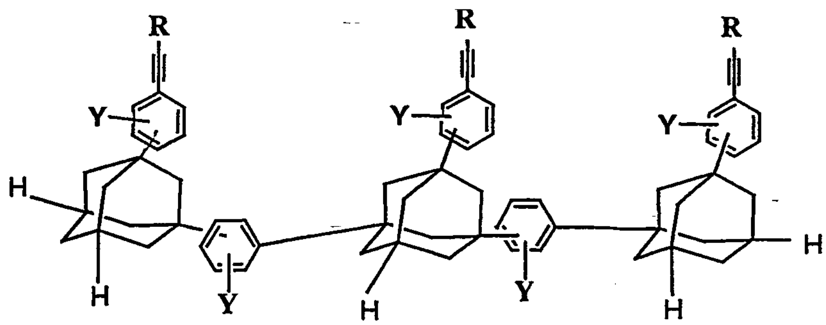 |
| 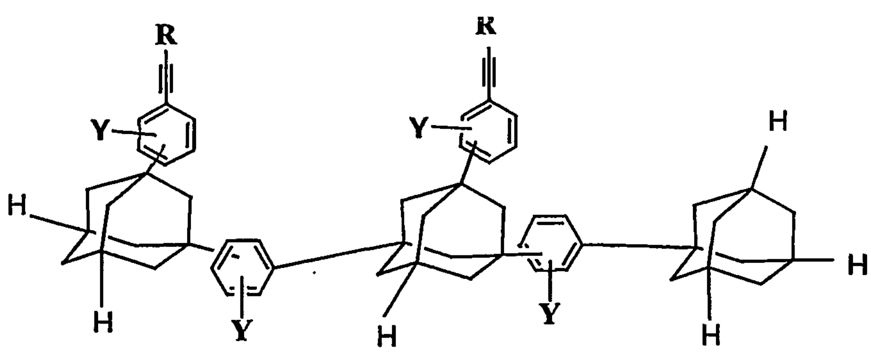 |

(continued)

| |
|---|
| 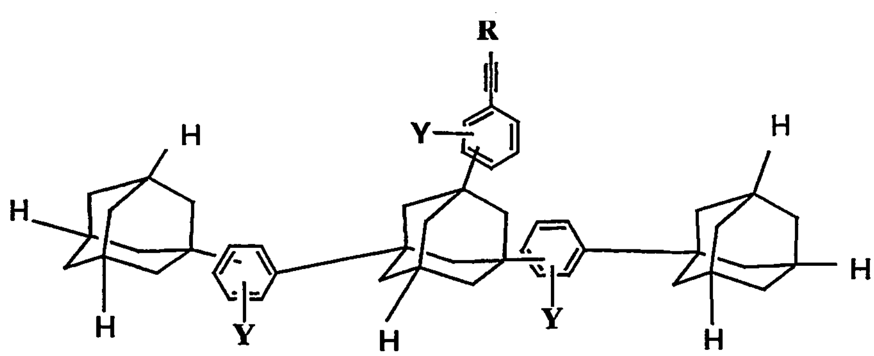 |
| 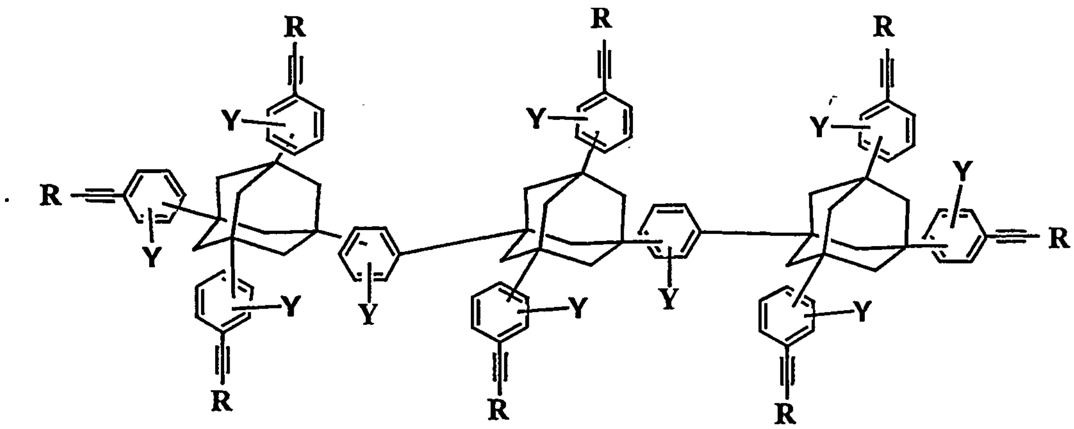 |
| 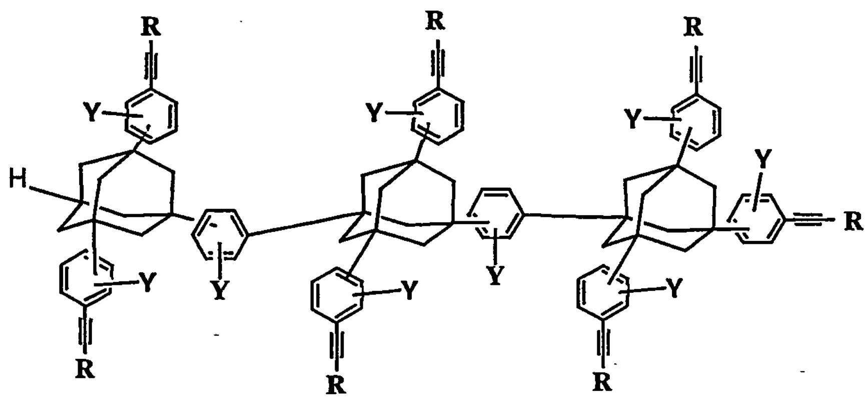 |
| 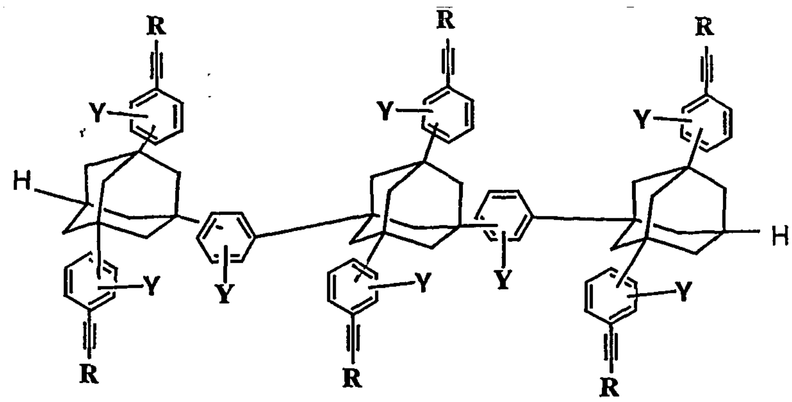 |

(continued)

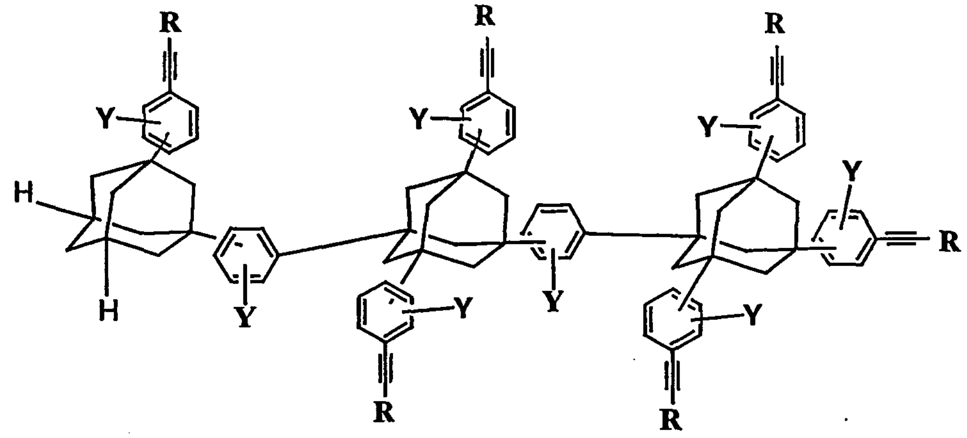

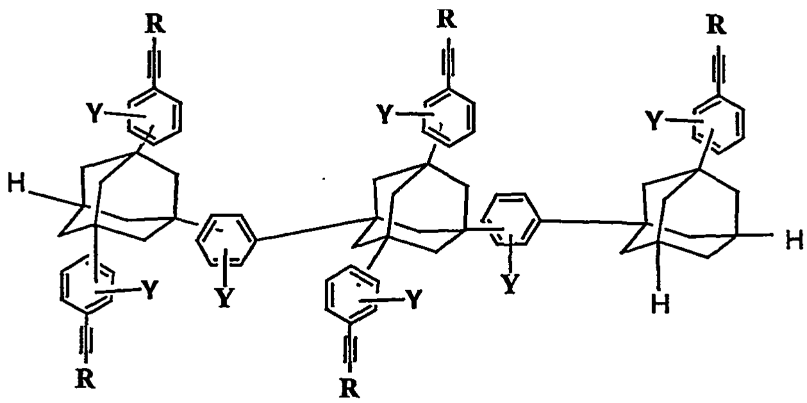

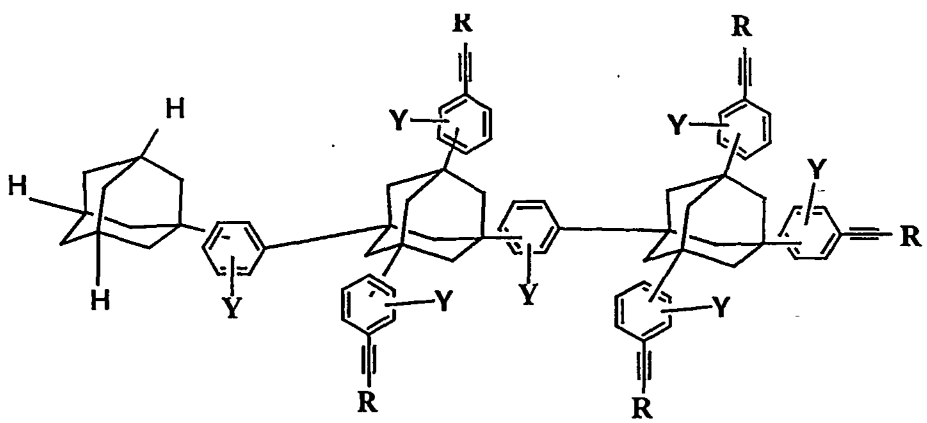

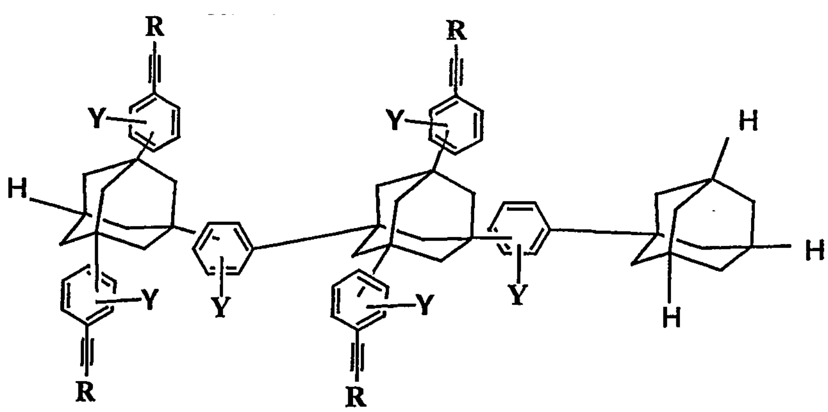

(continued)

| |
|---|
| 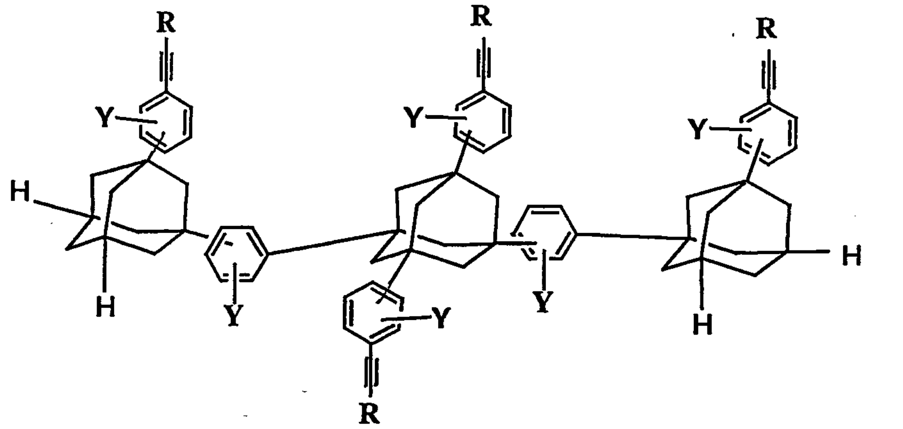 |
| 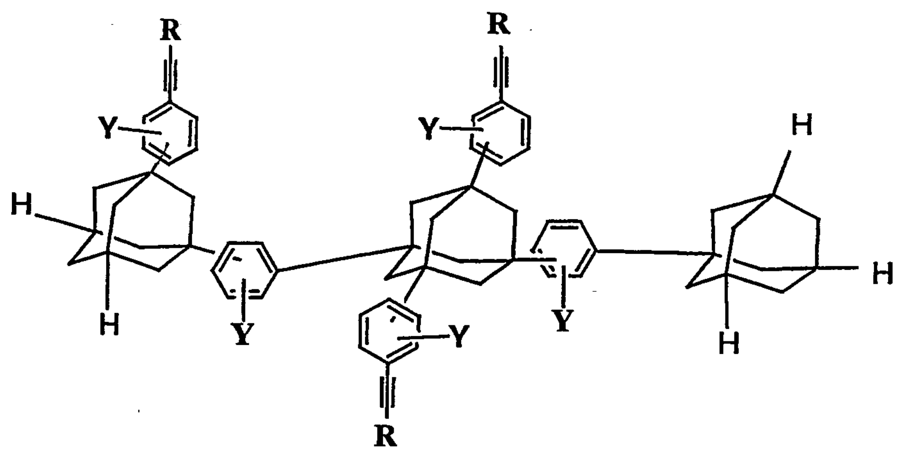 |
| 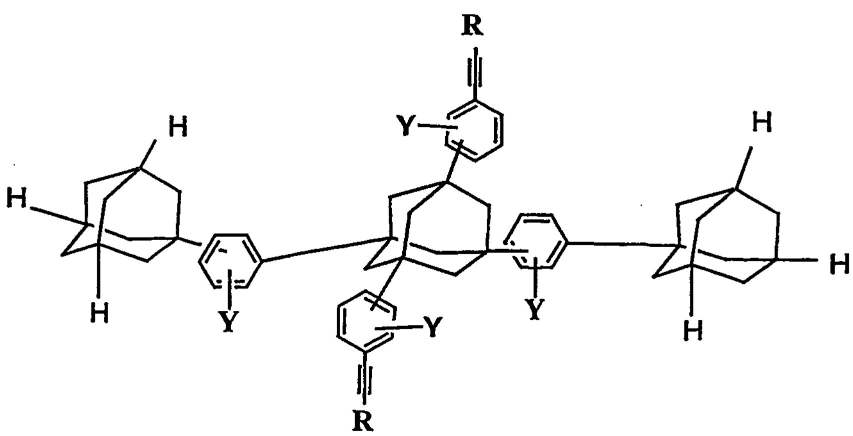 |

Preferably, the present composition comprises at least one oligomer or polymer of Formula VI above where Q, G, h, i, j, and w are as previously defined. When all of h, i, and j are zero in Formula VI above, the diamantane dimer is as shown in Formula XIII below

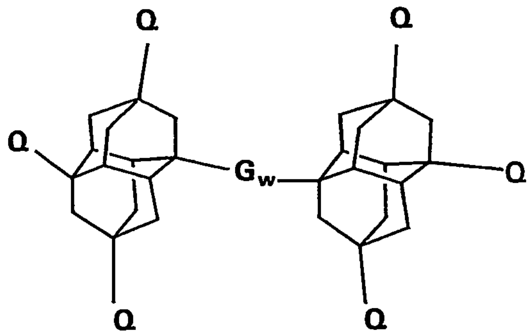

where Q and $G_w$ are as previously defined.

Preferably, the present composition comprises at least one adamantane oligomer or polymer of Formula VIII above where R, Y, h, i, j, and w are as previously defined. Preferably, the present composition comprises at least one diamantane oligomer or polymer of Formula X above where R, Y, h, i, j, and w are as previously defined.

Preferably, the present composition comprises at least one adamantane oligomer or polymer of Formula VIII above where h is 0 or 1, i is 0, and j is 0. This adamantane structure is shown as Formula XIV below.

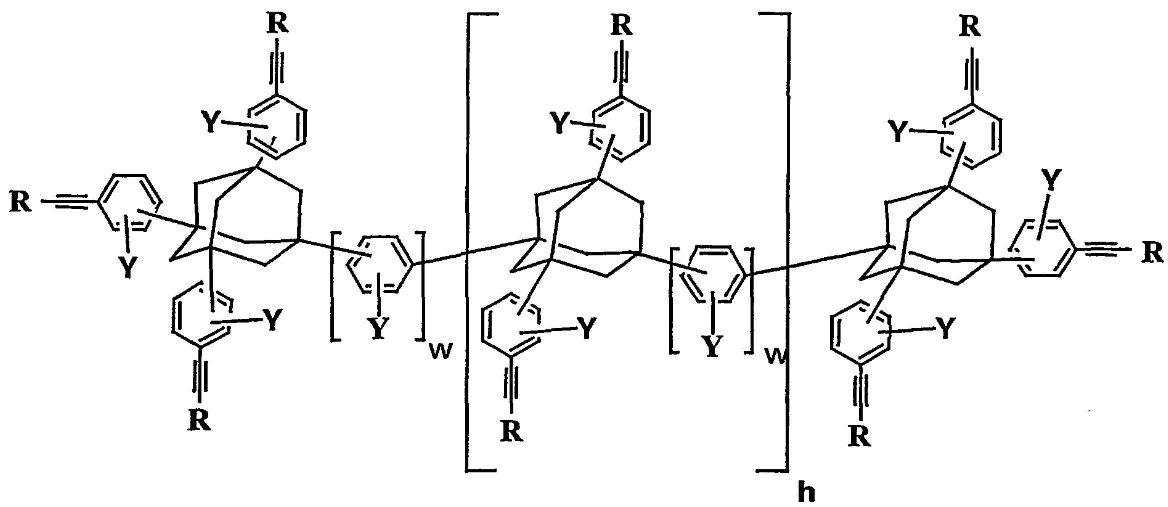

Preferably, the adamantane structure is as shown in the following formula.

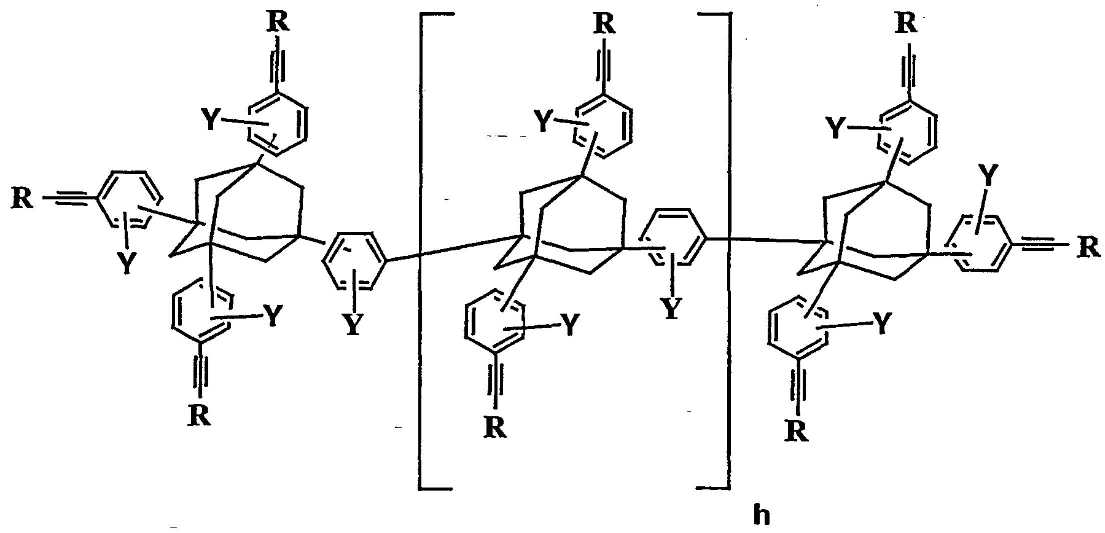

Preferably, the present composition comprises at least one diamantane oligomer or polymer of Formula X above where h is 0 or 1, i is 0, and j is 0. This diamantane structure is shown as Formula XV below.

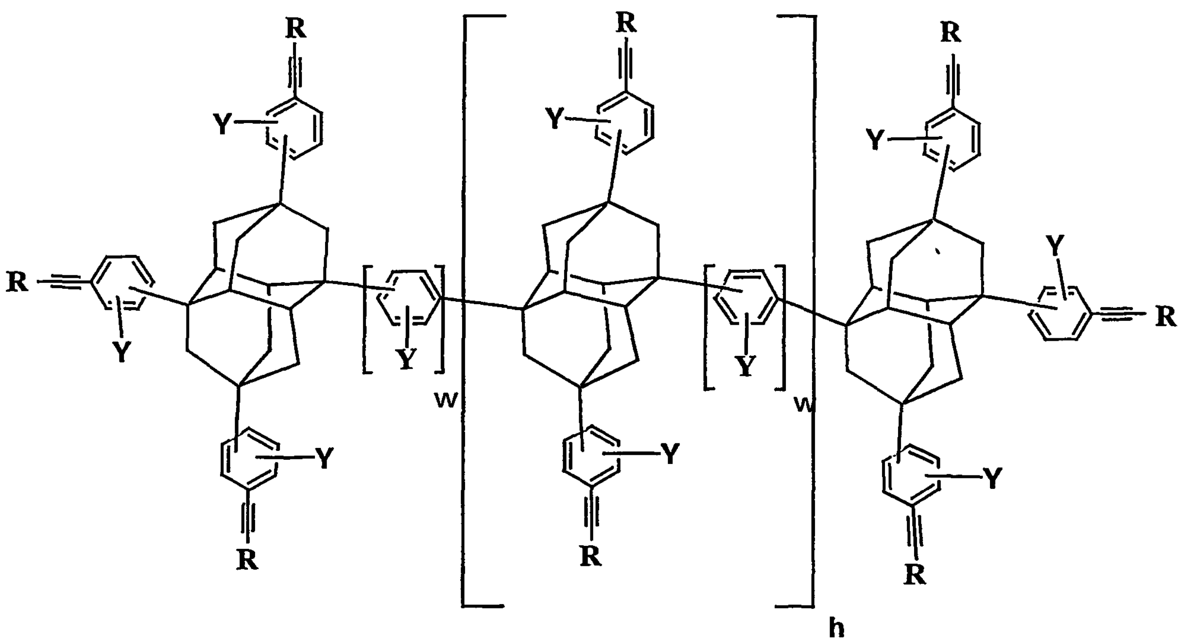

Preferably, the adamantane structure is as shown in the following formula.

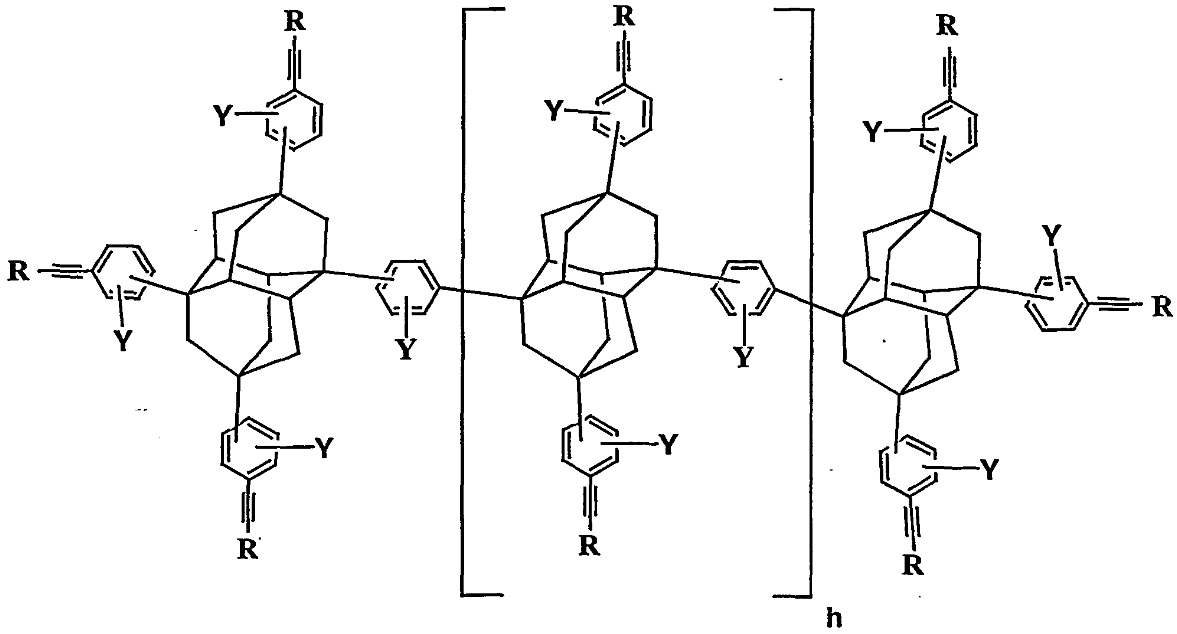

Preferably, the present composition comprises at least one adamantane oligomer or polymer of Formula VIII above where h is 0, i is 0, and j is 0. This adamantane dimer is shown as Formula XVI below.

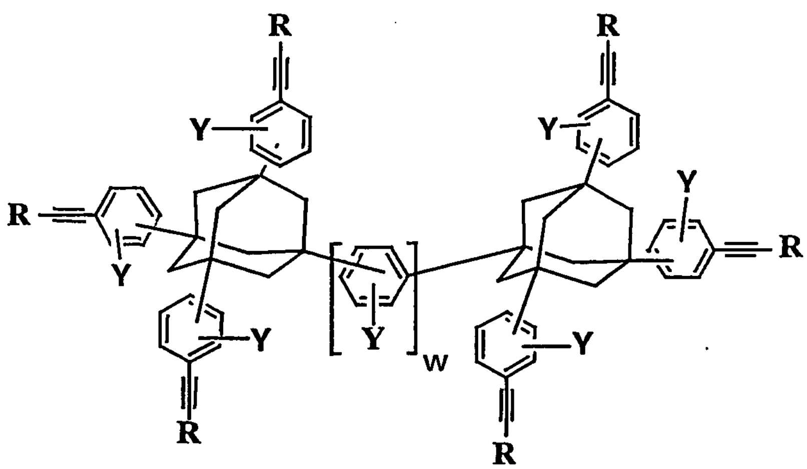

Preferably, the adamantane dimer is as shown in the following formula.

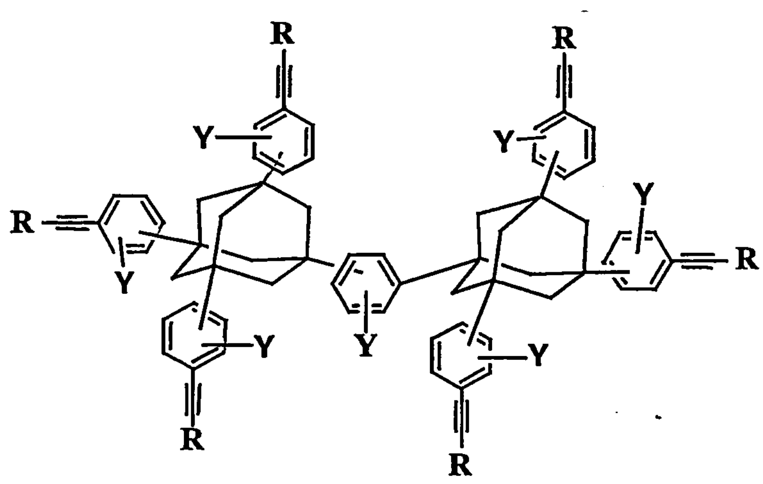

Preferably, the present composition comprises at least one diamantane oligomer or polymer of Formula X above where h is 0, i is 0, and j is 0. This diamantane dimer is shown as Formula XVII below.

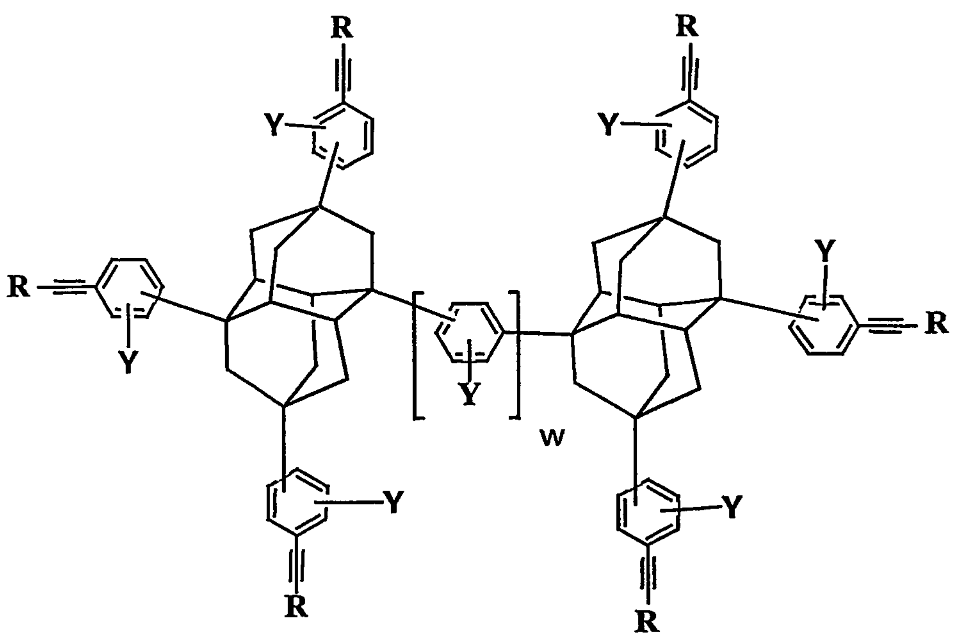

Preferably, the adamantane dimer is as shown in the following formula.

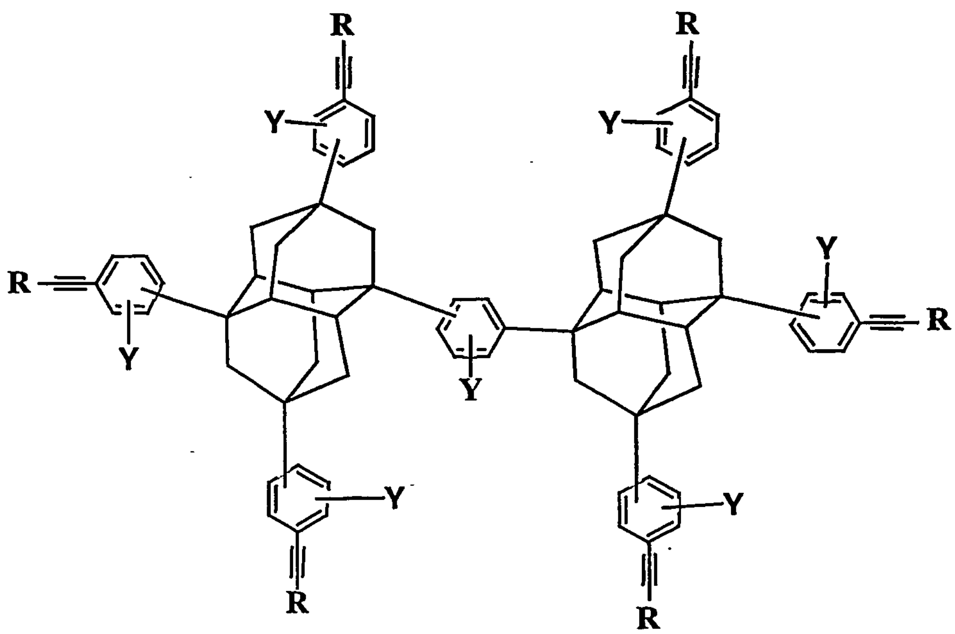

It should be understood that substitutions of the type illustrated in Tables 2, 3, and 4 above may occur for tetramers and higher.

Preferably, the present composition comprises at least one adamantane oligomer or polymer of Formula VIII above where h is 1, i is 0, and j is 0. This adamantane trimer is as shown in Formula XVIII below.

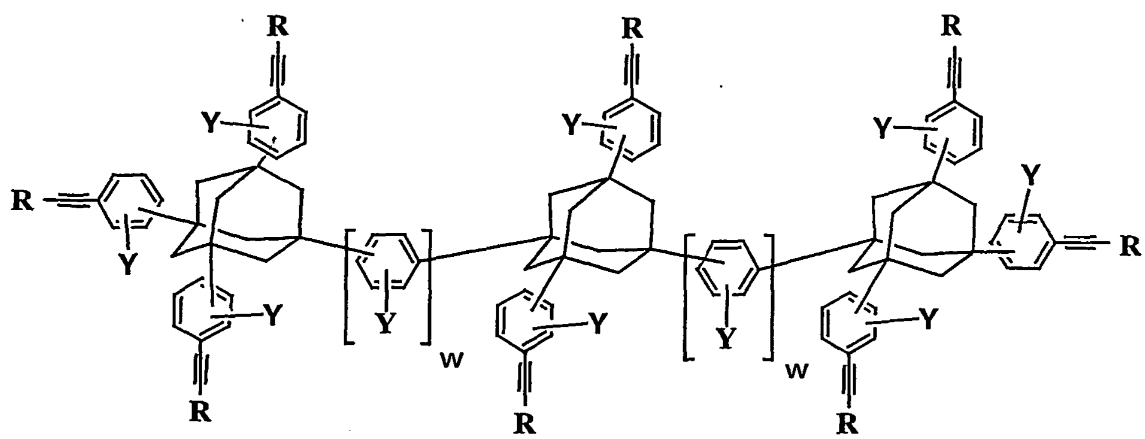

Preferably, the adamantane structure is as shown in the following formula.

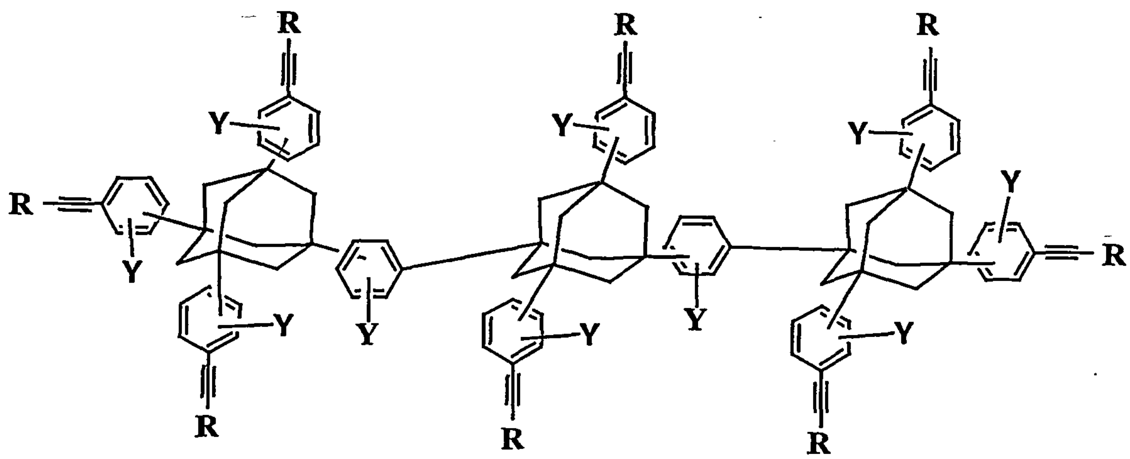

Preferably, the present composition comprises at least one diamantane oligomer or polymer of Formula X above where h is 1, i is 0, and j is 0. This diamantane trimer is as shown in Formula XIX below.

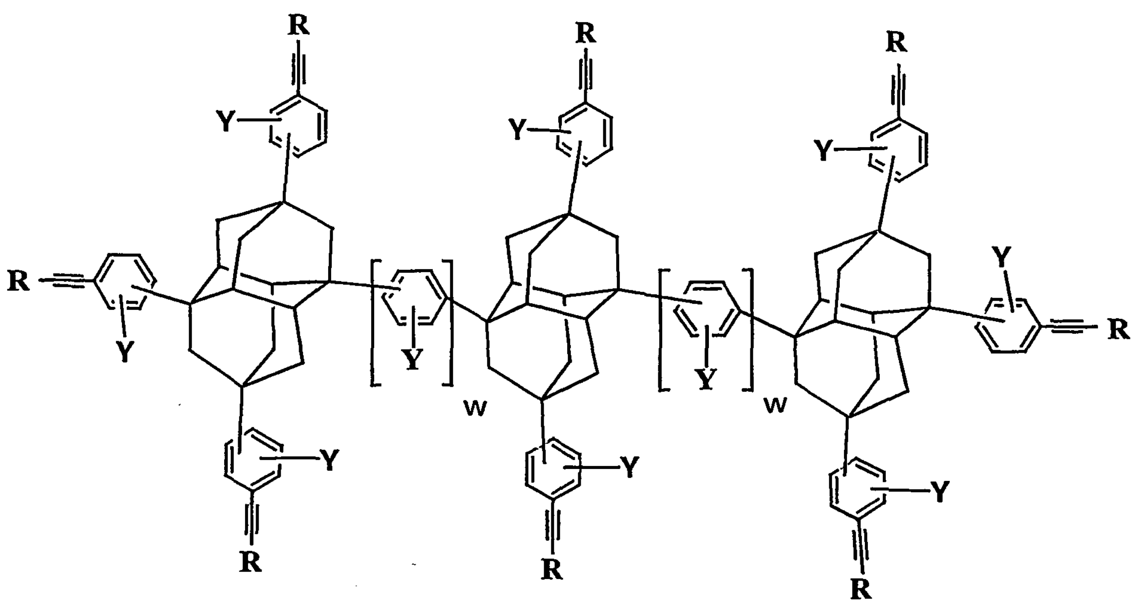

Preferably, the diamantane trimer is as shown in the following formula.

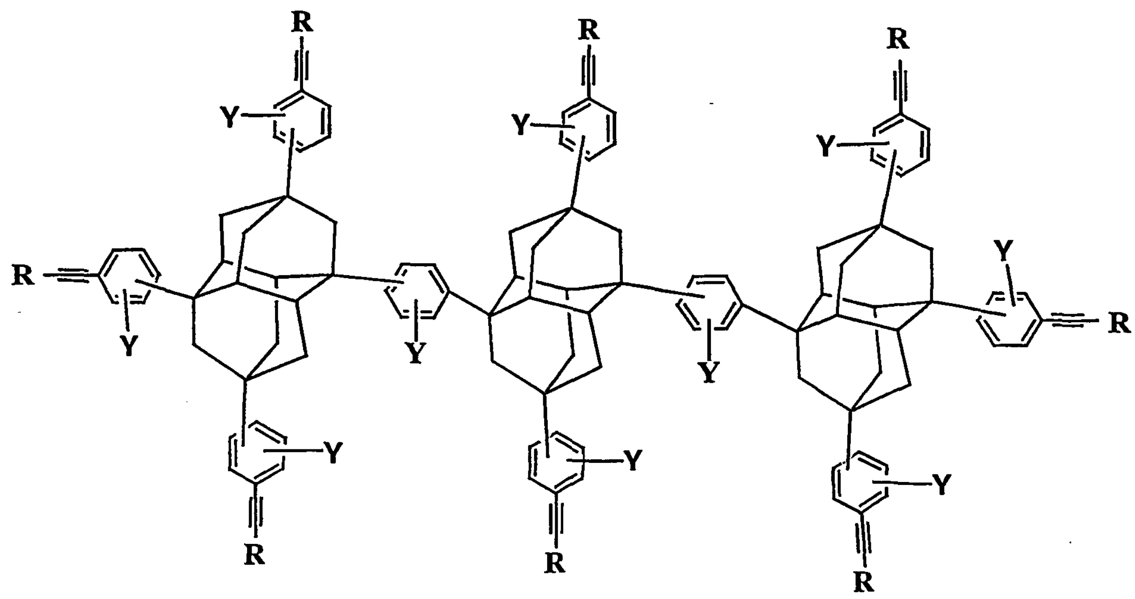

Preferably, the composition comprises at least one adamantane oligomer or polymer of Formula VIII above where h is 2, i is 0, and j is 0 resulting in a linear oligomer or polymer and h is 0, i is 1, and j is 0 resulting in a branched oligomer or polymer. Thus, this composition comprises an adamantane linear tetramer as shown in Formula XX below

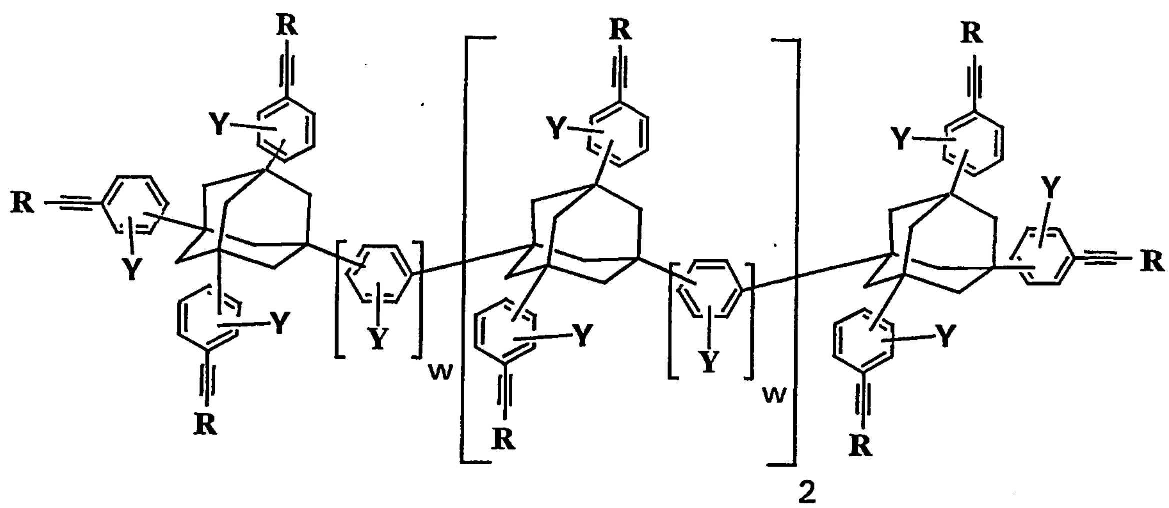

or preferably, the adamantane linear tetramer is as shown in the following formula

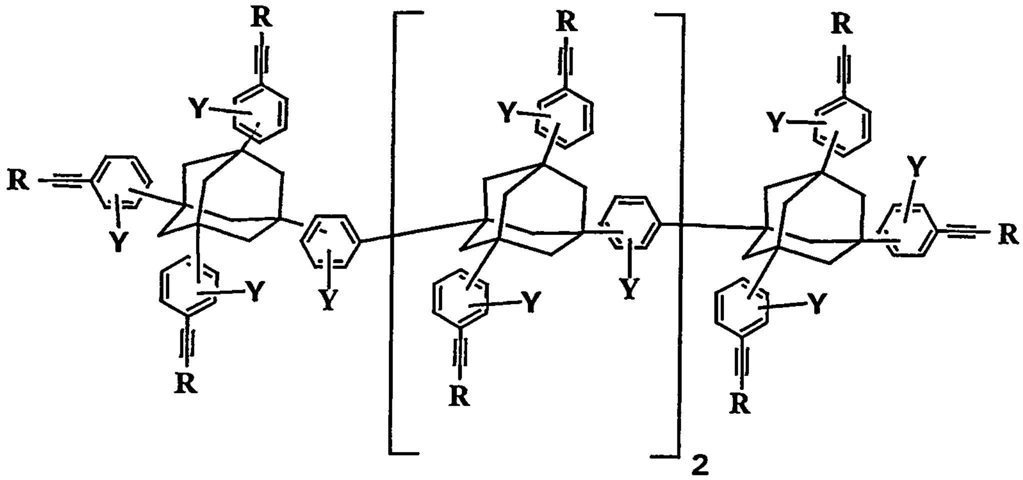

and adamantane branched tetramer as shown Formula XXI below

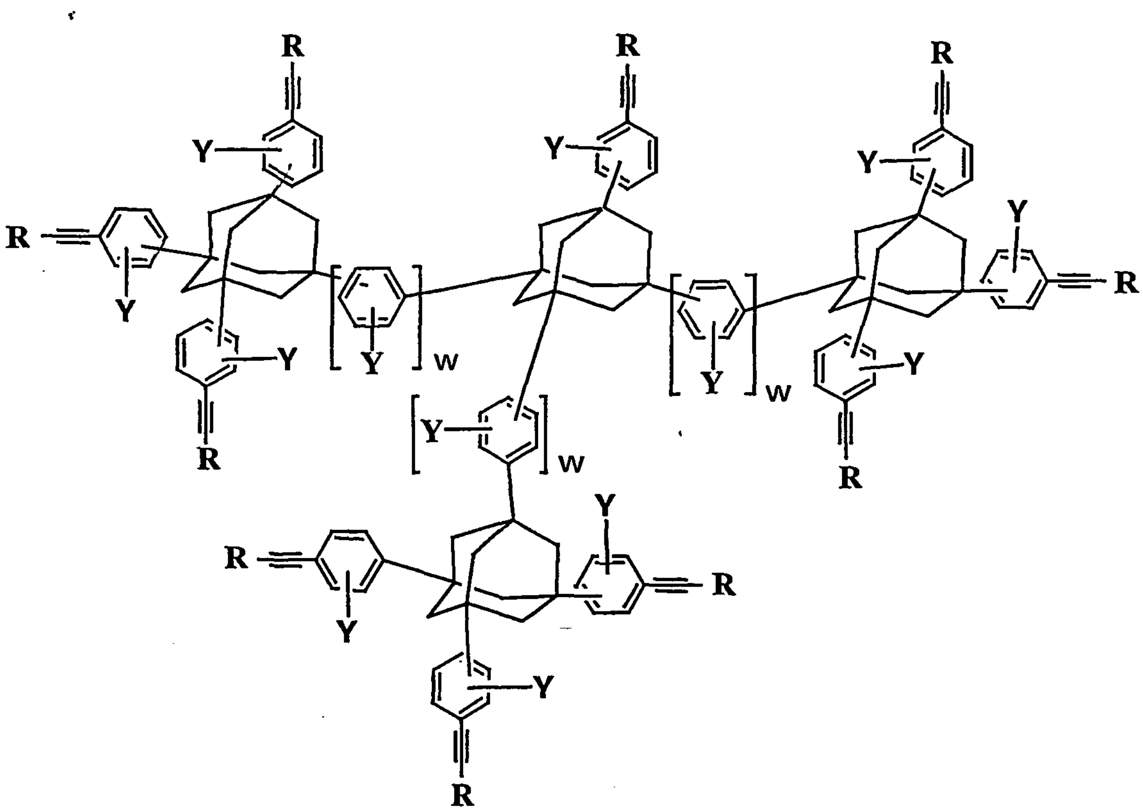

or preferably, the adamantane branched tetramer is as shown in the following formula

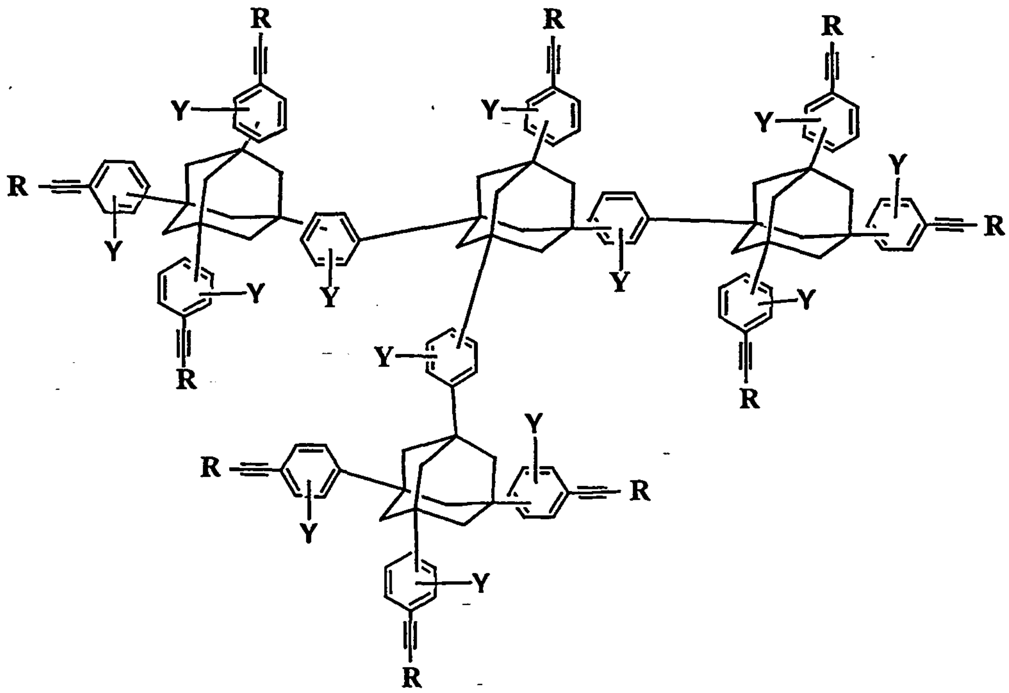

Preferably, the present composition comprises at least one diamantane oligomer or polymer of Formula X above where h is 2, i is O, and j is O resulting in linear oligomer or polymer and h is 0, i is 1, and j is 0 resulting in branched oligomer or polymer. Thus, the present composition comprises diamantane linear tetramer as shown in Formula XXII below

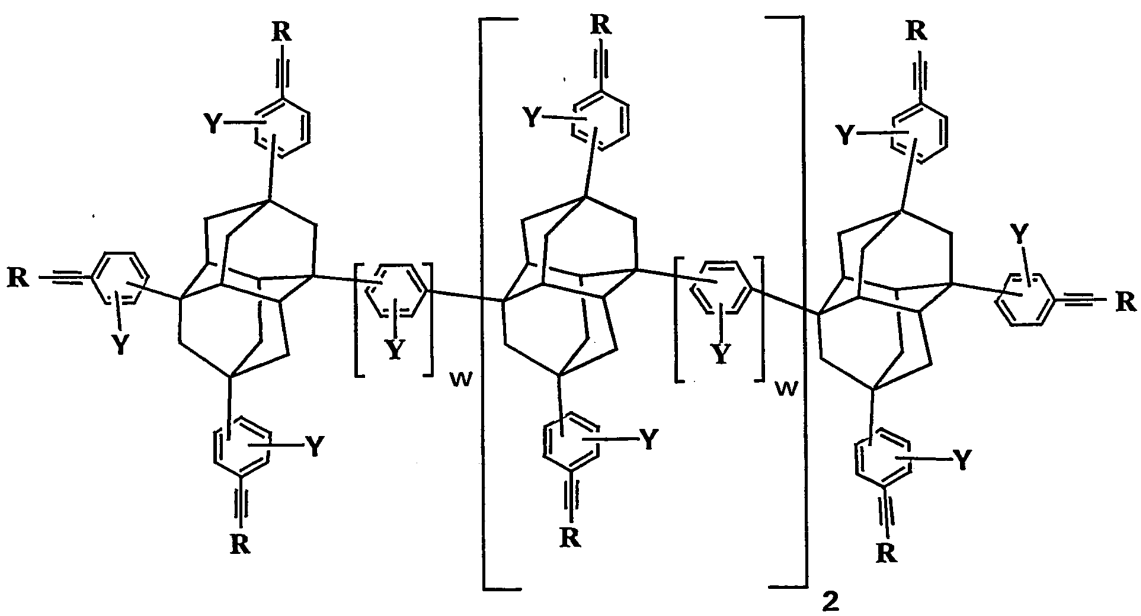

or preferably, the diamantane trimer is as shown in the following formula

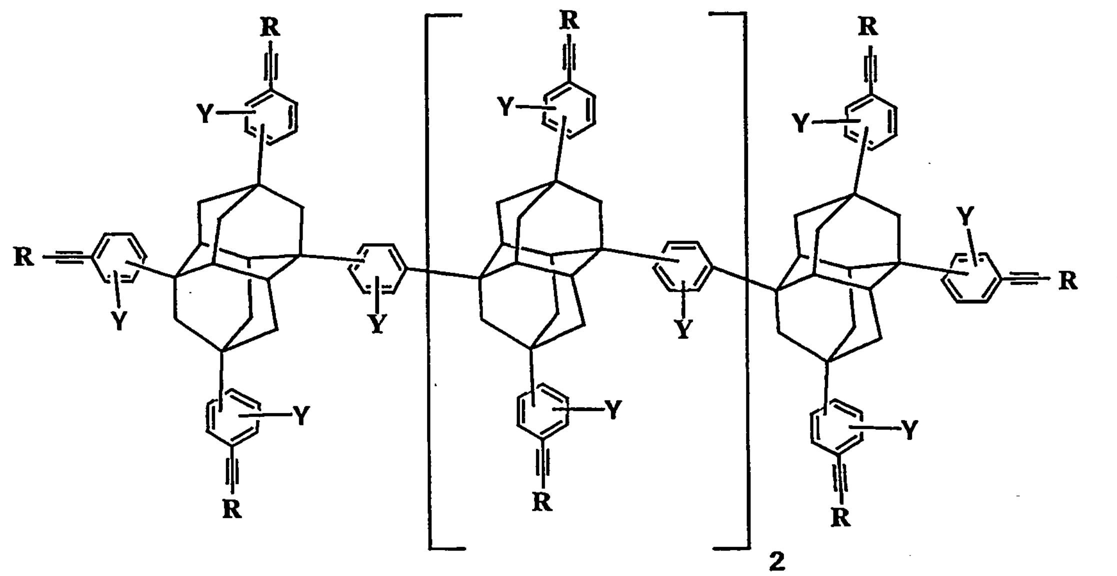

and diamantane branched tetramer as shown Formula XXIII below

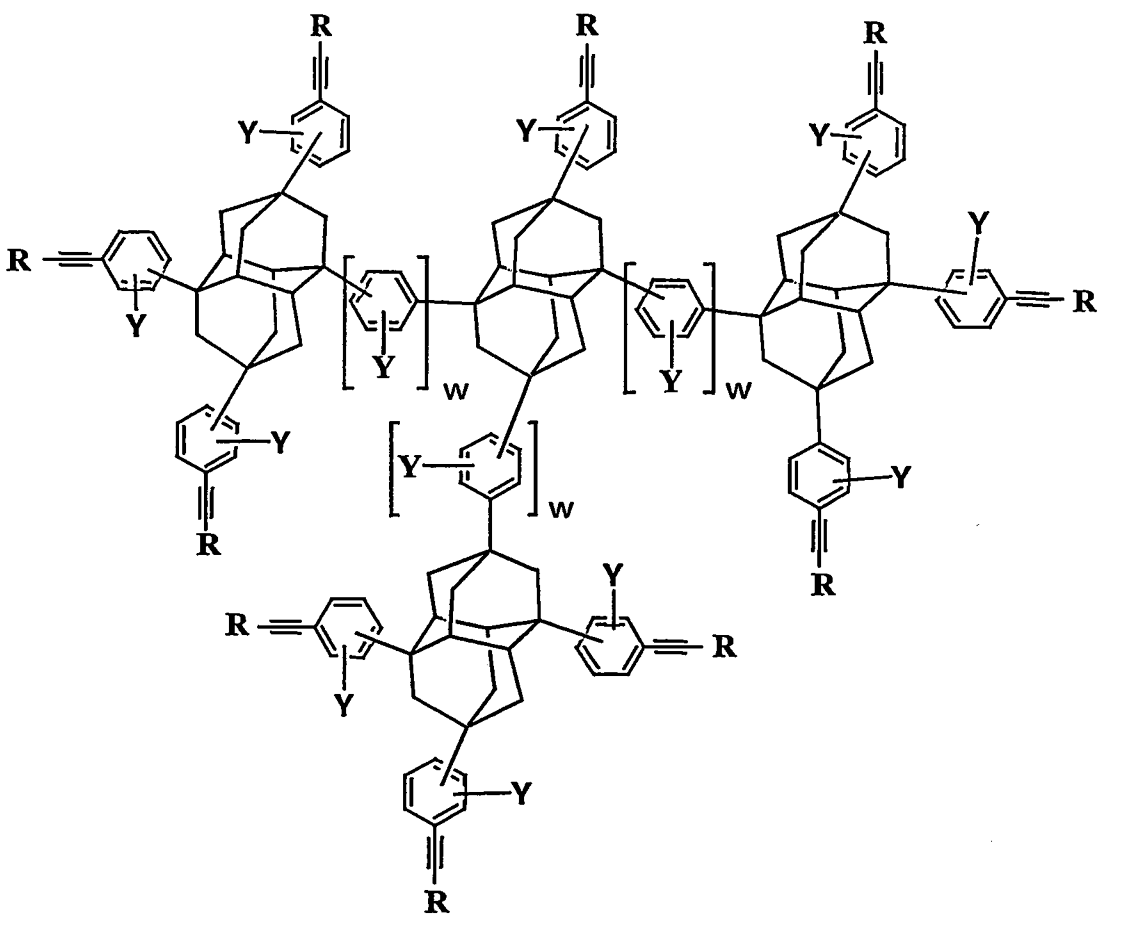

Preferably, the diamantane tetramer is as shown in the following formula.

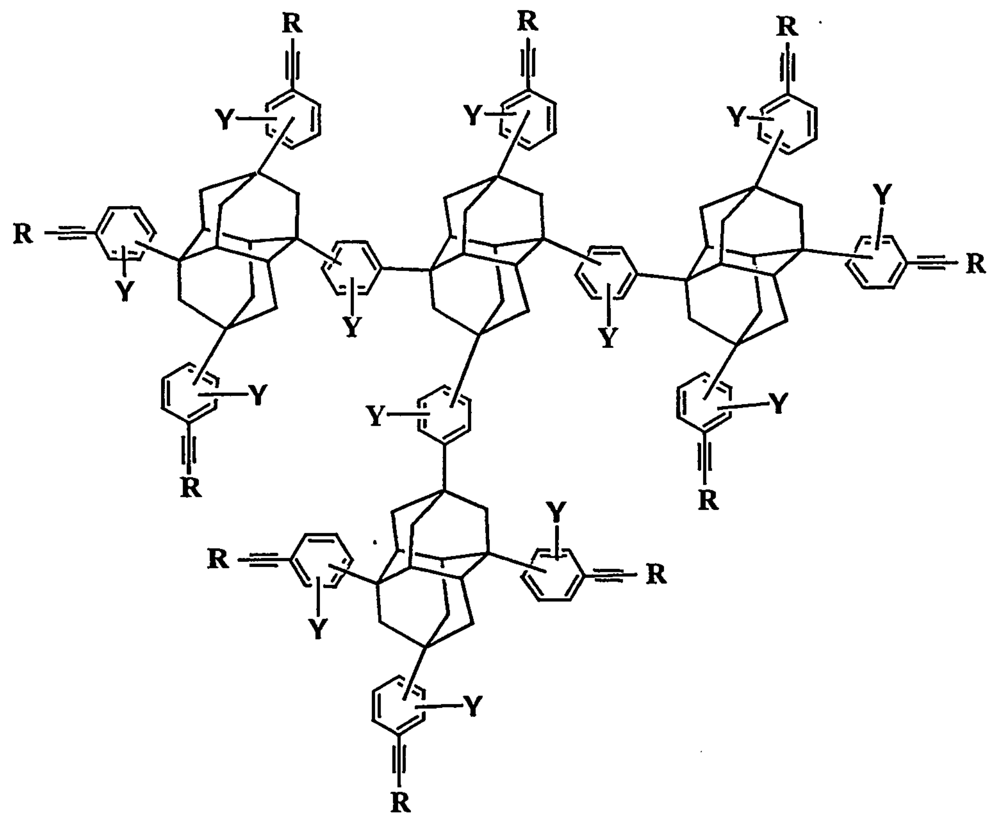

Preferably, the present composition comprises adamantane dimer of Formula XVI above and adamantane trimer of Formula XVIII above. Preferably, the present composition comprises diamantane dimer of Formula XVII above and diamantane trimer of Formula XIX above.

Preferably, the present composition comprises adamantane dimer of Formula XVI above and at least one adamantane oligomer or polymer of Formula VIII above where at least one of h, i, and j is at least 1. Preferably, the present composition comprises diamantane dimer of Formula XVII above and at least one diamantane oligomer or polymer of Formula × above where at least one of h, i, and j is at least 1.

Preferably, the present composition comprises adamantane monomer of Formula VII above and at least one adamantane oligomer or polymer of Formula VIII above where at least one of h, i, and j is at least 1. Preferably, the present composition comprises diamantane monomer of Formula IX above and at least one diamantane oligomer or polymer of Formula X above where at least one of h, i, and j is at least 1.

Preferably, the present composition comprises adamantane monomer of Formula III above and adamantane dimer of Formula XVI above. Preferably, the present composition comprises diamantane monomer of Formula V above and diamantane dimer of Formula XVII above.

Preferably, the present composition comprises adamantane monomer of Formula III above and adamantane trimer of Formula XVIII above. Preferably, the present composition comprises diamantane monomer of Formula V above and diamantane trimer of Formula XIX above.

Preferably, the present composition comprises adamantane monomer of Formula VII above, adamantane dimer of Formula XVI above, and at least one adamantane oligomer or polymer of Formula VIII above where at least one of h, i, and j is at least 1. Preferably, the present composition comprises diamantane monomer of Formula VIII above, diamantane dimer of Formula XVII above, and at least one diamantane oligomer or polymer of Formula X above where at least one of h, i, and j is at least 1.

Preferably, the present composition comprises adamantane monomer of Formula II above, adamantane dimer of Formula XVI above, adamantane trimer of Formula XVIII above, and at least one adamantane oligomer or polymer of Formula VIII above where at least one of h, i, and j is at least 1. Preferably, the present composition comprises diamantane monomer of Formula IX above, diamantane dimer of Formula XVII above, diamantane trimer of Formula XIX above, and at least one diamantane oligomer or polymer of Formula X above where at least one of h, i, and j is at least 1.

Brief Description of the Drawings

Figure 1 illustrates a monomer preparation method disclosed in our pending patent application PCT/US01/22204 filed October 17, 2001.

Figure 2 discusses the Reichert prior art monomer preparation method.

Figures 3A through 3F illustrate a process of the present invention for making adamantane based compositions.

Figure 4 illustrates a comparative process for making diamantane based compositions.

Figures 5A through 5F illustrate a process of the present invention for making diamantane based compositions.

Detailed Description of the Invention

The phrase "bridgehead carbon" as used herein refers to any cage structure carbon bound to three other carbons. Thus, for example, adamantane has four bridgehead carbons while diamantane has eight bridgehead carbons.

The phrase "low dielectric constant polymer" as used herein refers to an organic, organometallic, or inorganic polymer with a dielectric constant of approximately 3.0 or lower. The low dielectric material is typically manufactured in the form of a thin layer having a thickness from 100 to 25,000 Angstroms but also may be used as thick films, blocks, cylinders, spheres etc.

The term "layer" as used herein includes film and coating.

Surprisingly, it was found that mixtures of the adamantane monomer (Formula I or III or VII above) or diamantane monomer (Formula I or V or IX above) and of the oligomer or polymer thereof linked via unsubstituted or substituted aryl units (adamantane in Formula II or IV or VIII above, diamantane in Formula II or VI or IX above) are suitable, because of their outstanding dielectric properties, as insulation material in microelectronic components (e.g. microchips), and possess improved processing properties due to greater solubility which makes possible the preparation of films and in particular, thicker films by means of spin-on coating techniques.

The present composition according to the invention may contain an adamantane monomer of Formula VII that is a tetrasubstituted adamantane. The present invention also provides compositions containing a diamantane monomer of Formula IX that is a tetrasubstituted diamantane. The preferred monomer is the adamantane monomer of Formula VII. The adamantane framework carries a substituted aryl radical in each of positions 1, 3, 5, and 7.

The compound with the Formula IX is an oligomer or polymer, linked via unsubstituted and/or substituted aryl units, of the adamantane monomer of Formula VII. The compound with the Formula IX is an oligomer or polymer, linked via unsubstituted and/or substituted aryl units, of the diamantane monomer of Formula IX. Generally, h, i, and j are whole numbers from O to 10, preferably O to 5, and more preferably O to 2. The simplest adamantane oligomer is thus the dimer (h is 0, i is 0, and j is 0 in Formula IX) as shown in Formula XVI above, in which two adamantane frameworks are linked via an unsubstituted or substituted aryl unit. The simplest diamantane oligomer is thus the dimer (h is O, i is O, and j is O in Formula X) as shown in Formula XVII above, in which two diamantane frameworks are linked via an unsubstituted or substituted aryl unit.

The individual radicals R of the substituted ethynyl radical on the phenyl ring attached to the adamantane or diamantane ring of the type RC=C- are in each case the same or different in Formulae VII, VIII, IX, X, XI, XII, XIII, XIV, XV, XVI, XVII, XVIII, XIX, and XX. R is selected from hydrogen, halogen, alkyl, aryl, substituted aryl, heteroaryl, aryl ether, alkenyl, alkynyl, alkoxyl, hydroxyalkyl, hydroxyaryl, hydroxyalkenyl, hydroxyalkynyl, hydroxyl, or carboxyl. Each R may be unbranched or branched and unsubstituted or substituted and said substituents may be unbranched or branched. It is preferred that the radicals alkyl, alkenyl, alkynyl, alkoxyl, hydroxyalkyl, hydroxyalkenyl, and hydroxyalkynyl contain from about 2 to about 10 carbon atoms and the radicals aryl, aryl ether, and hydroxyaryl contain from about 6 to about 18 carbon atoms. If R stands for aryl, R is preferably phenyl. Preferably, at least two of the RC≡C groups on the phenyl groups are two different isomers. Examples of at least two different isomers include *meta-, para-, and ortho*-isomers. Preferably, the at least two different isomers are *meta*- and *para*- isomers. In the preferred monomer, 1,3,5,7-tetrakis[3'/4'-phenylethynyl)phenyl]adamantane (shown in Figure 3D), five isomers form: (1) *para-, para-, para-, para-;* (2) *para-, para-, para-, meta-;* (3) *para-, para-, meta-, meta-;* (4) *para-, meta-, meta-, meta-;* and (5) *meta-, meta-, meta-, meta-.*

Each Y of the phenyl rings in the Formulae VII, VIII, IX, X, XI, XII, XIII, XIV, XV, XVI, XVII, XVIII, XIX, and XX is in each case the same or different and selected from hydrogen, alkyl, aryl, substituted aryl, halogen, or RC≡C-. When Y is aryl, examples of aryl groups include phenyl or biphenyl. Y is selected from preferably hydrogen, phenyl, and biphenyl

and more preferably hydrogen. Preferably, at least one of the phenyl groups between two bridgehead carbons of adamantane or diamantane exists as at least two different isomers. Examples of at least two different isomers include *meta-, para-,* and *ortho-* isomers. Preferably, the at least two isomers are *meta-* and *para-* isomers. In the most preferred dimer 1,3/4-bis{1',3',5'-tris[3"/4"-(phenylethynyl)phenyl]adamant-7'-yl}benzene (shown in Figure 3F), 14 isomers form as follows. Preferably, the phenyl group located between the two bridgehead carbons of the adamantane exists as *meta-* and *para-*isomers. For each of the two preceding isomers, seven isomers of the RC≡C groups on the phenyl groups exist as follows: (1) *para-, para-, para-, para-, para-, para-;* (2) *para-, para-, para-, para-, para-, meta-;* (3) *para-, para-, para-, para-, meta-, meta-;* (4) *para-, para-, para-, meta-, meta-, meta-;* (5) *para-, para-, meta-, meta-, meta-, meta-;* (6) *para-, meta-, meta-, meta-, meta-, meta-;* and (7) *meta-, meta-, meta-, meta-, meta-, meta-.*

A preferred composition comprises adamantane monomer of Formula VII and at least adamantane dimer of Formula XVI and adamantane trimer of Formula XVII.

In addition to the branched adamantane structure of Formula XXI above, it should be understood that Formula VIII above when h is 0, i is 0, and j is 1 represents further branching as shown in Formula XXIV below. It should be understood that branching may occur beyond that of the Formula XXIV structure because further branching of the pending adamantane units of the Formula XXIV structure may also occur.

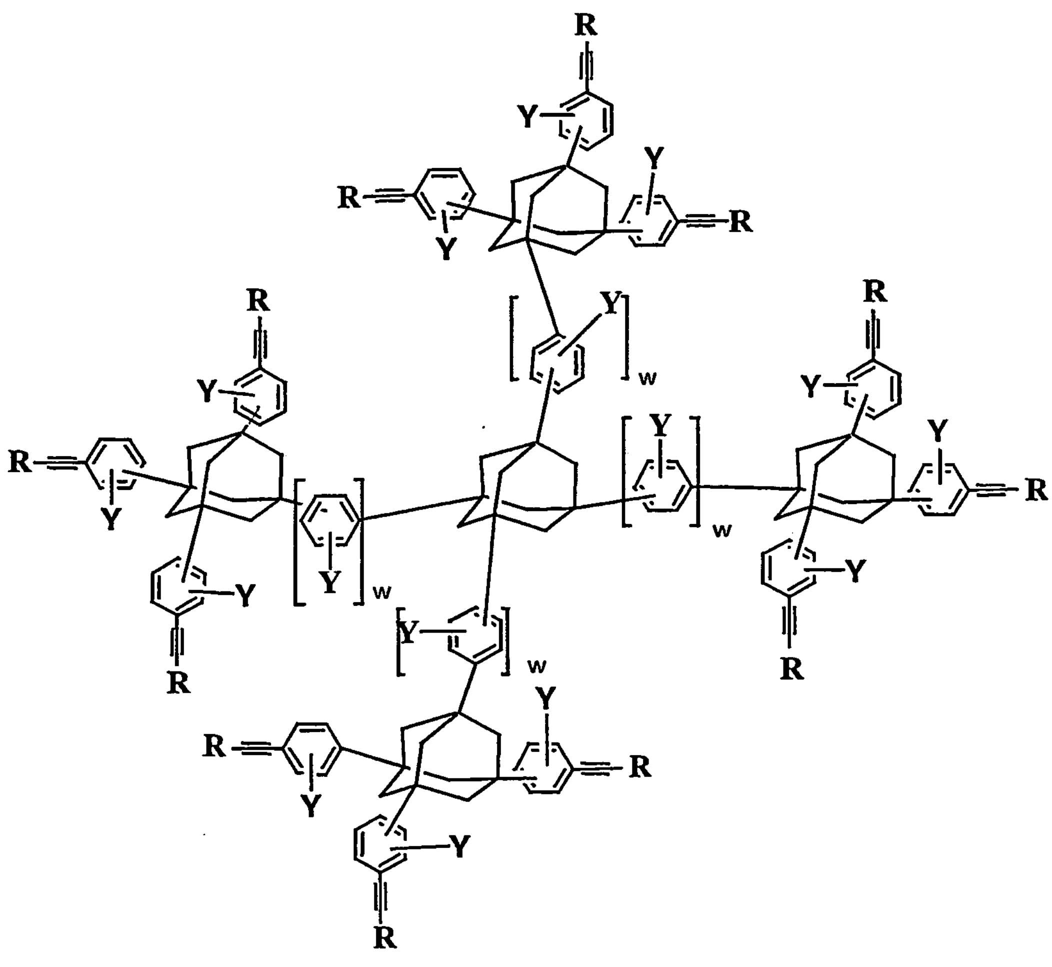

Preferably, the branched adamantane structure is as shown in the following formula.

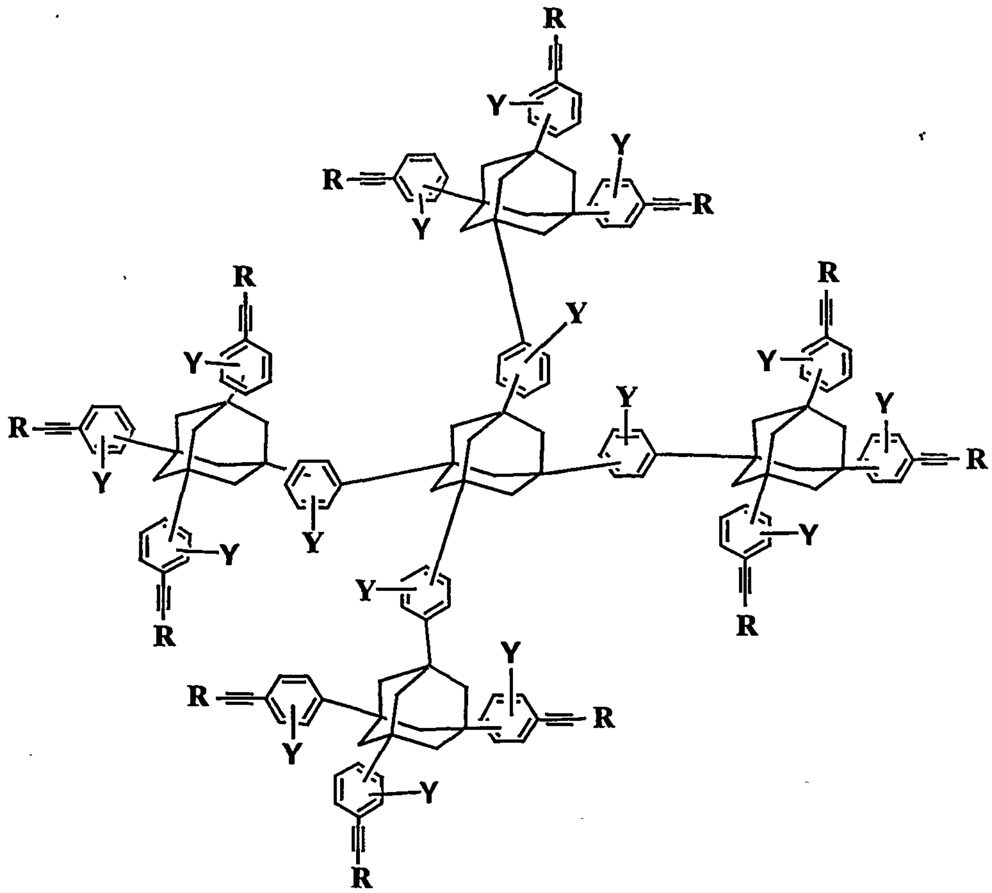

In addition to the branched diamantane structure of Formula XX above, it should be understood that Formula VI above when h is 0, i is 0, and j is 1 represents further branching as shown in Formula XXV below. It should be understood that branching may occur beyond that of the Formula XXV structure because further branching of the pending diamantane units of the Formula XXV structure may also occur.

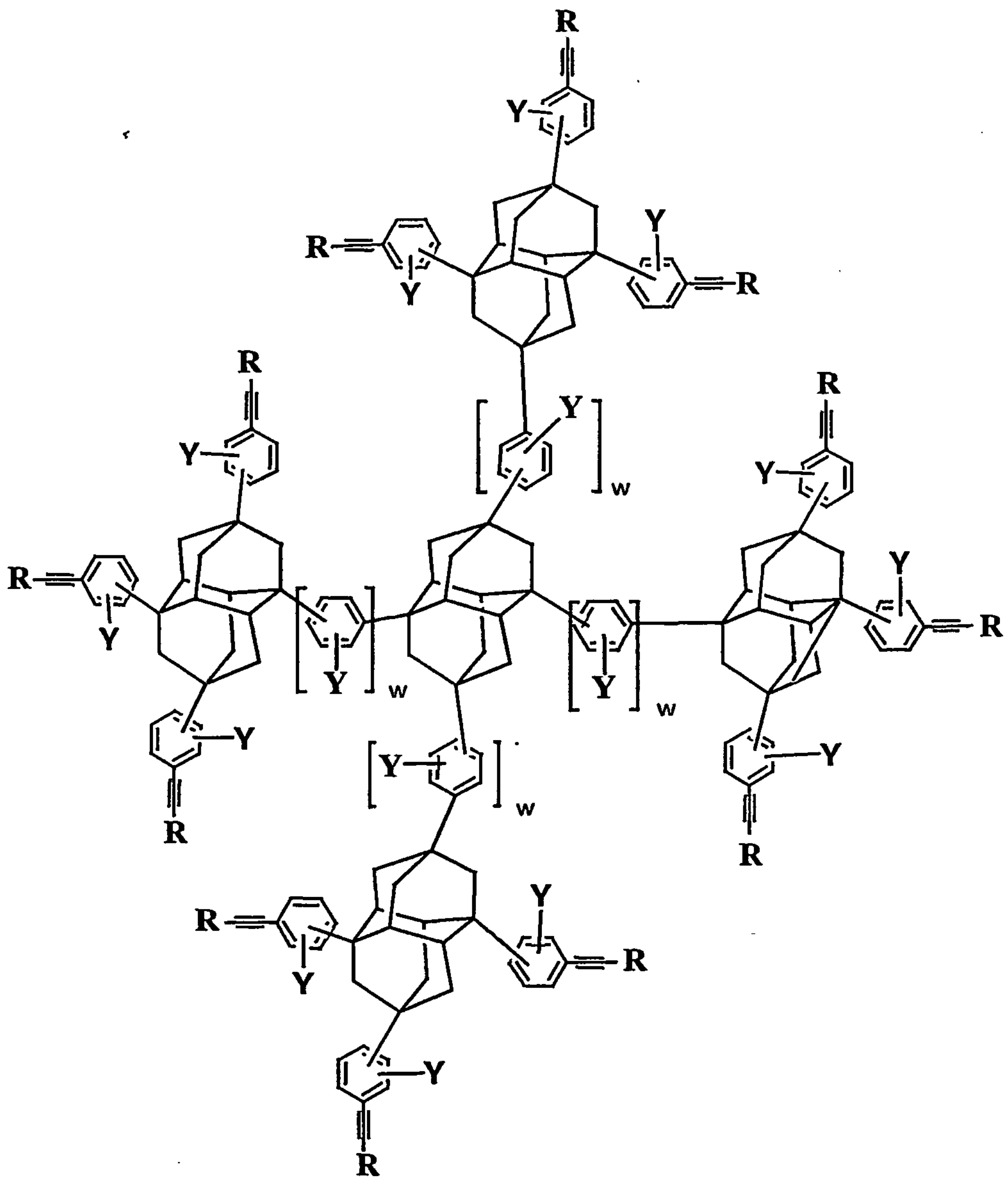

or preferably, the branched diamantane structure is as shown in the following formula

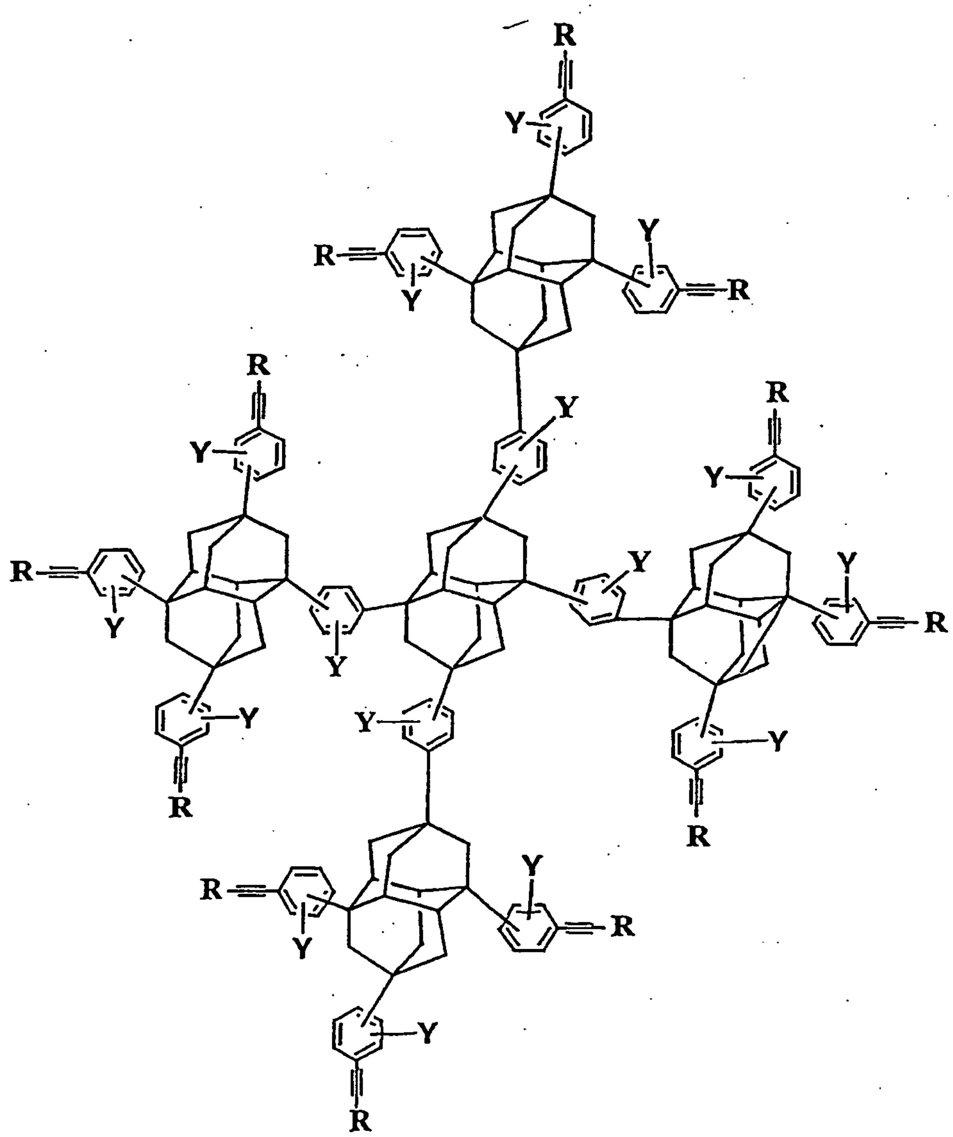

The monomer (a) and oligomer or polymer (b) contents are determined by the gel permeation chromatography techniques set forth below in the, Analytical Test Methods section. The present composition preferably comprises the adamantane or diamantane monomer (a) in a quantity of 30 to 70 area-%, more preferably 40 to 60 area-% and even more preferably 45 to 55 area-% and the oligomer or polymer (b) in a quantity of 70 to 30 area-%, more preferably 60 to 40 area-%, and even more preferably 55 to 45 area-%. Most preferably, the present composition comprises the monomer (a) in a quantity of approximately 50 area-% and the oiigomer or polymer (b) in a quantity of approximately 50 area-%.

The Analytical Test Methods section sets forth two Gel Permeation Chromatography Methods. Both provide similar results. One skilled in the art may elect to use the second method in that it yields additional detail on the dimer and trimer.

In general, the quantity ratio of the adamantane or diamantane monomer (a) to oligomer or polymer (b) can be set in a desired manner, e.g. by altering the molar ratio of the starting components during the preparation of the composition according to the invention, by adjusting reaction conditions, and by altering the ratio of nonsolvent to solvent during precipitation/isolation steps.

The present process for preparing the present composition comprises the following steps.

In step (A), adamantane or diamantane is reacted with halogeno benzene compound of Formula XXVI

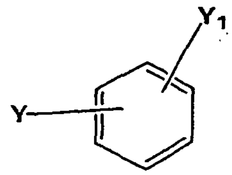

where Y is selected from hydrogen, alkyl, aryl, substituted aryl, or halogen and $Y_1$ is halogen, to form a mixture which if adamantane is used, comprises at least one monomer of Formula III

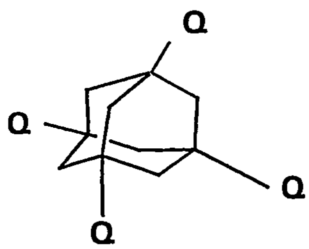

and at least one oligomer or polymer of Formula IV where h is from 0 to 10, i is from 0 to 10, j is from 0 to 10, and w is 0 or 1

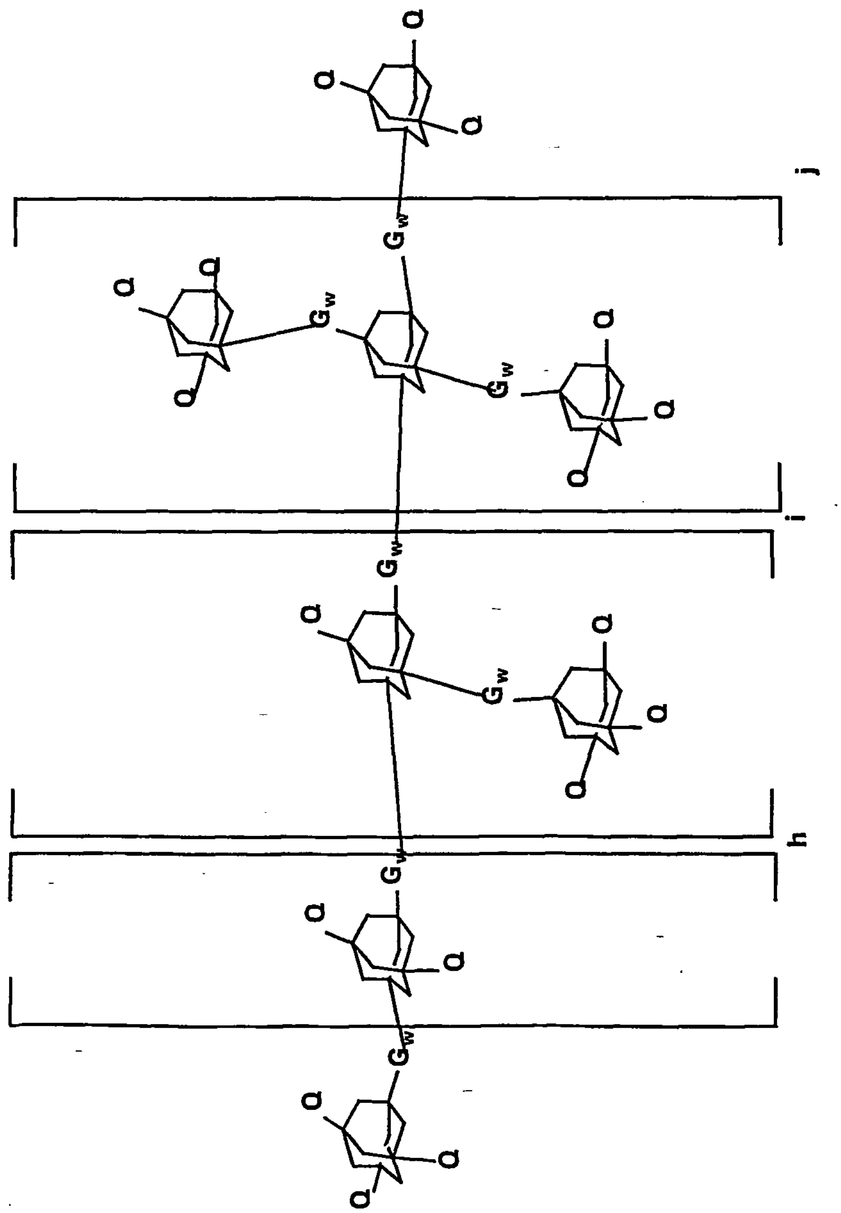

and preferably, the oligomer or polymer is of Formula XXVII

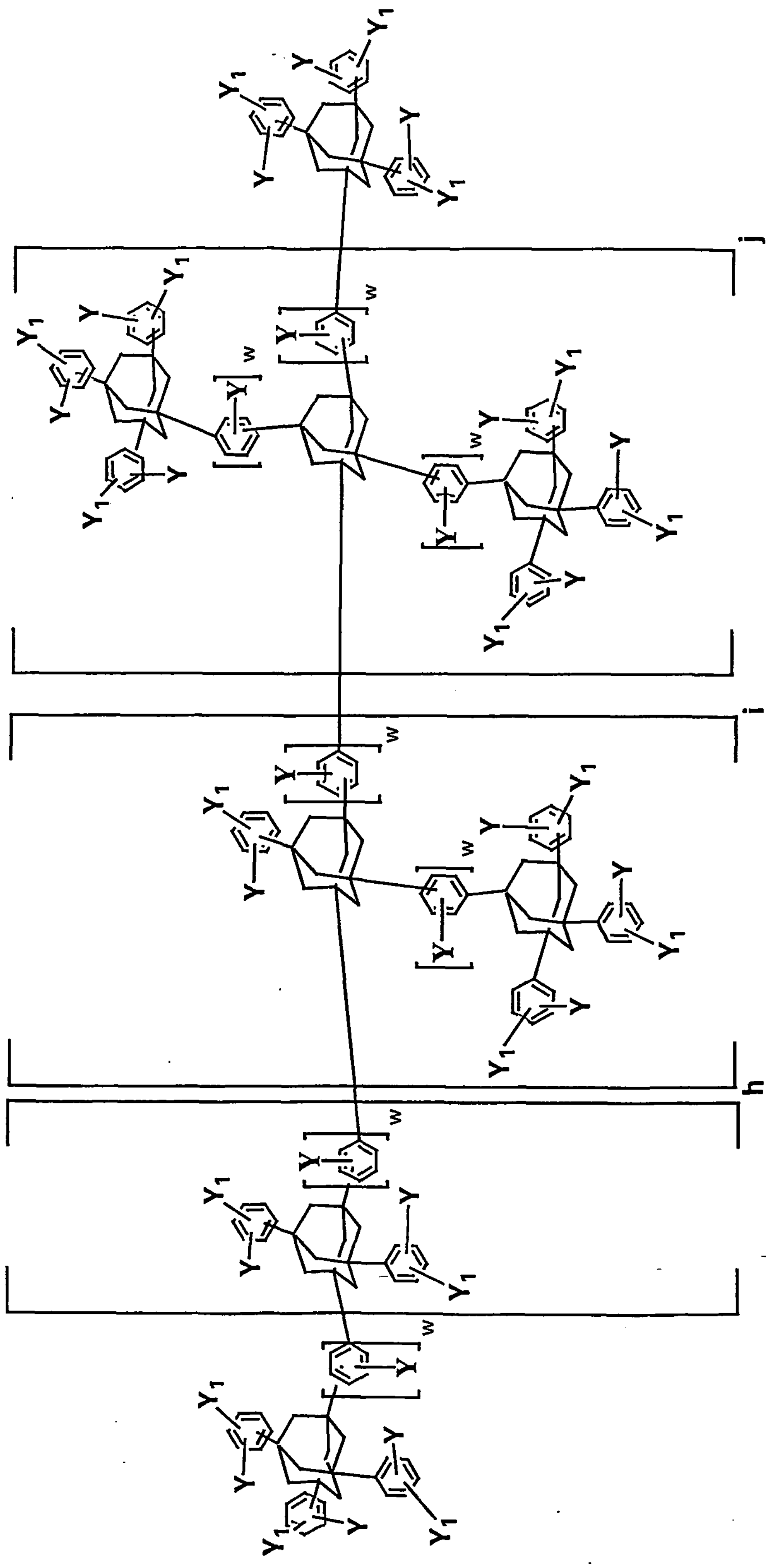

or if diamantane is used, comprises at least one monomer of Formula V

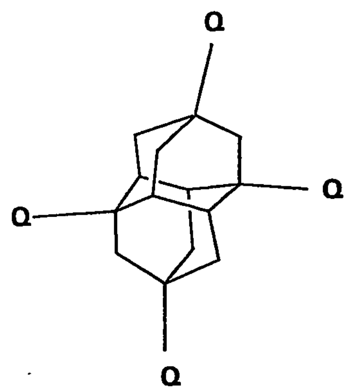

and at least one oligomer or polymer of Formula VI where h is from 0 to 10, i is from 0 to 10, j is from 0 to 10, and w is 0 or 1 and preferably Formula XXVIII

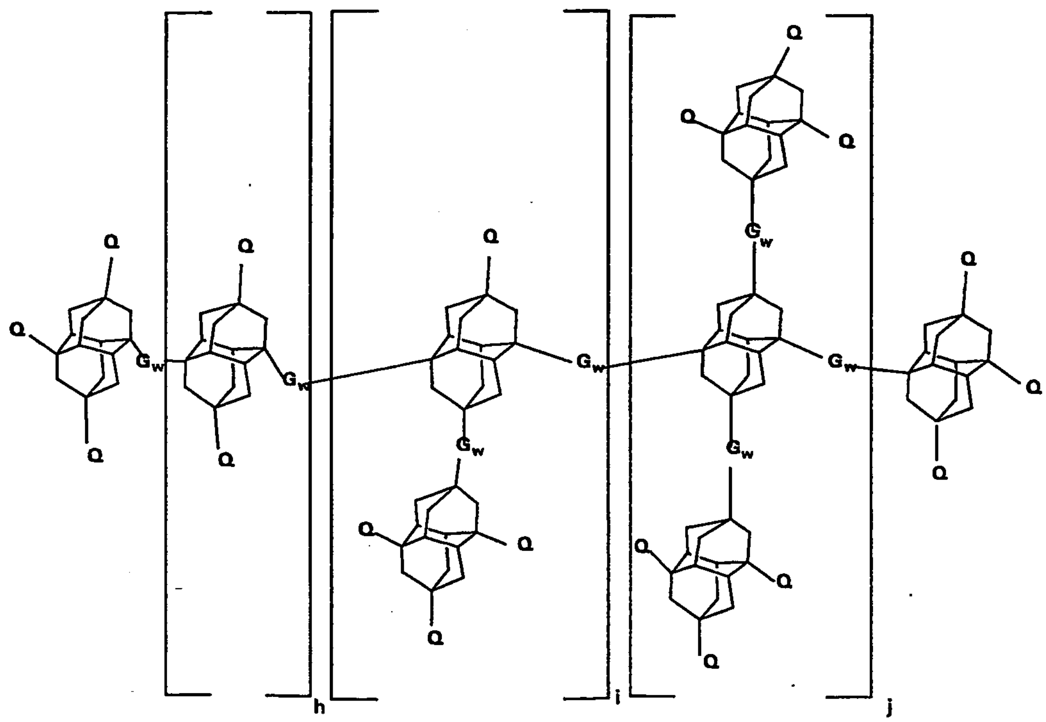

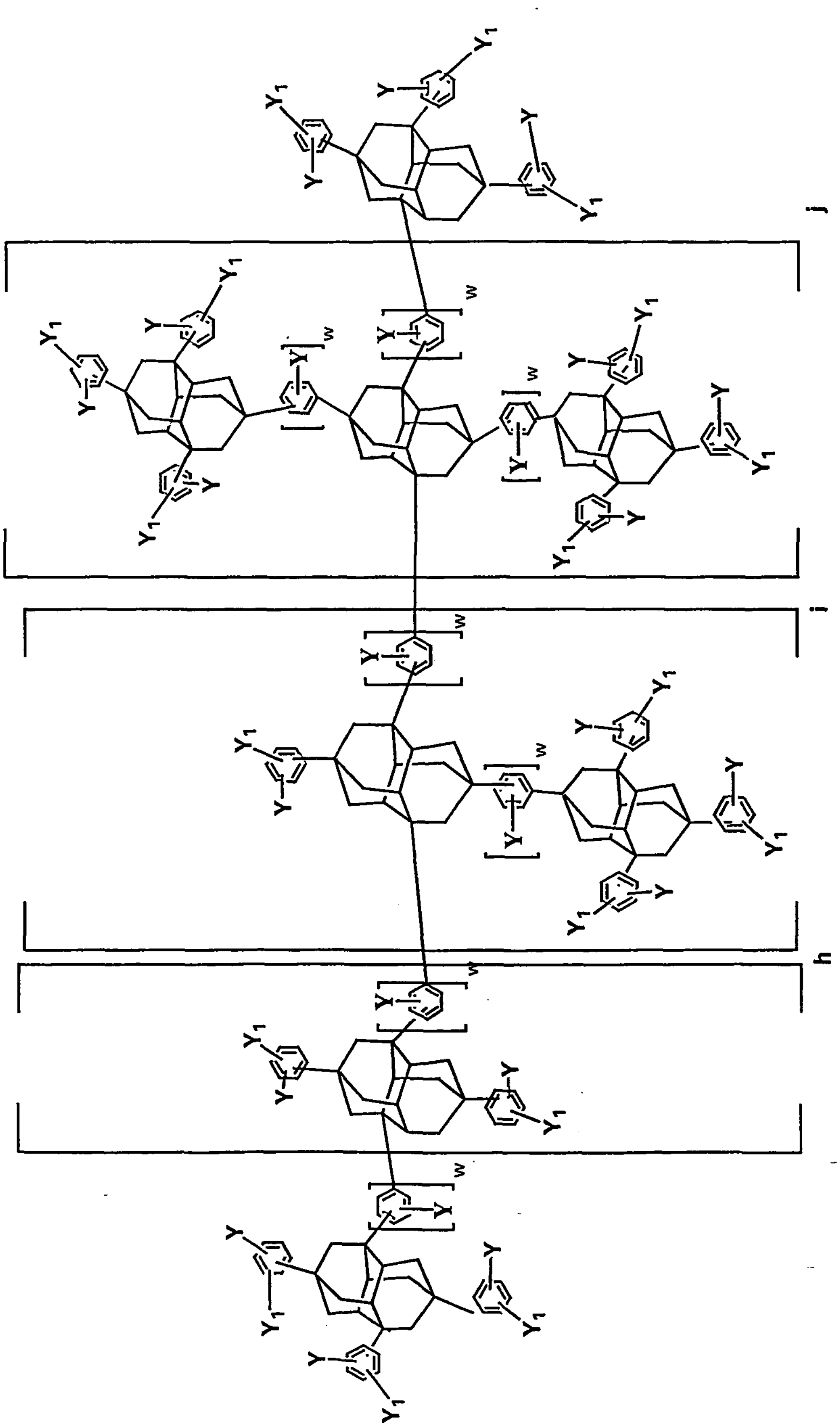

where Q is hydrogen or $-C_6H_3YY_1$.

It should be understood to those skilled in the art that reaction may occur on diamantane at bridgehead carbons other than those indicated in Formulae VI and XXVIII above.

In step (B), the mixture resulting from step (A) is reacted with terminal alkyne of the formula RC≡CH, wherein each of said R is the same or different and selected from hydrogen, halogen, alkyl, substituted aryl, heteroaryl, aryl ether, alkenyl, alkynyl, alkoxyl, hydroxyalkyl, hydroxyaryl, hydroxyalkenyl, hydroxy-alkynyl, hydroxyl or carbonyl. Preferably, the present process forms compositions of Formulae VII and VIII or IX and X above.

In step (A), adamantane or diamantane is reacted with halogeno benzene compound with the Formula XXVI. In addition to the halogen radical $Y_1$ and the previously described radical Y, the halogeno benzene compound can also contain further substituents.

The halogeno benzene compound is preferably selected from bromobenzene, dibromobenzene, and iodobenzene. Bromobenzene and/or dibromobenzene are preferred, bromobenzene being even more preferred.

The reaction of adamantane or diamantane with the halogeno benzene compound (step (A)) takes place preferably through Friedel-Crafts reaction in the presence of a Lewis acid catalyst. Although all customary Lewis acid catalysts may be used, it is preferred that the Lewis acid catalyst contains at least one compound selected from aluminum (III) chloride ($AlCl_3$), aluminum(III) bromide ($AlBr_3$), and aluminum (III) iodide ($AlI_3$). Aluminum(III) chloride ($AlCl_3$) is most preferred. Despite the greater Lewis acidity of aluminum(III) bromide, its use is generally less preferred, because it has a low sublimation point of only 90°C and is thus much more difficult to handle on an industrial scale than e.g. aluminum (III) chloride.

In a further preferred version, the Friedel-Crafts reaction is carried out in the presence of a second catalyst component. The second catalyst component preferably contains at least one compound selected from tertiary halogen alkane with 4 to 20 carbon atoms, tertiary alkanol with 4 to 20 carbon atoms, secondary and tertiary olefin with 4 to 20 carbon atoms and tertiary halogen alkyl, aryl compound. In particular, the second catalyst component contains at least one compound selected from 2-bromo-2-methylpropane (tert.-butyl bromide), 2-chloro-2-methylpropane (tert.-butyl chloride), 2-methyl-2-propanol (tert.-butyl alcohol), isobutene, 2-bromopropane, and tert.-butylbromobenzene, with 2-bromo-2-methylpropane (tert.- butyl bromide) being most preferred. Overall, compounds whose alkyl groups include 5 or more carbon atoms are less suitable, as solid constituents precipitate out of the reaction solution at the end of the reaction.

It is most preferred that the Lewis acid catalyst is aluminum(III) chloride ($AlCl_3$) and the second catalyst component is 2-bromo-2-methylpropane (tert.-butyl bromide) or tert.-butylbromobenzene.

The preferable procedure for carrying out the Friedel-Crafts reaction is that adamantane or diamantane, halogeno benzene compound (e.g. bromobenzene), and Lewis acid catalyst (e.g. aluminium chloride) are mixed and heated at a temperature of 30°C to 50°C, preferably 35°C to 45°C and in particular 40°C. At temperatures lower than 30°C, the reaction is not completed, i.e. a higher proportion of tri-substituted adamantane forms for example. In principle it is conceivable to use even higher temperatures than those given above (e.g. 60°C), but this leads in an undesirable manner to a higher proportion of non-halogenated aromatic material (e.g. benzene) in the reaction mixture of step (A). The second component of the catalyst system, say tert.-butyl bromide, is then added to the above reaction solution generally over a period of 5 to 10 hours, preferably 6 to 7 hours and after the addition has ended, mixed into the reaction mixture in the temperature range named above customarily for a further 5 to 10 hours, preferably 7 hours.

Surprisingly, in addition to the monomeric tetraphenylated compound, e.g. 1,3,5,7-tetrakis(3'/4'-bromophenyl) adamantane, oligomers or polymers thereof were also found in the mixture obtained after step (A). It was wholly unexpected that the quantity ratio of adamantane monomer of Formula III to adamantane oligomer or polymer of Formula IV or XXVII or diamantane monomer of Formula V to diamantane oligomer or polymer of Formula VI or XXVIII was controllable through the quantities of adamantane or diamantane, halogeno benzene compound (e.g. bromobenzene), and second catalyst component (e.g. tert.-butyl bromide) used. The molar ratio of adamantane or diamantane to halogeno benzene compound to second catalyst component in the reaction mixture of step (A) is preferably 1:(5-15):(2-10) and even more preferably 1:(8-12):(4-8).

In the compounds with the Formulae XXVII and XXVIII the position of the halogen substituent Y, is undefined. Preferably, the mixtures comprise *meta-* and *para*-isomers which, unlike all para-isomers, advantageously produce improved solubility and good film properties. In the reaction mixture of step (A), in addition to monomers and oligomers or polymers, starting components and by-products, such as not wholly phenylated adamantanes, can also occur.

The mixture resulting from step (A) is optionally worked up using methods known to those skilled in the art. For example, it may be necessary to remove non-reacted halogen phenyl compound, say bromobenzene, from the mixture in order to obtain a product, usable for further reaction, with a high proportion of compounds of Formulae XXVII and XXVIII. Any solvent or solvent mixture which is miscible with the halogeno benzene compound, say bromobenzene, and is suitable for the precipitation of the compounds of Formulae XXVII and XXVIII may be used for the isolation of such a product. It is preferred to introduce the mixture resulting from step (A) into a nonpolar solvent or solvent mixture, e.g. by dropping in, with preference being given to the use of aliphatic hydrocarbons with 7 to 20 carbon atoms or mixtures thereof and in particular at least one component selected from heptane fraction (boiling point 93-99°C), octane fraction (boiling point 98-110°C) and alkane mixture currently commercially available from Honeywell International Inc.

under the tradename Spezial Benzin 80-110°C (petroleum ether with boiling point of 80-110°C). Spezial Benzin 80-110°C (petroleum ether with boiling point of 80-110°C) is most preferred. The weight ratio of organic mixture to nonpolar solvent is preferably 1:2 to 1:20, more preferably 1:5 to 1:13, and even more preferably 1:7 to 1:11. Alternatively, a polar solvent or solvent mixture (e.g. methanol or ethanol) can be used for the working-up of the mixture obtained after step (A), but it is less preferred, as the product mixture then precipitates out as a rubbery composition.

We have found that the peak ratio of monomer resulting from step (A) above to its dimer and trimer and oligomer in the reaction mixture shifts dramatically if the step (A) mixture is precipitated into certain solvents. This discovery advantageously allows one skilled in the art to adjust process conditions in order to achieve a targeted ratio of monomer to dimer and trimer and oligomer. To reduce this ratio, preferably, a solvent is used in which the monomer and oligomer or polymer have different solubilities.

Preferred solvents for achieving this monomer to dimer and trimer ratio shift include Spezial Benzin 80-110°C (petroleum ether with boiling point of 80°C-110°C), ligroine (boiling point 90-110°C), and heptane (boiling point 98°C). The more preferred solvent is Spezial Benzin. More specifically, to achieve a shift from about 3:1 monomer:dimer+trimer+oligomer to about 1:1, the step (a) mixture is precipitated into Spezial Benzin or to attain a shift from 3:1 monomer: dimer +trimer+oligomer to 1.7-2.0:1.0, the step (a) reaction mixture is precipitated into ligroine and heptane. We know that these substantial changes in peak distribution at precipitation are explained by the loss of monomer in the precipitation filtrates: 2/3 loss in Spezial Benzin and ≥1/3 loss in ligroine and heptane, which correspond to monomer yield losses of 50 and 25-33%. In order for the ratio monomer:dimer+trimer+oligomer 3:1 to remain unchanged, the step (A) reaction mixture is precipitated into methanol where no yield losses are observed. This is corroborated by determination of yield losses of the filtrates and GPC analysis of the filtrates.

Like the synthesis described by Ortiz, the Friedel-Crafts reaction which is carried out according to a preferred version in step (A) of the present process starts direct from adamantane which is coupled with the halogeno benzene compound. Compared with previous syntheses of e.g. 1,3,5,7-tetrakis(3'/4'-bromophenyl)adamantane by Reichert et al., the present process is particularly advantageous because it is no longer necessary to produce tetrabrominated adamantanes first, which saves a reaction step. Also, less unwanted benzene forms.

It is known to those skilled in the art that the halogen radical Y, in the compounds of Formulae XXVII and XXVIII can also be introduced, apart from a direct reaction of adamantane with halogen phenyl compound (e.g. with the help of a Friedel-Crafts reaction), by a multi-stage synthesis, for example, by coupling adamantane with a phenyl compound (i.e. without halogen radical $Y_1$) followed by introduction of the radical Y, say through addition with $(Y_1)_2$ (e.g. $Br_2$) although this is not preferred.

In step (B) of the present process, the (optionally worked-up) mixture obtained after step (A) is reacted with terminal alkyne of the formula RC≡CH where R is as previously defined.

In the formula RC≡CH, "R" is identical with the previously described radical R of the adamantane product of Formulae VI and VIII and the diamantane product of Formulae IX and X. Accordingly it is most preferred to use ethynyl benzene (phenylacetylene) as terminal alkyne for the reaction in step (B).

In order, in step (B), to couple the terminal alkyne to the halogeno benzene radicals located at the adamantane system, all conventional coupling methods suitable for this purpose may be used, as described for example in Diederich, F., and Stang, P.J., (Eds.) "Metal-Catalyzed Cross-Coupling Reactions", Wiley-VCH 1998 and March, J., "Advanced Organic Chemistry", 4th Edition, John Wiley & Sons 1992, pages 717/718.

When Y on the phenyl groups is attached to two cage structure bridgehead carbons in Formula XXVIII above, Y may react with phenylacetylene to generate terminal alkyne groups.

In a preferred version of the process according to the invention, the reaction of the (optionally worked-up) mixture obtained after step (A) with terminal alkyne is carried out in the presence of a catalyst system as used in the so-called Sonogashira coupling (cf. Sonogashira; Tohda; Hagihara; Tetrahedron Lett. 1975, page 4467). It is even more preferred to use a catalyst system which in each case contains at least one palladium-triarylphosphine complex with the formula $[Ar_3P]_2PdX_2$ (where Ar = aryl and X = halogen), a copper halide (e.g. CuI), a base (e.g. a trialkylamine), a triarylphosphine and a co-solvent. According to the invention, this preferred catalyst system, can equally well consist of the named components. The co-solvent preferably contains at least one component selected from toluene, xylene, chlorobenzene, N,N-dimethylformamide and 1-methyl-2-pyrrolidone (N-methylpyrrolidone (NMP)). A catalyst system which contains the components bis-(triphenylphosphine)palladium(II)dichloride (i.e. $[Ph_3P]_2$-$PdCl_2$), triphenylphosphine (i.e. $[Ph_3P]$), copper(I)-iodide, triethylamine and toluene as co-solvent is most preferred.

The preferred procedure for the reaction of the mixture obtained from step (A) (and optionally worked-up) with terminal alkyne is that the mixture is first mixed with the base (e.g. triethylamine) and the co-solvent (e.g. toluene) and this mixture is stirred for some minutes at room temperature. The palladium-triphenylphosphine complex (e.g. Pd $(PPh_3)_2Cl_2$), triphenylphosphine ($PPh_3$) and copper halide (e.g. copper (I)-iodide) are then added, and this mixture is heated in a temperature range of 50°C to 90°C (more preferably 80°C to 85°C). Terminal alkyne is then added in the named temperature range within 1 to 20 hours (more preferably 3 hours). After the ending of the addition, the mixture is heated for at least 5 to 20 hours (more preferably 12 hours) at a temperature of 75°C to 85°C (more preferably 80°C).

Solvent is then added to the reaction solution and distilled off under reduced pressure. Preferably, after filtration, the reaction solution is then cooled to a temperature of 20°C to 30°C (more preferably 25°C). Finally, the reaction mixture of step (B), in particular for the removal of metal traces (e.g. Pd), is worked up with conventional methods which are known to those skilled in the art.

The peak ratio of monomer resulting from step (B) above to its dimer and trimer and oligomer in the reaction mixture shifts if the step (B) mixture is precipitated into certain solvents.

Surprisingly, it transpired that the reaction sequence starting direct from adamantane leads to an oligomeric or polymeric content in the reaction product of step (A) which can be controlled via the use ratio of adamantane, halogeno benzene compound and the second catalyst component, say tert.-butyl bromide. In corresponding manner, the benzene content in the reaction mixture of step (A) is also successfully regulated via this use ratio, which, because of the toxicity of benzene in industrial-scale syntheses, is of great importance. The oligomeric or polymeric content permits the same secondary chemistry as the monomer (e.g. 1,3,5,7-tetrakis(3'/4'-bromophenyl)adamantane; i.e. the oligomer or polymer is just as accessible as the monomer for the reaction with the terminal alkyne in step (B)).

In the compositions of the present invention, the monomer may be present as a mixture of at least two different isomers of Formula XXIX

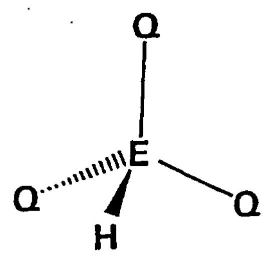

where E is a cage compound as defined above and each Q is the same or different and selected from hydrogen, aryl, branched aryl, and substituted aryl wherein the substituents include hydrogen, halogen, alkyl, aryl, substituted aryl, heteroaryl, aryl ether, alkenyl, alkynyl, alkoxyl, hydroxyalkyl, hydroxyaryl, hydroxyalkenyl, hydroxyalkynyl, hydroxyl, or carboxyl. Examples of at least different isomers include *meta-, para-,* and *ortho-* isomers. Preferably, the at least two different isomers are *meta-* and *para-* isomers.

Preferably, the mixture comprises at least two different isomers of Formula XXX

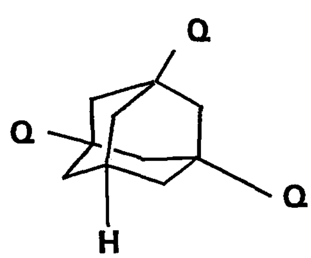

where Q is as previously defined. Preferably, the mixture comprises at least two different isomers of Formula XXXI

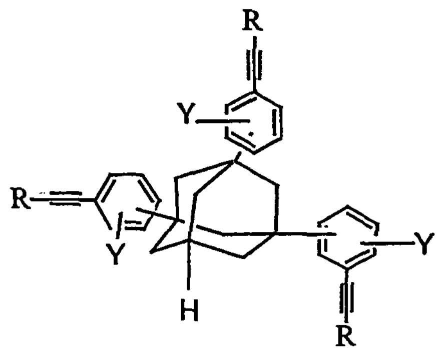

or Formula XXXII

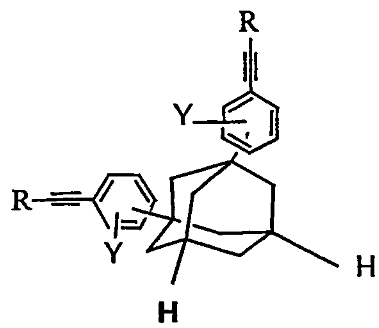

or Formula XXXIII

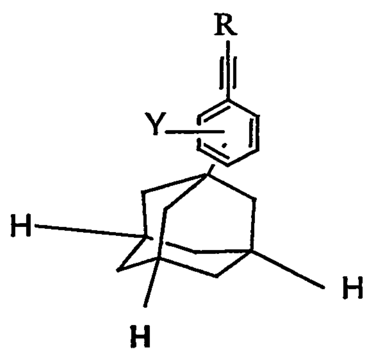

where each Y is the same or different and selected from hydrogen, alkyl, aryl, substituted aryl, or halogen and each R is the same or different and selected from hydrogen, halogen, alkyl, aryl, substituted aryl, heteroaryl, aryl ether, alkenyl, alkynyl, alkoxyl, hydroxyalkyl, hydroxyaryl, hydroxyalkenyl, hydroxyalkynyl, hydroxyl, or carboxyl.

Preferably, the mixture comprises at least two different isomers of Formula XXXIV

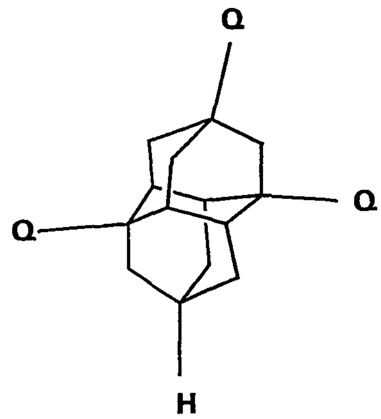

where each Q is as previously defined. Preferably, the mixture comprises at least two different isomers of Formula XXXV

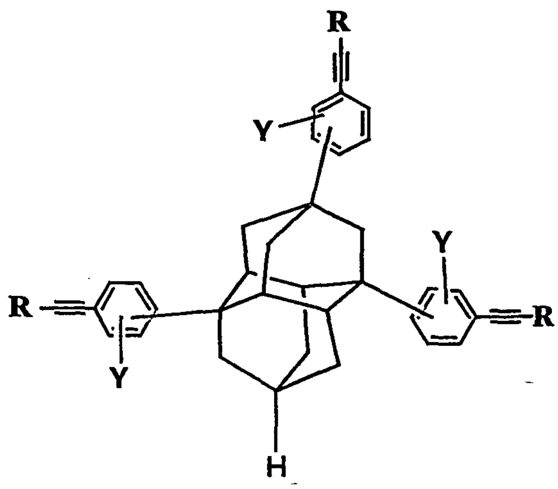

or Formula XXXVI

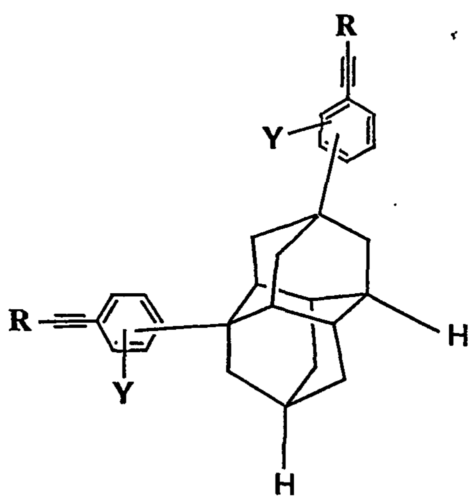

or Formula XXXVII

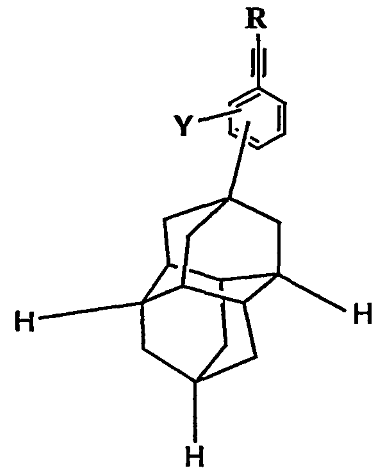

where Y and R are as previously defined.

Utility:

Each of the present compositions set forth above may be processed and used as disclosed below.

Each of the present compositions may also comprise additional components such as adhesion promoters, antifoam agents, detergents, flame retardants, pigments, plasticizers, stabilizers, striation modifiers, and surfactants.

The present composition may be combined with other specific additives to obtain specific results. Representative of such additives are metal-containing compounds such as magnetic particles, for example, barium ferrite, iron oxide, optionally in a mixture with cobalt, or other metal containing particles for use in magnetic media, optical media, or other recording media; conductive particles such as metal or carbon for use as conductive sealants, conductive adhesives, conductive coatings, electromagnetic interference (EMI)/radio frequency interference (RFI) shielding coating, static dissipation, and electrical contacts. When using these additives, the present compositions may act as a binder. The present compositions may also be employed as protection against manufacturing, storage, or use environment such as coatings to impart surface passivation to metals, semiconductors, capacitors, inductors, conductors, solar cells, glass and glass fibers, quartz, and quartz fibers.

The present composition is also useful in anti-fouling coatings on such objects as boat parts; electrical switch enclosures; bathtubs and shower coatings; in mildew resistant coatings; or to impart flame resistance, weather resistance, or moisture resistance to an article. Because of the range of temperature resistance of the present compositions, the present compositions may be coated on cryogenic containers, autoclaves, and ovens, as well as heat exchanges and other heated or cooled surfaces and on articles exposed to microwave radiation.

The present composition is particularly useful as a dielectric material. The dielectric material has a dielectric constant of preferably less than or equal to about 3.0 and more preferably from 2.3 to 3.0. The dielectric material has a glass transition temperature of preferably at least 350˚C.

Layers of the instant compositions may be formed by solution techniques such as spraying, rolling, dipping, spin coating, flow coating, or casting, with spin coating being preferred for microelectronics. Suitable solvents for use in such solutions of the present compositions of the present invention include any suitable pure or mixture of organic, organometallic, or inorganic molecules that are volatized at a desired temperature. Suitable solvents include aprotic solvents, for example, cyclic ketones such as cyclopentanone, cyclohexanone, cycloheptanone, and cyclooctanone; cyclic amides such as N-alkylpyrrolidinone wherein the alkyl has from about 1 to 4 carbon atoms; and N-cyclohexylpyrrolidinone and mixtures thereof. A wide variety of other organic solvents may be used herein insofar as they effectively control the viscosity of the resulting solution as a coating solution. Various facilitating measures such as stirring and/or heating may be used to aid in the dissolution. Other suitable solvents include methyethylketone, methylisobutylketone, dibutyl ether, cyclic dimethylpolysiloxanes, butyrolactone, γ-butyrolactone, 2-heptanone, ethyl 3-ethoxypropionate, polyethylene glycol [di]methyl ether, propylene glycol methyl ether acetate (PGMEA), anisole, and hydrocarbon solvants such as mesitylene, xylenes, benzene, and toluene. A preferred solvent is cyclohexanone. Typically, layer thicknesses are between 0.1 to 15 microns. As a dielectric interlayer for microelectronics, the layer thickness is generally less than 2 microns. The amount of solvent added to the composition is at least 70 weight percent.

Preferably, the present composition is dissolved in solvent and treated at a temperature from 30˚C to 350˚C for 0.5 to 60 hours.

The present composition may be used as an interlayer dielectric in an interconnect associated with a single integrated circuit ("IC") chip. An integrated circuit chip would, typically have on its surface a plurality of layers of the instant composition and multiple layers of metal conductors. It may also include regions of the present composition between discrete metal conductors or regions of conductor in the same layer or level of an integrated circuit.

In application of the instant polymers to ICs, a solution of the present composition is applied to a semiconductor wafer using conventional wet coating processes as, for example, spin coating; other well known coating techniques such as spray coating, flow coating, or dip coating may be employed in specific cases. As an illustration, a cyclohexanone solution of the present composition is spin-coated onto a substrate having electrically conductive components fabricated therein and the coated substrate is then subjected to thermal processing. The present composition may be used in substractive metal (such as aluminum and aluminum/tungsten) processing and dual damascene (such as copper) processing. An exemplary formulation of the instant composition is prepared by dissolving the present composition in cyclohexanone solvent under ambient conditions with strict adherence to a clean-handiing protocol to prevent trace metal contamination in any conventional apparatus having a non-metallic lining. The resulting solution comprises based on the total solution weight, from preferably 1 to 50 weight percent of the present composition and 50 to 99 weight percent solvent and more preferably from 3 to 30 weight percent of the present composition and 70 to 97 weight percent solvent.

An illustration of the use of the present invention follows. A solvent solution of the present composition is provided in an amount of from 5 to 10 weight percent (%) based on the composition. Application of the instant compositions onto planar or topographical surfaces or substrates may be carried out by using any conventional apparatus, preferably a spin coater, because the compositions used herein have a controlled viscosity suitable for such a coater. Complete evaporation of the solvent by any suitable means, such as simple air drying during spin coating, by exposure to an ambient environment, or by heating on a hot plate up to 350˚C, may be employed. The substrate may have on it at least one layer of the present composition.

Substrates contemplated herein may comprise any desirable substantially solid material. Particularly desirable substrate layers comprise films, glass, ceramic, plastic, metal or coated metal, or composite material. In preferred embodiments, the substrate comprises a silicon or gallium arsenide die or wafer surface, a packaging surface such as found in a copper, silver, nickel or gold plated leadframe, a copper surface such as found in a circuit board or package interconnect trace, a via-wall or stiffener interface ("copper" includes considerations of bare copper and its oxides), a polymer-based packaging or board interface such as found in a polyimide-based flex package, lead or other metal alloy solder ball surface, glass and polymers. Useful substrates include silicon nitride, silicon oxide, silicon oxycarbide, silicon dioxide, silicon carbide, silicon oxynitride, titanium nitride, tantalum nitride, tungsten nitride, aluminum, copper, tantalum, organosiloxanes, organo silicon glass, and fluorinated silicon glass. In other embodiments, the substrate comprises a material common in the packaging and circuit board industries such as silicon, copper, glass, and polymers. The present compositions may also be used as a dielectric substrate material in microchips, multichip modules, laminated circuit boards, or printed wiring boards. The circuit board made up of the present composition will have mounted on its surface patterns for various electrical conductor circuits. The circuit board may include various reinforcements, such as woven nonconducting fibers or glass cloth. Such circuit boards may be single sided, as well as double sided.

After application of the present composition to an electronic topographical substrate, the coated structure is subjected to a bake and cure thermal process at increasing temperatures ranging from about 50˚C up to about 450˚C to polymerize the coating. The preferred curing temperature is at least about 300˚C. Generally, it is preferred that curing is carried out at temperatures of from about 350˚C to about 425˚C. Curing may be carried out in a conventional curing chamber such as an electric furnace, hot plate, and the like and is generally performed in an inert (non-oxidizing) atmosphere (nitrogen) in the curing chamber. In addition to furnace or hot plate curing, the present compositions may also be cured by exposure to ultraviolet radiation, microwave radiation, or electron beam radiation as taught by commonly assigned patent publication PCT/US96/08678 and US Patents 6,042,994; 6,080,526; 6,177,143; and 6,235,353, which are incorporated herein by reference in their entireties. Any non-oxidizing or reducing atmospheres (eg. argon, helium, hydrogen, and nitrogen processing gases) may be used in the practice of the present invention.

As indicated earlier, the present coating may act as an interlayer and be on top of or covered by other coatings, such as other dielectric ($SiO_2$) coatings, $SiO_2$ modified ceramic oxide layers, silicon containing coatings, silicon carbon containing coatings, silicon nitrogen containing coatings, silicon-nitrogen-carbon containing coatings, diamond like carbon coatings, titanium nitride coatings, tantalum nitride coatings, tungsten nitride coatings, aluminum coatings, copper coatings, tantalum coatings, organosiloxanes coatings, organo silicon glass coatings, and fluorinated silicon glass coatings. Such multilayer coatings are taught in U.S. Pat. No. 4,973,526, which is incorporated herein by reference. And, as amply demonstrated, the present compositions prepared in the instant process may be readily formed as interlined dielectric layers between adjacent conductor paths on fabricated electronic or semiconductor substrates.

The present compositions are advantageous in that preferably, they are capable of generating films having thicknesses as thin as 50 Angstroms or as thick as ≥ 1.0 micron (10,000 Angstroms) and even ≥ 1.5 microns (15,000 Angstroms). Thus, preferred layers of the present compositions have a thickness up to or greater than 1.5 microns.

The present films may be used in dual damascene (such as copper) processing and substractive metal (such as aluminum or aluminum/tungsten) processing for integrated circuit manufacturing. The present compositions may be used as an etch stop, hardmask, air bridge, or passive coating for enveloping a completed wafer. The present composition may be used in a desirable all spin-on stacked film as taught by Michael E. Thomas, "Spin-On Stacked Films for Low keff Dielectrics", Solid State Technology (July 2001), incorporated herein in its entirety by reference. The present layers may be used in stacks with other layers comprising organosiloxanes such as taught by commonly assigned US Patent 6,143,855 and pending US Serial No. 10/078919 filed February 19, 2002; Honeywell international Inc.'s commercially available HOSP ® product; nanoporous silica such as taught by commonly assigned US Patent 6,372,666; Honeywell International Inc.'s commercially available NANOGLASS ® E product; organosilsesquioxanes taught by commonly assigned WO 01/29052; and fluorosilsesquioxanes taught by commonly assigned WO 01/29141, incorporated herein in their entirety.

Analytical Test Methods:

Gel Permeation Chromatography: Separation was performed with a Waters 2690 separation module with Waters 996 diode array and Waters 410 differential refractometer detectors. The separation was performed on two PLgel 3 μm Mixed-E 300 x 7.5 mm columns with chloroform flowing at 1 ml/min. Injection volumes of 25 μl of solutions of about 1 mg/ml concentration were run in duplicate. Good reproducibility was observed.

The column was calibrated with relatively monodisperse polystyrene standards between 20,000 and 500 molecular weight. With the lower molecular weight standards, nine distinct components could be resolved corresponding to butyl terminated styrene monomer through oligomers with nine styrenes. The logs of the peak molecular weight of the standards were fit with a third order polynomial of the elution time. The instrumental broadening was evaluated from the ratio of the full width at half maximum to the mean elution time of toluene.

The absorbance for Inventive Example 1 and Inventive Example 2 below was a maximum at about 284nm. The chromatograms had similar shapes at absorbance at wavelengths below about 300 nm. The results presented here correspond to 254 nm absorbance. The peaks were identified by the molecular weight of the polystyrene that would be eluting at the same time. These values should not be considered as measurements of molecular weight of the Inventive Example 1 and Inventive Example 2 oligomers. The sequential elution of higher oligomers, trimers, dimers, oligomers, and incomplete oligomers at increasing times can be quantitated.

Each component was broader than that which would be observed for a monodisperse species. This width was analyzed from the full width in minutes at half maximum of the peak. To roughly account for the instrumental broadening, we calculated

$$\text{width}_{\text{corrected}} = [\text{width}_{\text{observed}}{}^2 - \text{wid th}_{\text{instrument}}{}^2]^{1/2}$$

where width $_{\text{instrument}}$ is the observed width of toluene corrected by the ratio of the elution times of the peak to that for toluene. The peak width was converted to a molecular weight width through the calibration curve and ratioed to the peak molecular width. Since the molecular weight of styrene oligomers was proportional to the square of their size, the relative molecular weight width can be converted to a relative oligomer size width by dividing by 2. This procedure accounted for the difference in molecular configuration of the two species.

$^{13}$C NMR: Initial measurements of T, showed a maximum of 4 s, so cycle times were set accordingly for quantitative results. All samples were dissolved in $CDCl_3$ and 4000 scans were collected. C, CH, $CH_2$, and $CH_3$ groups assigned via DEPT. DEPT clearly identified the $CH_2$ at 41 ppm, which is assigned to the 3 neighbors to a missing arm on the adamantane, and the CH at 30 ppm to the unsubstituted site. The adamantane $CH_2$'s adjacent to attached arms appeared at 46-48 ppm. Similarly, the quarternary carbon at 35 ppm and the $CH_3$ at 31.5 ppm can be assigned to a t-butyl group. In the aromatic region, the cluster of peaks between 120 and 123.5 were clearly non-protonated aromatics. Based on the chemical shifts, we assigned these as bromo aromatic carbons. The quarternary aromatics in the 145-155 ppm range were as expected for aromatic ring carbons attached to aliphatic groups, i.e. adamantane in this case. There were additional peaks at ca. 14, 23, 29 and 31.5 ppm in some of the spectra. These were assignable to heptane which was used to wash the samples. The relative amount of heptane varies substantially between samples. We did not quantify the heptane, since it is immaterial to the final performance.

NMR conditions:

- High resolution $^{13}C$ NMR spectra acquired on a Varian Unity Inova 400.
- $^{13}C$ frequency: 100.572 MHz.
- Gated $^{1}H$ decoupling, using WALTZ modulation
- Spectral width: 25 kHz
- $\pi/2$ pulses on $^{13}C$ - 13 $\mu$s.
- Cycle times: 20 seconds.
- # data points: 100032, 2 seconds acquisition time.
- Zero filled to 131072 point for FT
- 1 Hz exponential smoothing.

Proton NMR: A 2-5 mg sample of the material to be analyzed was put into an NMR tube. About 0.7 ml deuterated chloroform was added. The mixture was shaken by hand to dissolve the material. The sample was then analyzed using a Varian 400MHz NMR.

Liquid Chromatography-Mass Spectroscopy (LC-MS): This analysis was performed on a Finnigan/MAT TSQ7000 triple stage quadrupole mass spectrometer system, with an Atmospheric Pressure Ionization (API) interface unit, using a Hewlett-Packard Series 1050 HPLC system as the chromatographic inlet. Both mass spectral ion current and variable single wavelength UV data were acquired for time-intensity chromatograms.

Chromatography was conducted on a Phenomenex Luna 5-micron phenyhexyl column (250x4.6mm). Sample auto-injections were generally between 5 and 20 microliters of concentrated solutions, both in tetrahydrofuran and without tetrahydrofuran. The preferred preparation of concentrated sample solutions for analysis was dissolution in tetrahydrofuran, of about 5 milligrams solid product per milliliter, for 10 microliter injections. The mobile phase flow through the column was 1.0 milliliter/minute of acetonitrile/water, initially 70/30 for 1 minute then gradient programmed to 100% acetonitrile at 10 minutes and held until 40 minutes.

Atmospheric Pressure Chemical Ionization (APCI) mass spectra were recorded in both positive and negative ionization, in separate experiments. Positive APCI was more informative of molecular structure for these final products, providing protonated pseudomolecular ions including adducts with acetonitrile matrix. The APCI corona discharge was 5 microamps, about 5kV for positive ionization, and about 4kV for negative ionization. The heated capillary line was maintained at 200˚C and the vaporizer cell at 400˚C. The ion detection system after quadrupole mass analysis was set at 15kV conversion dynode and 1500V electron multiplier voltage. Mass spectra were typically recorded at 1.0 second/scan from about m/z 50 to 2000 a.m.u. for negative ionization, and from about m/z 150 a.m.u. up for positive ionization. In separate positive ion experiments, the mass range was scanned up both to 2000 a.m.u. in low mass tune/calibration mode and to 4000 a.m.u. in high mass tune/calibration mode.

Differential Scanning Calorimetry (DSC): DSC measurements were performed using a TA Instruments 2920 Differential Scanning Calorimeter in conjunction with a controller and associated software. A standard DSC cell with temperature ranges from 250 degree C to 725 degree C (inert atmosphere: 50 ml/min of Nitrogen) was used for the analysis. Liquid nitrogen was used as a cooling gas source. A small amount of sample (10-12 mg) was carefully weighed into an Auto DSC aluminum sample pan (Part # 990999-901) using a Mettler Toledo Analytical balance with an accuracy of $\pm$0.0001 grams. Sample was encapsulated by covering the pan with the lid that was previously punctured in the center to allow for outgasing. Sample was heated under nitrogen from 0˚C to 450˚C at a rate of 100˚C/minute (cycle 1), then cooled to 0˚C at a rate of 100˚C/minute. A second cycle was run immediately from 0˚C to 450˚C at a rate of 100˚C/minute (repeat of cycle 1). The cross-linking temperature was determined from the first cycle.

Dielectric Constant: The dielectric constant was determined by coating a thin film of aluminum on the cured layer and then doing a capacitance-voltage measurement at 1 MHz and calculating the k value based on the layer thickness.

Glass Transition Temperature (Tg): The glass transition temperature of a thin film was determined by measuring the thin film stress as a function of temperature. The thin film stress measurement was performed on a KLA 3220 Flexus. Before the film measurement, the uncoated wafer was annealed at 500˚C for 60 minutes to avoid any errors due to stress relaxation in the wafer itself. The wafer was then deposited with the material to be tested and processed through all required process steps. The wafer was then placed in the stress gauge, which measures the wafer bow as function of temperature. The instrument can calculate the stress versus temperature graph, provided that the wafer thickness and the film thickness are known. The result was displayed in graphic form. To determine the Tg value, a horizontal tangent line was drawn (a slope value of zero on the stress vs. temperature graph). Tg value was where the graph and the horizontal tangent line intersect.

It should be reported if the Tg was determined after the first temperature cycle or a subsequent cycle where the maximum temperature was used, the measurement process itself may influence Tg.

Shrinkage: Film shrinkage was measured by determining the film thickness before and after the process. Shrinkage was expressed in percent of the original film thickness. Shrinkage was positive if the film thickness decreased. The actual thickness measurements were performed optically using a J.A. Woollam M-88 spectroscopic ellipsometer.

A Cauchy model was used to calculate the best fit for Psi and Delta (details on Ellipsometry can be found in e.g. "Spectroscopic Ellipsometry and Reflectometry" by H.G. Thompkins and William A. McGahan, John Wiley and Sons, Inc., 1999).

Refractive Index: The refractive index measurements were performed together with the thickness measurements using a J.A. Woollam M-88 spectroscopic ellipsometer. A Cauchy model was used to calculate the best fit for Psi and Delta. Unless noted otherwise, the refractive index was reported at a wavelenth of 633nm (details on Ellipsometry can be found in e.g. "Spectroscopic Ellipsometry and Reflectometry" by H.G. Thompkins and William A. McGahan, John Wiley and Sons, Inc., 1999).

FTIR analysis: FTIR spectra were taken using a Nicolet Magna 550 FTIR spectrometer in transmission mode. Substrate background spectra were taken on uncoated substrates. Film spectra were taken using the substrate as background. Film spectra were then analyzed for change in peak location and intensity.

Compatibility with Solvents: Compatibility with solvents was determined by measuring film thickness, refractive index, FTIR spectra, and dielectric constant before and after solvent treatment. For a compatible solvent, no significant change should be observed.

Solubility Improvement: In a first vessel, product was added to cyclohexanone until visual inspection revealed that additional product would not be soluble in the cyclohexanone. The amount of solids added was recorded.

**Comparative Example 1**

Figures 1 and 2 show the preparation of the isomers discussed below, and the Roman numerals in the text of this Example correspond with the Roman numerals in Figures 1 and 2. As mentioned briefly in the Background section, Reichert's goal was to prepare 1,3,5,7-tetrakis[(4-phenylethynyl)phenyl)]adamantane of definite structure, namely, single p-isomer of this compound - 1,3,5,7-tetrakis[4'-(phenylethynyl)phenyl]adamantane (8). This, and only this compound, having definite structure (which can be characterized by the analytical methods) was the target of Reichert's work.

Reichert's plan was to realize the following sequence:

1,3,5,7-tetrabromoadamantane (1) → 1,3,5,7-tetrakis(4'-bromophenyl)adamantane (2) (*p*-isomer) → 1,3,5,7-tetrakis[4'-(phenylethynyl)phenyl)]adamantane (8) (*p*-isomer)

Reichert failed on step (1) → (2) in that she thought she obtained 1,3,5,7-tetrakis(3'/4'-bromophenyl)adamantane (8) - a mixture of isomers of 1,3,5,7-tetrakis(bromophenyl)adamantane, containing the combination of *p*- and *m*-bromophenyl groups attached to adamantane core (see below), and she considered the goal of her work not fulfilled. As support for this she writes: "The lack of regioselection during arylation discouraged us from attempting further Friedel-Crafts reactions on adamantane and lead to further study of the derivatization of the easily formed 1,3,5,7-tetraphenyladamantane" (6). To prepare single p-isomer - 1,3,5, 7-tetrakis[4'-(phenylethynyl)phenyl)]adamantane (7) she designed a "detour procedure", as follows:

1,3,5,7-tetraphenyladamantane (6) →1,3,5,7-tetrakis(4'-iodophenyl)adamantane (7)→ 1,3,5,7-tetrakis[4'-(phenylethynyl)phenyl]adamantane (8)

Reichert successively realized this sequence, and isolated the single p-isomer (8), but the solubility of this compound turned out to be so low, that she was not able to obtain $^{13}$C NMR spectra of this compound. Reichert observes: "Compound 3 [(8)] was found to be soluble enough in chloroform that a $^{1}$H NMR spectrum could be obtained. However, acquisition times were found impractical for obtaining a solution $^{13}$C NMR spectrum. Solid-state NMR was used to identify the product." Reichert, Diss. (supra). And to confirm these results, Reichert's compound was tested with several standard organic solvents and was found to be essentially insoluble in every one of the tested organic solvents.

So, in other words, Reichert prepared what she thought was 1,3,5,7-tetrakis(3'/4'-bromophenyl)adamantane (3), but did not continue in this direction, because this product was not a single isomer with definite structure. Instead she prepared single isomer of 1,3,5,7-tetrakis(4'-iodophenyl)adamantane (7), and transformed it into single isomer of 1,3,5,7-tetrakis[4'-(phenylethynyl)phenyl]adamantane (8), which turned out to be insoluble, and because of that not useful.

Our Commonly Assigned Pending Patent Application PCT/US01/22204 filed October 17, 2001:

We repeated the Reichert reaction of 1,3,5,7-tetrabromoadamantane with bromobenzene numerous times and our analysis of the reaction product of 1,3,5,7-tetrabromoadamantane with bromobenzene showed that it was not 1,3,5,7-tetrakis(3'/4'-bromophenyl)adamantane (3) (as Reichert suggested), but a mixture of 1,3,5,7-tetrakis(3'/4'-bromophenyl) adamantane (3) with approximately equal quantity of 1-phenyl-3,5,7-tris(3'/4'-bromophenyl)adamantane (4). This conclusion was confirmed by LC-MS study and elemental analysis.

We were able to find the cause of such reaction course. Bromobenzene is known to disproportionate essentially

in the conditions of Friedel-Crafts reaction (G.A. Olah, W..S.Tolgyesi, R.E.A.Dear. J. Org. Chem., 27, 3441-3449 (1962)):

$$2\ PhBr \rightarrow PhH + Br_2\Phi$$

When benzene concentration in the reaction mixture increases, it begins to replace bromine in (1) [or bromophenyl in (3)]; benzene proportion is so high, that fast established equilibria leads to approx. equal quantities of (3) and (4).

Therefore, Reichert did not obtain (as she thought) 1,3,5,7-tetrakis(3'/4'-bromophenyl)adamantane (3); instead, she had approx. 1:1 mixture of 1,3,5,7-tetrakis(3'/4'-bromophenyl)adamantane (3) with 1-phenyl-3,5,7-tris(3'/4'-bromophenyl)adamantane (4).

To shift equilibria toward 1,3,5,7-tetrakis(3'/4'-bromophenyl)adamantane (3) side, we treated the solid reaction product of 1,3,5,7-tetrabromoadamantane with bromobenzene [1:1 mixture of 1,3,5,7-tetrakis(3'/4'-bromophenyl)adamantane (3) and 1-phenyl-3,5,7-tris(3'/4'-bromophenyl)adamantane (4)] by a new portion of bromobenzene in presence of aluminum bromide. It turned out that pure bromobenzene immediately replaced phenyl group in 1-phenyl-3,5,7-tris (3'/4'-bromophenyl)adamantane (4), so the product in solution in 30 seconds contained approximately 90-95% 1,3,5,7-tetrakis(3'/4'-bromophenyl)adamantane (3). This situation was observed for approximately 5-10 min at room temperature, after which slowly increasing concentration of benzene led to an increase of 1-phenyl-3,5,7-tris(3'/4'-bromophenyl) adamantane (4) concentration, and in several hours equilibria was re-established with approximately equal concentration of 1,3,5,7-tetrakis(3'/4'-bromophenyl)adamantane (3) and 1-phenyl-3,5,7-tris(3'/4'-bromophenyl)adamantane (4).

Therefore, 1,3,5,7-tetrakis(3'/4'-bromophenyl)adamantane (3) (that Reichert thought she synthesized) can be prepared by second treatment of the solid reaction product of 1,3,5,7-tetrabromoadamantane with bromobenzene in presence of aluminum bromide.

1,3,5,7-tetrakis(3'/4'-bromophenyl)adamantane (3) subjected to Heck reaction with phenylacetylene gave a novel mixture of 95-97 weight percent of 1,3,5,7-tetra[3'/4'-(phenylethynyl)phenyl]adamantane (5) (A mixture of *p*- and m- isomers formed. Five isomers formed including (1) *para, para, para, para-; (2) para, para, para, meta-;* (3) *para, para, meta, meta-;* (4) *para, meta, meta, meta-;* and (5) *meta, meta, meta, meta-.* Trace *o*- isomer may also be present.) and 3-5 weight percent of 1,3/4-bis{1',3',5'-tris[3"/4"-phenylethynyl)phenyl]adamantyl-7'-yl}benzene (14 isomers formed) which was confirmed by LC-MS, GPC, NMR, and HPLC. This mixture was very soluble in toluene, xylenes, cyclohexanone, anisole, propylene glycol methyl ether acetate, mesitylene, cyclohexylacetate, etc. For example, its solubility in cyclohexanone was approximately 20%. This property enables it to be spin coated, which ensures practical use of this material, especially and preferably, in the field of layered materials and semiconductors.

Although the nomenclature as used herein may not necessarily adhere to strict IUP AC standards, it is widely used and understood by those skilled in the art.

Inventive Example 1 (referred to herein as "IE1")

Step (a): Preparation of Mixture of

1,3,5,7-tetrakis(3'/4'-bromophenyl)adamantane (shown in Figure 3A); 1,3/4-bis [1',3',5'-tris(3"/4"-bromophenyl)adamant-7'-yl]benzene (shown in Figure 3C); and

at least 1,3-bis{3'/4'-[1",3",5"-tris(3'''/4'''-bromophenyl)adamant-7"-yl]phenyl}-5,7-bis(3''''/4''''-bromophenyl)adamantane (shown in Figure 3C) (collectively "IE1 Step (a) Product")

A first reaction vessel was loaded with adamantane (200 grams), bromobenzene (1550 milliliters), and aluminum trichloride (50 grams). The reaction mixture was heated to 40˚C by a thermostatted water bath. Tert-butyl bromide (1206 grams) was added slowly over a period of 4-6 hours to the reaction mixture. The reaction mixture at 40˚C was stirred overnight.

A second reaction vessel was loaded with 1000 milliliters of aqueous hydrogen chloride (5%w/w). The contents of the first reaction vessel were gradually discharged into the second reaction vessel while maintaining the reaction mixture at 25-35˚C by an external ice bath. An organic phase (dark brown lower phase) was separated and washed with water (1000 milliliters). About 1700 milliliters of the organic phase remained.

A third reaction vessel was loaded with 20.4 liters of petroleum ether (mainly isooctane with a boiling range of 80˚C-110˚C). The contents of the second reaction vessel were slowly added over a period of one hour to the third reaction vessel. The resulting mixture was stirred for at least one hour. The precipitate was filtered off and the filter cake was washed twice with 300 milliliters per wash of the aforementioned petroleum ether. The washed filter cake was dried overnight at 45˚C at 40mbar. The IE1 Step (a) Product yield was 407 grams dry weight. This reaction is shown in Figures 3A through 3C as follows. Figure 3A shows the resulting monomer. Figure 3B shows the resulting generic dimer and higher products while Figure 3C shows the resulting specific dimer and trimer covered by the Figure 3B structure.

Analytical techniques including LC-MS, NMR $^{13}C$ , and GPC were used to identify the product. LC-MS showed

that the product is a complex mixture of monomeric and oligomeric star compounds with an adamantane core. Identified structures are presented in the following Table (Ad = adamantane; Ph = $C_6H_5$; Br= bromine; t-Bu = $-C(CH_3)_3$):

HPLC-MS Analysis of IE1 Step (a) Product

| HPLC-Retention Time, min | M+ Peak | Proposed Structure |
|---|---|---|
| 12.8 | 598 | $AdPh_3Br_3$ |
| 14 | 674 | $AdPh_4Br_3$ |
| 14 | 676 | $AdPh_3Br_4$ |
| 15.3 | 752 | $AdPh_4Br_4$ |
| 15.8 | 830 | $AdPh_4Br_5$ |
| 16 | 830 | $AdPh_4Br_s$ |
| 16 | 810 | $AdPh_3Br_5$(t-Bu) |
| 16 | 828 | $AdPh_5Br_4$ |
| 16.3 | 908 | $AdPh_4Br_6$ |
| 16.5 | 908 | $AdPh_4Br_6$ |
| 17.1 | 808 | $AdPh_4Br_4$(t-Bu) |
| 17.3 | 886 | $AdPh_4Br_5$(t-Bu) |
| 18.4 | 864 | $AdPh_4Br_4(t\text{-}Bu)_2$ |
| Broad~19+ | 1040 | $Ad_2Ph_5Br_5$ |
| | 1114 | $Ad_2Ph_7Br_4$ |
| | 1116 | $Ad_2Ph_6Br_5$ |
| | 1118 | $Ad_2Ph_5Br_6$ |
| | 1192 | $Ad_2Ph_7Br_5$ |
| | 1194 | $Ad_2Ph_6Br_6$ |
| | 1270 | $Ad_2Ph_7Br_6$ |
| | 1272 | $Ad_2Ph_6Br_7$ |
| | 1348 | $Ad_2Ph_7Br_7$ |
| | 1426 | $Ad_2Ph_7Br_8$ |
| Broad~21+ | 1096 | $Ad_2Ph_5Br_5$(t-Bu) |
| | 1172 | $Ad_2Ph_6Br_5$(t-Bu) |
| | 1174 | $Ad_2Ph_5Br_6$(t-Bu) |
| | 1250 | $Ad_2Ph_sBr_6$(t-Bu) |
| | 1326 | $Ad_2Ph_7Br_6$(t-Bu) |
| | 1328 | $Ad_2Ph_6Br_7$(t-Bu) |
| | 1404 | $Ad_2Ph_7Br_7$(t-Bu) |
| | 1482 | $Ad_2Ph_7Br_8$(t-Bu) |

NMR $^{13}C$ analysis led to following peak assignments:

| $^{13}C$ NMR peak position, ppm | Structure |
|---|---|
| 153.6, 151.8, 151.1, 148.3, 147.6 | Quaternary aromatic carbon bonded to adamantane |
| 136.0, 134.5, 134.2, 133.1, 131.6, 131.1, 130.2, 130.0, 129.6, 129.3, 128.5, 126.9, 123.8 | Aromatic C-H |
| 123.1, 123.0, 122.9, 122.6, 121.4, 121.1, 120.3 | Aromatic C-Br |
| 47.7 | Three C-$H_2$'s of tri-substituted adamantane |
| 46.8 | C-$H_2$'s of tetra-substituted adamantane |
| 41.0 | C-$H_2$'s of Adamantane adjacent to unsubstituted Adamantane location |
| 39.3, 39.0, 38.9, 38.4, 38.1 | Quaternary (aliphatic) carbon of adamantane |
| 35.2 | Quaternary (aliphatic) carbon of t-butyl groups |
| 31.4 | C-$H_3$'s of t-butyl groups; |
| 30 | C-H of tri-substituted adamantane |

GPC analysis results:

- 1,3,5,7-*tetrakis*(3'/4'-bromophenyl)adamantane (shown in Figure 3A) had a peak molecular weight of about 360;
- 1,3/4-*bis*[1',3',5'-*tris*(3"/4"-bromophenyl)adamant-7'-yl]benzene (shown in Figure 3C) had a peak molecular weight of about 620;
- 1,3-*bis*-{3'/4'-[1",3",5"-*tris*(3"'/4"'-bromophenyl)adamant-7"-yl]phenyl}-5,7-*bis*(3""/4""-bromophenyl)adamantane (shown in Figure 3C) had a peak molecular weight of about 900 (shoulder).

Step (b): Preparation of Mixture of

1,3,5,7-*tetrakis*[3',4'-(phenylethynyl)phenyl]adamantane (shown in Figure 3D); 1,3/4-*bis*{1',3',5'-*tris*[3"/4"-(phenylethynyl)phenyl]adamant-7'-yl} benzene (shown in Figure 3F); and at least 1,3-*bis*{3'/4'-[1",3",5"-tris[3"'/4"'-(phenylethynyl)phenyl]adamant-7"-yl]phenyl}-5,7-*bis*[3""/4""-(phenylethynyl)phenyl]adamantane (shown in Figure 3F) (collectively "IE1 Step (b) Product")

A first reactor under nitrogen was loaded with toluene (1500 milliliters), triethylamine (4000 milliliters), and the IE1 Step (a) Product prepared above (1000 grams dry). The mixture was heated to 80˚C and bis-(triphenylphosphine) palladium(II)dichloride (i.e., $[Ph_3P]_2PdCl_2$) (7.5 grams) and triphenylphosphine (i.e. $[Ph_3P]$) (15 grams) were added. After ten minutes, copper(I)iodide (7.5 grams) was added.

Over a period of three hours, a solution of phenylacetylene (750 grams) was added to the first reactor. The reaction mixture at 80˚C was stirred for 12 hours to ensure that the reaction was complete. Toluene (4750 milliliters) was added. The solvent was then distilled off under reduced pressure and a maximum sump temperature and the reaction mixture was cooled down to about 50˚C. The triethylammonium bromide (about 1600 milliliters) was filtered off. The filter cake was washed three times with 500 milliliters per wash of toluene. The organic phase was washed with 1750 milliliters of HCl (10 w/w%) and then washed with water (2000 milliliters).

To the washed organic phase, water (1000 milliliters), ethylene diamine tetraacetic acid (EDTA) (100 grams), and dimethylglyoxime (20 grams) were added. About 150 milliliters of $NH_4OH$ (25 w/w%) were added to achieve a pH of 9. The reaction mixture was stirred for one hour. The organic phase was separated and washed with water (1000 milliliters). With a Dean-Stark trap, azeotropic drying occurred until water evolution ceased. Filtering agent dolomite (100 grams) (tradename Tonsil) was added. The mixture was heated to 100˚C for 30 minutes. Dolomite was filtered off with a cloth filter having fine pores and the remainder was washed with toluene (200 milliliters). Silica (100 grams) was added. The reaction mixture was stirred for 30 minutes. The silica was filtered off with a cloth filter having fine pores and the remainder was washed with toluene (200 milliliters). Aqueous $NH_3$ (20 w/w%), in an amount of 2500 milliliters, and 12.5g

of N-acetylcysteine were added. The phases were separated. The organic phase was washed with 1000 milliliters of HCl (10% w/w) and then washed two times with 1000 milliliters per wash of water. The toluene was distilled off under a reduced pressure of about 120mbar. The pot temperature did not exceed about 70˚C. A dark brown viscous oil (1500-1700 milliliters) remained. To the hot mass in the pot, iso-butyl acetate (2500 milliliters) was added and a dark brown solution formed (4250 milliliters).

A second reactor was loaded with 17000 milliliters of petroleum ether (mainly isooctane with a boiling range of 80˚C-110˚C). The contents of the first reactor were added over a period of one hour to the second reactor and stirred overnight. The precipitate was filtered and washed four times with 500 milliliters per wash of the aforedescribed petroleum ether. The product was dried under reduced pressure for four hours at 45˚C and five hours at 80˚C. The IE1 Step (B) Product yield was 850-900 grams. This reaction is shown in Figures 3D through 3F as follows. Figure 3D shows the resulting monomer. Figure 3E shows the resulting generic dimer and higher products while Figure 3F shows the resulting specific dimer and trimer covered by the Figure 3F structure.

Analytical techniques including LC-MS, NMR $^{1}H$, NMR $^{13}C$ , GPC, and FTIR were used to identify the product.

LC-MS analysis_showed that the product is a complex mixture of monomeric and oligomeric star compounds with adamantane core. Identified structures are presented in the following Table (Ad = adamantane cage; T is tolanyl - $PhC{\equiv}CC_6H_4$-; t-Bu = $-C(CH_3)_3$):

| # | M+ Peak | Proposed Structure |
|---|---|---|
| 1[a] | 664 | $AdT_3H$ |
| 2[a] | 840 | $AdT_4$ |
| 3[a] | 720 | $Ad(H)T_3$(t-Bu) |
| 4[a,b] | 896 | $AdT_4$(t-Bu) |
| 5[a,b] | 1326 | $Ad_2T_6$ |
| 6[a,b] | 1402 | $Ad_2T_6(C_6H_4)$ |

[a] Analogs with MW ±100a.u. (plus or minus PhC≡C- group) were observed for all these general structures
[b] Analogs with missing Tolanyl arm (-176 a.u.) were observed for these structures

$^{1}H$ NMR identified aromatic protons (6.9-8 ppm, 2.8±0.2H) and adamantane cage protons (1.7-2.7 ppm, 1±0.2H).

$^{13}C$ NMR analysis led to following peak assignments:

| $^{13}C$ NMR peak position, ppm | Structure |
|---|---|
| 151.3, 151, 150, 149.9, 149.8, 149.3, 149.2 | Quaternary aromatic carbons attached to adamantane ring |
| 132-131, 128.5, 125.3, 125.2 | C-H aromatic carbon |
| 129.6-129.1 | Aromatic ring carbons |
| 123.7-122.9, 121.8, 121.1, 120.9 | Quaternary aromatic carbon attached to |
| 93.6 | Quaternary acetylene carbon (on di-substituted |
| 90.7, 90.3, 90.1, 89.7, 89.5, 89.4, 89.1, 88.8, | Quaternary acetylene carbon |
| 47.5,46.7 | $C-H_2$ of tetra-substituted adamantane |
| 47.1 | $C-H_3$ tetra-substituted adamantane |
| 41 | $C-H_2$ tri substituted adamantane |
| 39.6 | $C-H_3$ tri-substituted adamantane |
| 39.5, 39.2-39.0, 38.6, 38.2, 35 | Quaternary carbon of tetra-substituted |

(continued)

| $^{13}C$ NMR peak position, ppm | Structure |
|---|---|
| 32 | C-$H_3$ of t-butyl group on aromatic ring |
| 30 | C-H of tri-substituted adamantane |

GPC analysis results:

- 1,3,5,7-*tetrakis*[3'/4'-(phenylethynyl)phenyl]adamantane (shown in Figure 3D) had a peak molecular weight of about 744;
- 1,3/4-*bis*{1',3',5'-*tris*[3"/4"-(phenylethynyl)phenyl]adamant-7'-yl}benzene (shown in Figure 3F) had a peak molecular weight of about 1300;
- 1,3-*bis*-{3'/4'-[1",3",5"-*tris*[3"'/4"'-(phenylethynyl) phenyl]adamant-7"-yl]phenyl}-5,7-*bis*(3""/4""- (phenylethynyl) phenyl]adamantane (shown in Figure 3F) had a peak molecular weight of about 1680 (shoulder).

From GPC, the ratio of the monomeric and small molecules to oligomeric compounds was 50±5%.

FTIR showed the following:

| PEAKS IN CENTIMETERS$^{-1}$ (PEAK INTENSITY) | STRUCTURE |
|---|---|
| 3050 (weak) | Aromatic C-H |
| 2930 (weak) | Aliphatic C-H on adamantane |
| 2200 (very weak) | Acetylene |
| 1600 (very strong) | Aromatic C = C |
| 1500 (strong) | |
| 1450 (medium) | |
| 1350 (medium) | |

<u>Inventive Example 2 (referred to herein as</u> "IE2")

Step (a): Preparation of Mixture of

1,3,5,7-*tetrakis*(3'/4'-bromophenyl)adamantane (shown in Figure 3A);
1,3/4-*bis*[1',3',5'-*tris*(3"/4"-bromophenyl)adamant-7'-yl] benzene (shown in Figure 3C); and at least
1,3-*bis*{3'/4'-[1",3",5"-*tris*(3"'/4"'-bromophenyl)adamant-7"-yl]phenyl}-5,7-bis(3""/4""-bromophenyl)adamantane (shown in Figure 3C)(collectively "IE2 Step (a) Product")

A first reaction vessel was loaded with 1,4-dibromobenzene (587.4 grams) and aluminum trichloride (27.7 grams). This reaction mixture was heated to 90˚C by a thermostatted water bath and maintained at this temperature for one hour without stirring and for an additional one hour with stirring. The reaction mixture was cooled down to 50˚C. Adamantane (113.1 grams) was added to the cooled reaction mixture. Over a period of four hours, t-butyl-bromobenzene (796.3 grams) was added to the reaction mixture. The reaction mixture was stirred for an additional 12 hours.

A second reaction vessel was loaded with HCl (566 milliliters, 10% aqueous w/w). The contents of the first reaction vessel at 50˚C were discharged into the second reaction vessel while maintaining the mixture at 25-35˚C by an external ice bath. The reaction mass was a light brown suspension. The organic phase was a dark brown lower phase and separated from the reaction mixture. The separated organic phase was washed with water (380 milliliters). After this washing, about 800 milliliters of organic phase remained.

A third reaction vessel was loaded with heptane (5600 milliliters). (Thus, this ratio of organic phase to solvent is 1:7 and is an advantage of this Inventive Example 2 compared with Inventive Example 1.) Slowly over a period of one

hour, the contents of the second reaction vessel were added to the third reaction vessel. The suspension was stirred for at least four hours and the precipitate was filtered off. The filter cake was washed twice with 300 milliliters per wash of heptane. The IE2 Step (a) Product yield was 526.9 grams (wet) and 470.1 grams (dry).

Analytical techniques including LC-MS, NMR $^{13}C$, and GPC were used to identify the product. LC-MS showed that the product is a complex mixture of monomeric and oligomeric star compounds with an adamantane core. Identified structures are presented in the following Table (Ad = adamantane; Ph = $C_6H_5$; Br= bromine; t-Bu = $-C(CH_3)_3$):

HPLC-MS Analysis of IE2 Step (a) Product

| HPLC-Retention Time, min | M+ Peak | Proposed Structure |
|---|---|---|
| 12.8 | 598 | $AdPh_3Br_3$ |
| 14 | 674 | $AdPh_4Br_3$ |
| 14 | 676 | $AdPh_3Br_4$ |
| 15.3 | 752 | $AdPh_4Br_4$ |
| 15.8 | 830 | $AdPh_4Br_5$ |
| 16 | 830 | $AdPh_4Br_5$ |
| 16 | 810 | $AdPh_3Br_5$(t-Bu) |
| 16 | 828 | $AdPh_5Br_4$ |
| 16.3 | 908 | $AdPh_4Br_6$ |
| 16.5 | 908 | $AdPh_4Br_6$ |
| 17.1 | 808 | $AdPh_4Br_4$(t-Bu) |
| 17.3 | 886 | $AdPh_4Br_5$(t-Bu) |
| 18.4 | 864 | $AdPh_4Br_4$(t-BU)$_2$ |
| broad~19+ | 1040 | $Ad_2Ph_5Br_5$ |
| | 1114 | $Ad_2Ph_7Br_4$ |
| | 1116 | $Ad_2Ph_6Br_5$ |
| | 1118 | $Ad_2Ph_5Br_6$ |
| | 1192 | $Ad_2Ph_7Br_5$ |
| | 1194 | $Ad_2Ph_6Br_6$ |
| | 1270 | $Ad_2Ph_7Br_6$ |
| | 1272 | $-Ad_2Ph_6Br_7$ |
| | 1348 | $Ad_2Ph_7Br_7$ |
| | 1426 | $Ad_2Ph_7Br_8$ |
| broad~21+ | 1096 | $Ad_2Ph_5Br_5$(t-Bu) |
| | 1172 | $Ad_2Ph_6Br_s$(t-Bu) |
| | 1174 | $Ad_2Ph_5Br_6$(t-Bu) |
| | 1250 | $Ad_2Ph_6Br_6$(t-Bu) |
| | 1326 | $Ad_2Ph_7Br_6$(t-Bu) |
| | 1328 | $Ad_2Ph_6Br_7$(t-Bu) |
| | 1404 | $Ad_2Ph_7Br_7$(t-Bu) |
| | 1482 | $Ad_2Ph_7Br_8$(t-Bu) |

NMR $^{13}C$ analysis led to following peak assignments:

| $^{13}C$ NMR peak position, ppm | Structure |
|---|---|
| 153.6, 151.8, 151.1, 148.3, 147.6 | Quaternary aromatic carbon bonded to adamantane |
| 136.0, 134.5, 134.2, 133.1, 131.6, 131.1, 130.2, 130.0, 129.6, 129.3, 128.5, 126.9, 123.8 | Aromatic C-H |
| 123.1, 123.0, 122.9, 122.6, 121.4, 121.1, 120.3 | Aromatic C-Br |
| 47.7 | Three C-$H_2$'s of tri-substituted adamantane |
| 46.8 | C-$H_2$'s of tetra-substituted adamantane |
| 41.0 | C-$H_2$'s of Adamantane adjacent to unsubstituted Adamantane location |
| 39.3, 39.0, 38.9, 38.4, 38.1 | Quaternary (aliphatic) carbon of adamantane |
| 35.2 | Quaternary (aliphatic) carbon of t-butyl groups |
| 31.4 | C-$H_3$'s of t-butyl groups; |
| 30 | C-H of tri-substituted adamantane |

GPC analysis results:

- 1,3,5,7-*tetrakis*(3'/4'-bromophenyl)adamantane (shown in Figure 3A) had a peak molecular weight of about 360;
- 1,3/4-*bis*[1',3',5'-*tris*(3"/4"-bromophenyl)adamant-7'-yl]benzene (shown in Figure 3C) had a peak molecular weight of about 570;
- 1,3-*bis*-{3'/4'-[1",3",5"-*tris*(3"'/4"'-bromophenyl)adamant-7"-yl]phenyl}-5,7-*bis*(3""/4""-bromophenyl)adamantane (shown in Figure 3C) had a peak molecular weight of about 860 (shoulder).

Step (b): Preparation of Mixture of

1,3,5,7-*tetrakis*[3',4'-(phenylethynyl)phenyl]adamantane (shown in Figure 3D);

1,3/4-*bis*{1',3',5'-*tris*[3"/4"-(phenylethynyl)phenyl]adamant-7'-yl}benzene (shown in Figure 3F); and at least 1,3-*bis* {3'/4'-[1", 3",5"-*tris*[3'''/4"'-(phenylethynyl)phenyl]adamant-7"-yl]phenyl}-5,7-*bis*[3""/4""-(phenylethynyl)phenyl]adamantane (shown in Figure 3F)(collectively "IE2 Step (b) Product")

A first reaction pot under nitrogen was loaded with toluene (698 milliliters), triethylamine (1860 milliliters), and the IE2 Step (a) Product prepared above (465 grams dry). The mixture was heated to 80˚C. Palladium-triphenylphosphine complex (i.e. $[Ph(PPh_3)_2Cl_2)$(4.2 grams) was added to the reaction mixture. After waiting ten minutes, triphenylphosphine (i.e., $PPh_3$)(8.4 grams) was added to the reaction mixture. After waiting another ten mintues, copper(I)-iodide (4.2 grams) was added to the reaction mixture.

Over a period of three hours, a solution of phenylacetylene (348.8 grams) was added to the reaction mixture. The reaction mixture at 80˚C was stirred for 12 hours to ensure that the reaction was complete. Toluene (2209 milliliters) was added to the reaction mixture and then distilled off under reduced pressure and a maximum sump temperature. The reaction mixture was cooled down to about 50˚C and the triethylammonium bromide was filtered off. The filter cake was washed twice with 250 milliliters per wash of toluene. The organic phase was washed with HCl (10 w/w%)(500 milliliters) and water (500 milliliters).

To the organic phase, water (500 milliliters), EDTA (18.6 grams), and dimethylglyoxime (3.7 grams) were added. $NH_4OH$ (25 w/w%)(about 93 milliliters) was added to keep the pH =9. The reaction mixture was stirred for one hour. The organic phase was separated from the insoluble material and the emulsion containing the palladium-complex. The separated organic phase was washed with water (500 milliliters). With a Dean-Stark trap, azeotropic drying of the washed organic phase occurred until water evolution ceased. Filtering agent dolomite (tradename Tonsil)(50 grams)

was added and the reaction mixture was heated to 100˚C for 30 minutes. The dolomite was filtered off with a cloth filter having fine pores and the organic material was washed with toluene (200 milliliters). Silica (50 grams) was added and the reaction mixture was stirred for 30 minutes. The silica was filtered off with a cloth filter having fine pores and the organic material was washed with toluene (200 milliliters). Aqueous $NH_3$ (20% w/w)(250 milliliters) and N-acetylcysteine (12.5 grams) were added. The phases were separated. The organic phase was washed with HCl(10% w/w)(500 milliliters). The organic material was washed twice with 500 milliliters per wash of water. The toluene was distilled off under reduced pressure of about 120mbar. The pot temperature did not exceed 70˚C. A dark brown viscous oil (about 500-700 milliliters) remained. To the hot mass in the pot, iso-butyl acetate (1162 milliliters) was added. A dark brown solution (about 1780 milliliters) formed.

A second reaction pot was loaded with heptane (7120 milliliters). Over a period of one hour, the contents of the first reaction pot were added to the second reaction pot. The precipitate was stirred for at least three hours and filtered off. The product was washed four times with 250 milliliters per wash of heptane. The product was dried under reduced pressure of 40mbar at 80˚C. The IE2 Step (b) Product yield was 700 grams wet or 419 grams dry.

Analytical techniques including LC-MS, NMR $^1$H, NMR $^{13}$C , GPC, and FTIR were used to identify the product.

LC-MS analysis_showed that the product is a complex mixture of monomeric and oligomeric star compounds with adamantane core. Identified structures are presented in the following Table (Ad = adamantane cage; T is tolanyl - $PhC{\equiv}CC_6H_4$- ; t-Bu = $-C(CH_3)_3$):

| # | M+ Peak | Proposed Structure |
|---|---|---|
| 1[a] | 664 | $AdT_3H$ |
| 2[a] | 840 | $AdT_4$ |
| 3[a] | 720 | $Ad(H)T_3$(t-Bu) |
| 4[a,b] | 896 | $AdT_4$(t-Bu) |
| 5[a,b] | 1326 | $Ad_2T_6$ |
| 6[a,b] | 1402 | $Ad_2T_6(C_6H_4)$ |

[a] Analogs with MW ±100a.u. (plus or minus PhC≡C- group) were observed for all these general structures
[b] Analogs with missing Tolanyl arm (-176 a.u.) were observed for these structures

$^1$H NMR identified aromatic protons (6.9-8 ppm, 2.8±0.2H) and adamantane cage protons (1.7-2.7 ppm, 1±0.2H).

$^{13}$C NMR analysis led to following peak assignments:

| $^{13}$C NMR peak position, ppm | Structure |
|---|---|
| 151.3, 151, 150, 149.9, 149.8, 149.3, 149.2 | Quaternary aromatic carbons attached to adamantane ring |
| 132-131, 128.5, 125.3, 125.2 | C-H aromatic carbon |
| 129.6-129.1 | Aromatic ring carbons |
| 123.7-122.9, 121.8, 121.1, 120.9 | Quaternary aromatic carbon attached to |
| 93.6 | Quaternary acetylene carbon (on di-substituted |
| 90.7, 90.3, 90.1, 89.7, 89.5, 89.4, 89.1, 88.8, | Quaternary acetylene carbon |
| 47.5,46.7 | C-$H_2$ of tetra-substituted adamantane |
| 47.1 | C-$H_3$ tetra-substituted adamantane |
| 41 | C-$H_2$ tri substituted adamantane |
| 39.6 | C-$H_3$ tri-substituted adamantane |
| 39.5, 39.2-39.0, 38.6, 38.2, 35 | Quaternary carbon of tetra-substituted |
| 32 | C-$H_3$ of t-butyl group on aromatic ring |

(continued)

| $^{13}C$ NMR peak position, ppm | Structure |
|---|---|
| 30 | C-H of tri-substituted adamantane |

GPC analysis results:

- 1,3,5,7-*tetrakis*[3'/4'-(phenylethynyl)phenyl]adamantane (shown in Figure 3D) had a peak molecular weight of about 763;
- 1,3/4-*bis*{1',3',5'-*tris*[3"/4"-(phenylethynyl)phenyl]adamant-7'-yl}benzene (shown in Figure 3F) had a peak molecular weight of about 1330;
- 1,3-*bis*-{3'/4'-[1",3",5"-*tris*[3'"/4'"-(phenylethynyl) phenyl]adamant-7"-yl]phenyl}-5,7-*bis*(3""/4""- (phenylethynyl) phenyl]adamantane (shown in Figure 3F) had a peak molecular weight of about 1520 (shoulder).

From GPC, the ratio of the monomeric and small molecules to oligomeric compounds was 50±5%.

FTIR showed the following:

| PEAKS IN CENTIMETERS$^{-1}$ (PEAK INTENSITY) | STRUCTURE |
|---|---|
| 3050 (weak) | Aromatic C-H |
| 2930 (weak) | Aliphatic C-H on adamantane |
| 2200 (very weak) | Acetylene |
| 1600 (very strong) | Aromatic C = C |
| 1500 (strong) | |
| 1450 (medium) | |
| 1350 (medium) | |

Inventive Example 3

Impact of Solvent on ratio of 1,3,5,7-*tetrakis*[3',4'-(phenylethynyl)phenyl]adamantane (shown in Figure 3D) to 1,3/4-*bis*{1',3',5'-*tris*[3"/4"-phenylethynyl)phenyl]adamant-7'-yl} benzene (shown in Figure 3F) and at least 1,3-*bis*{3'/4'-[1",3",5"-*tris*[3'"/4'"-(phenylethynyl)phenyl]adamant-7"-yl]phenyl}-5,7-*bis*[3""/4""-(phenylethynyl) phenyl]adamantane (shown in Figure 3F)

850 milliliters of IE1 Step (a) Product was divided into four equal parts, and subjected to precipitation in petroleum ether, ligroine, heptane, and methanol. Each part was precipitated into 2520 ml of the solvent, vacuum filtered (Büchner funnel diam. 185 mm), washed on filter twice by 150 ml of the solvent, then dried in a vacuum oven for two hours at about 20˚C, overnight at 40˚C, and at 70-80˚C to constant weight.

Precipitation into hydrocarbons resulted in very dispersed light beige powders that dried without complications. Precipitation into methanol gave heavy, brownish granular solid (particles size approximately 1 mm), which formed tar when dried at 20˚C. This product was dried further.

Reaction mixtures were analyzed by GPC during the reaction and before precipitation. All filtrates and final solids were analyzed by GPC and the results are in Table 5. In Table 5, PPT stands for precipitation, monomer is 1,3,5,7-tetrakis(3'/4'-bromophenyl)adamantane (shown in Figure 3A); dimer is 1,3/4-*bis*[1',3',5'-*tris*(3"/4"-bromophenyl)adamant-7'-yl]benzene (shown in Figure 3C); and trimer is 1,3-*bis*{3'/4'-[1",3",5"-*tris*(3'"/4'"-bromophenyl)adamant-7"-yl]phenyl}-5,7-*bis*(3""/4""-bromophenyl)adamantane (shown in Figure 3C).

Table 5

| Peak Ratio [monomer to (dimer+trimer)] before PPT | Solvent For PPT | Peak Ratio [monomer to (dimer+trimer)] after PPT |
|---|---|---|
| 75.0:25.0 | Petroleum Ether | 52.5:47.4 |
| 75.0:25.0 | Ligroine | 64.0:36.0 |
| 75.0:25.0 | Heptane | 66.2:33.8 |
| 75.0:25.0 | Methanol | 75.0:25.0 |

To summarize these results, the peak ratio of monomer to (dimer+trimer) in the reaction mixture was about 3: 1. The product lost in hydrocarbons precipitation filtrates was mostly (> 90%) monomer while losses in washing filtrates were negligible. There is no product in methanol precipitation filtrates. The monomer to (dimer+trimer) ratio after precipitation increases (1:1→3:1), and monomer losses in the filtrates decrease (56→0%) in the sequence: petroleum ether, ligroine, heptane, and methanol.

Inventive Example 4 - Film Studies of Inventive Example 1

Product (approx. 10 g or more) from Inventive Example 1 above was dissolved in cyclohexanone (CHN) as 12% solution. The resulting solution was spun onto silicon wafers and then baked and cured into a film. The dielectric constant was measured to be around 2.6 with a Tg greater than or equal to 400˚C. The final film properties were measured as follows: post bake refractive index =1.693, thickness = 8207 Angstroms, post cure refractive index =1.620, thickness = 8730 Angstroms, and film expansion bake to cure = 6.3%.

Inventive Example 5

In Comparative Example 1, the composition solubility was < 5 weight percent in cyclohexanone. In our pending patent application PCT/US01/22204 filed October 17, 2001, the composition solubility was determined to be about 15-20 weight percent in cyclohexanone.

In the present invention, the solubility of a composition made from a process similar to that of Inventive Example 1 was determined to be about 30-35 weight percent in cyclohexanone.

Inventive Example 6

The 1,3/4-*bis*{1',3',5'-*tris*[3"/4"-(phenylethynyl)phenyl]adamant-7'-yl} benzene (shown in Figure 3F) in the Inventive Example 1 product mixture is separated using preparative liquid chromatography (PLC). PLC is similar to the HPLC method described above but uses larger columns to separate larger quantities of the mixture (from several grams to several hundred grams). The separated 1,3/4-*bis*{1',3',5'-*tris*[3"/4"-(phenylethynyl)phenyl]adamant-7'yl} benzene (shown in Figure 3F) is dissolved in solvent, spun unto silicon wafers, then baked and cured into a film, and used in a microchip or in a multichip module.

Inventive Example 7

The 1,3-*bis*{3'/4'-[1",3",5"-*tris*[3"'/4"'-(phenylethynyl)phenyl]adamant-7"-yl]phenyl}-5,7-*bis*[3""/4""-(phenylethynyl) phenyl]adamantane (shown in Figure 3F) in the Inventive Example 1 product mixture is separated using preparative liquid chromatography (PLC). The separated 1,3-*bis*{3'/4'-[1*",3",5"-tris*[*3"'/4"'*-(phenylethynyl)phenyl]adamant-7"-yl]phenyl}-5,7-*bis*[3""/4""-(phenylethynyl)phenyl]adamantane (shown in Figure 3F) is dissolved in solvent, spun unto silicon wafers, then baked and cured into a film, and used in a microchip or in a multichip module.

Inventive Example 8

The diamantane monomer of Formula IX and oligomer or polymer of diamantane monomer of Formulae X, XV, XVII, XIX, XXII, XXIII, and XXIV are prepared using the following method. As shown in Figure 4, diamantane is converted using bromine and a Lewis Acid catalyst to brominated diamantane product. The brominated diamantane product is then reacted with bromobenzene in the presence of a Lewis Acid catalyst to form bromophenylated diamantane. The bromophenylated diamantane is then reacted with a terminal alkyne in the presence of a catalyst system as used in the so-called Sonogashira coupling reaction. The product at each step is worked up as described in our pending

patent application PCT/US01 /22204 filed October 17, 2001.

Inventive Example 9

The diamantane monomer of Formula IX and oligomer or polymer of diamantane monomer of Formulae X, XV, XVII, XIX, XXII, XXIII, and XXIV are prepared using the following method. As shown in Figures 5A through 5F, diamantane is converted to the bromophenylated compositions of diamantane using similar synthetic procedures as described in Inventive Examples 1 and 2. In Figures 5A through 5C, diamantane is reacted with a substituted halogen phenyl compound in the presence of a Lewis Acid catalyst as described in Inventive Examples 1 and 2, and/or a second catalyst component as described in Inventive Example 2. A mixture of monomers, dimers, trimers, and higher oligomers is obtained after work-up of the reaction mixtures. In Figures 5D through 5F, the bromophenylated diamantane mixture is then reacted with a terminal alkyne in the presence of catalyst to produce the alkyne-substituted diamantane compositions of the present invention.

## Claims

**1.** A composition comprising: (a) at least one monomer of Formula I

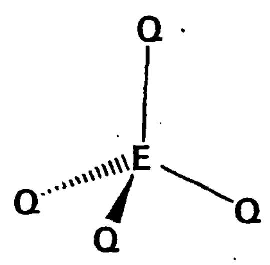

and (b) at least one oligomer or polymer of Formula II

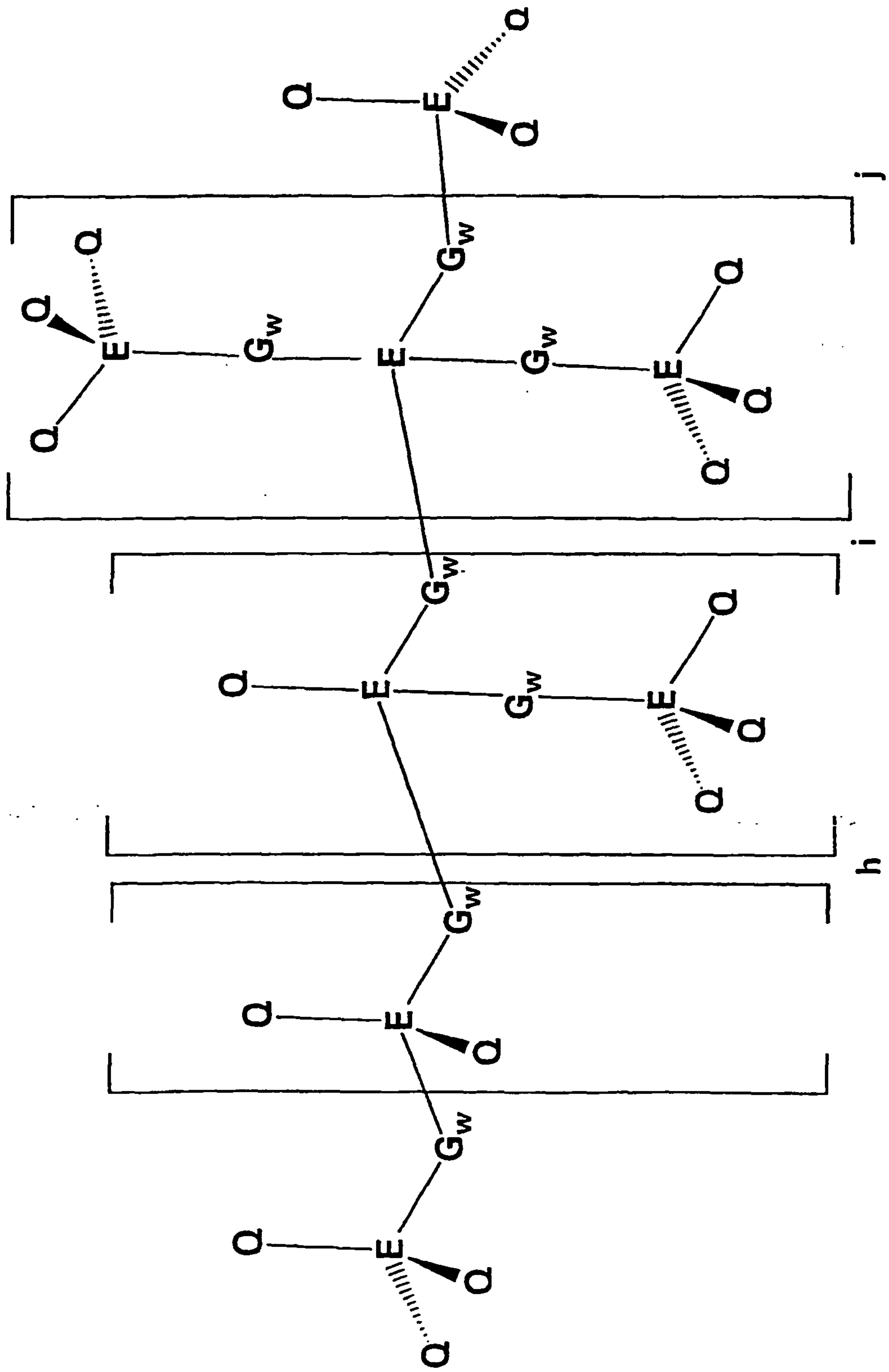

where said E is a cage compound; said Q is the same or different and selected from hydrogen, aryl, branched aryl, and substituted aryl wherein said substituents include hydrogen, halogen, alkyl, aryl, substituted aryl, heteroaryl, aryl ether, alkenyl, alkynyl, alkoxyl, hydroxyalkyl, hydroxyaryl, hydroxyalkenyl, hydroxyalkynyl, hydroxyl, or carboxyl;

said. G is aryl or substituted aryl where substituents include halogen and alkyl; said h is from 0 to 10; said i is from 0 to 10; said j is from 0 to 10; and said w is 0 or 1.

**2.** The composition of claim 1 wherein said at least one monomer (a) is adamantane of Formula III

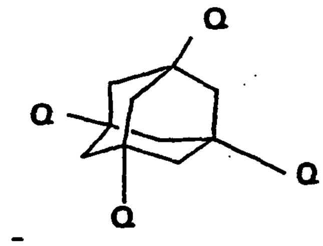

and said at least one oligomer or polymer (b) is adamantane of Formula IV

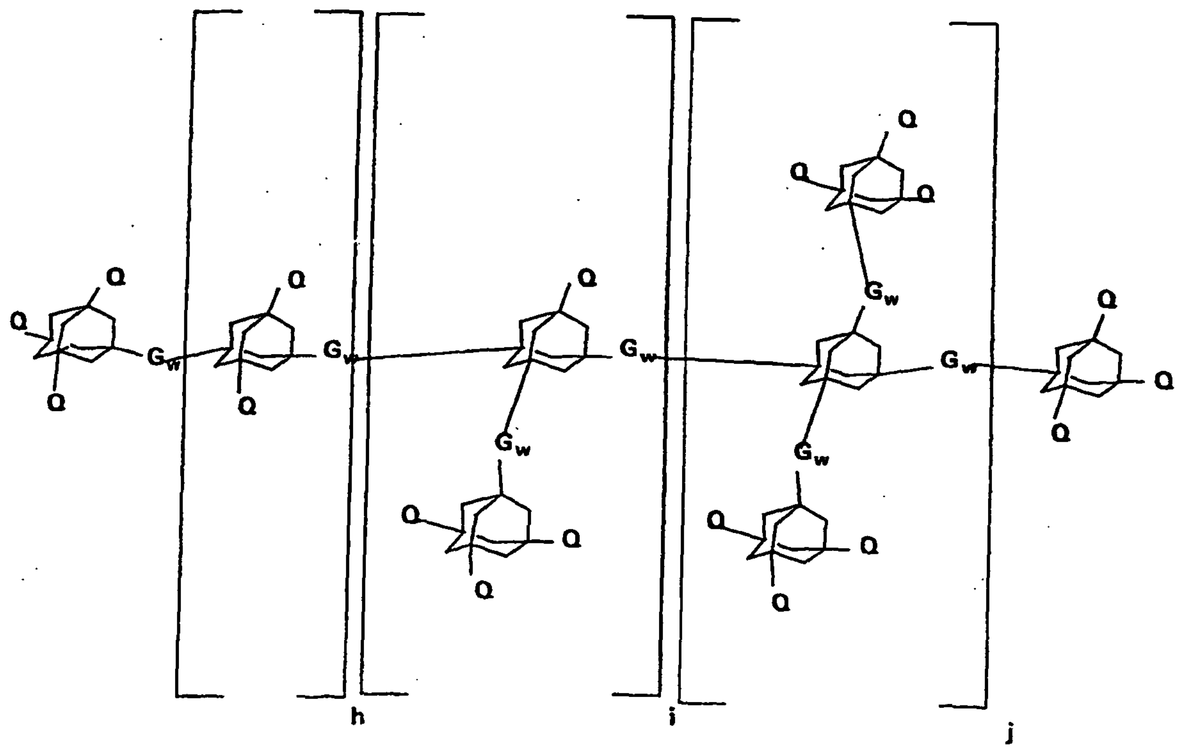

or (a) at least one diamantane monomer of Formula V

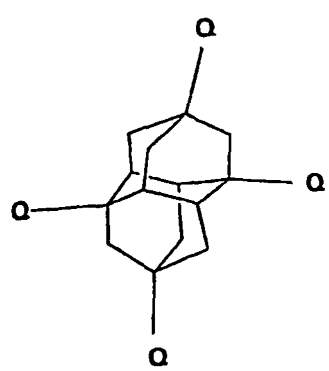

and (b) at least one oligomer or polymer of diamantane monomer of Formula VI

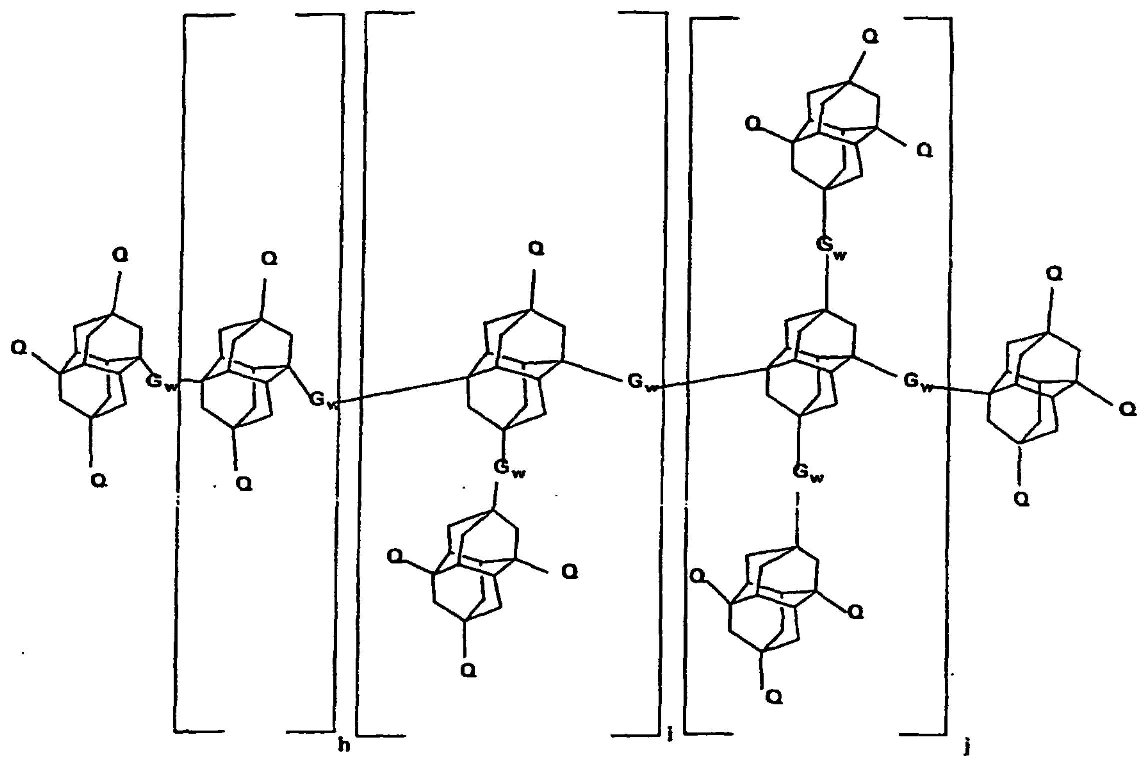

3. The composition of claim 1 wherein said at least one monomer (a) is adamantane monomer of Formula VIIA

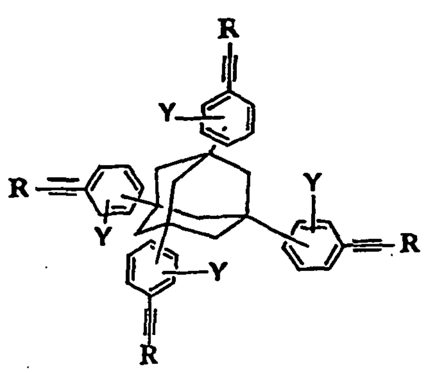

, Formula VIIB

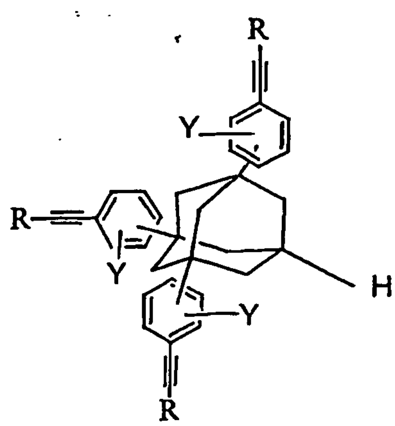

, Formula VIIC

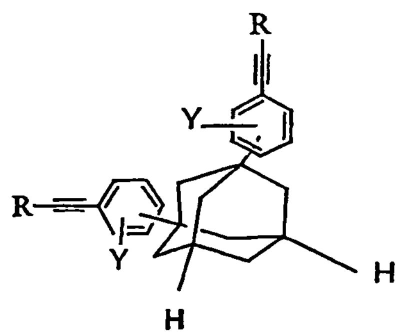

, or Formula VIID

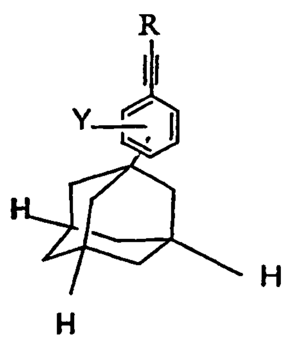

and said at least one oligomer or polymer (b) is adamantane monomer of Formula VIII

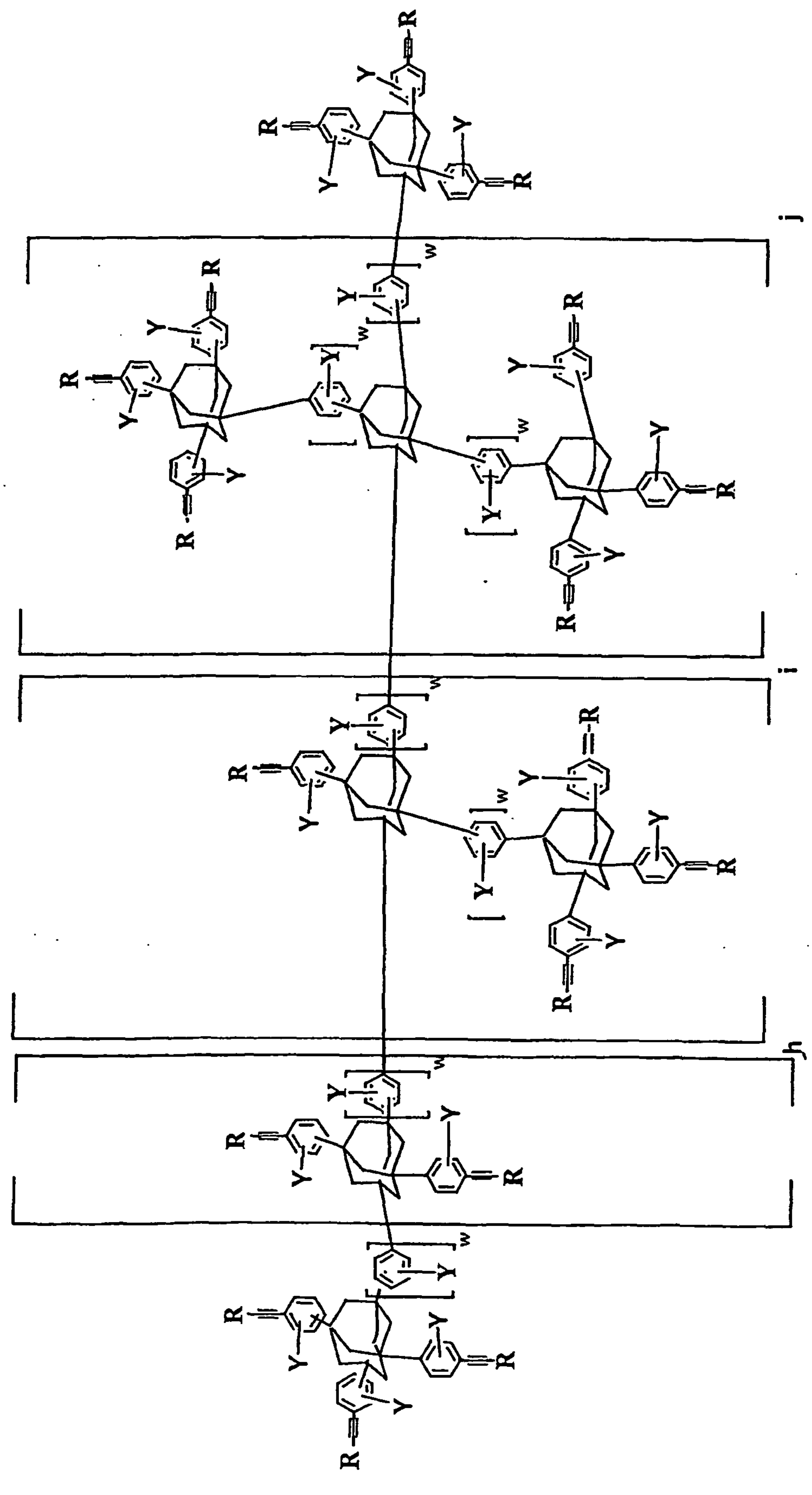

or said at least one monomer (a) is diamantane monomer of Formula IXA

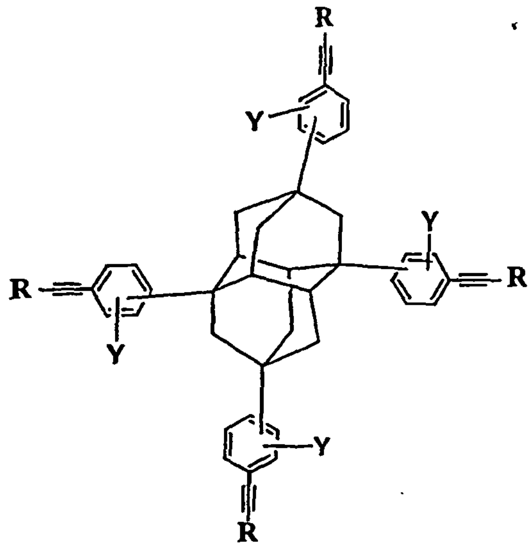

, Formula IXB

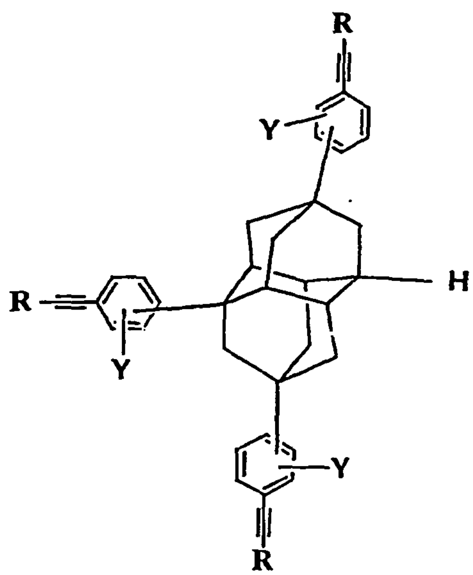

, Formula IXC

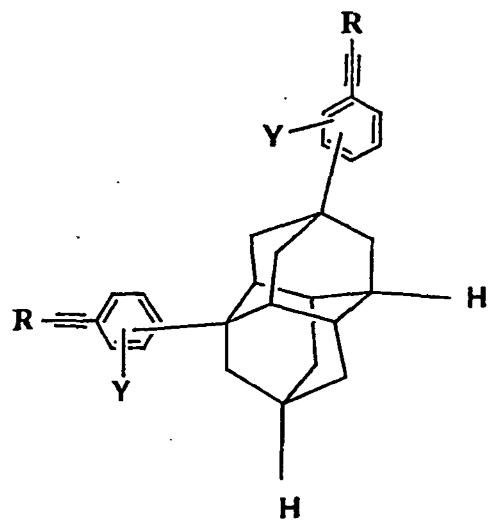

, or Formula IXD

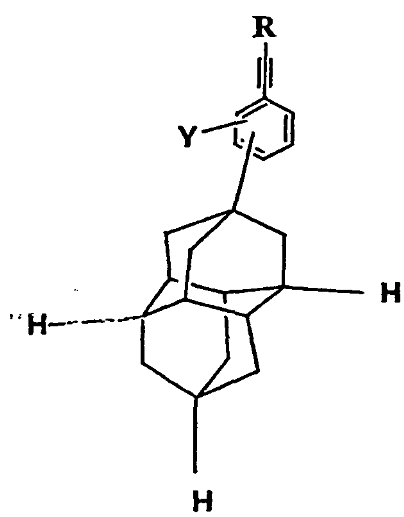

and said at least one oligomer or polymer (b) is diamantane monomer of Formula X

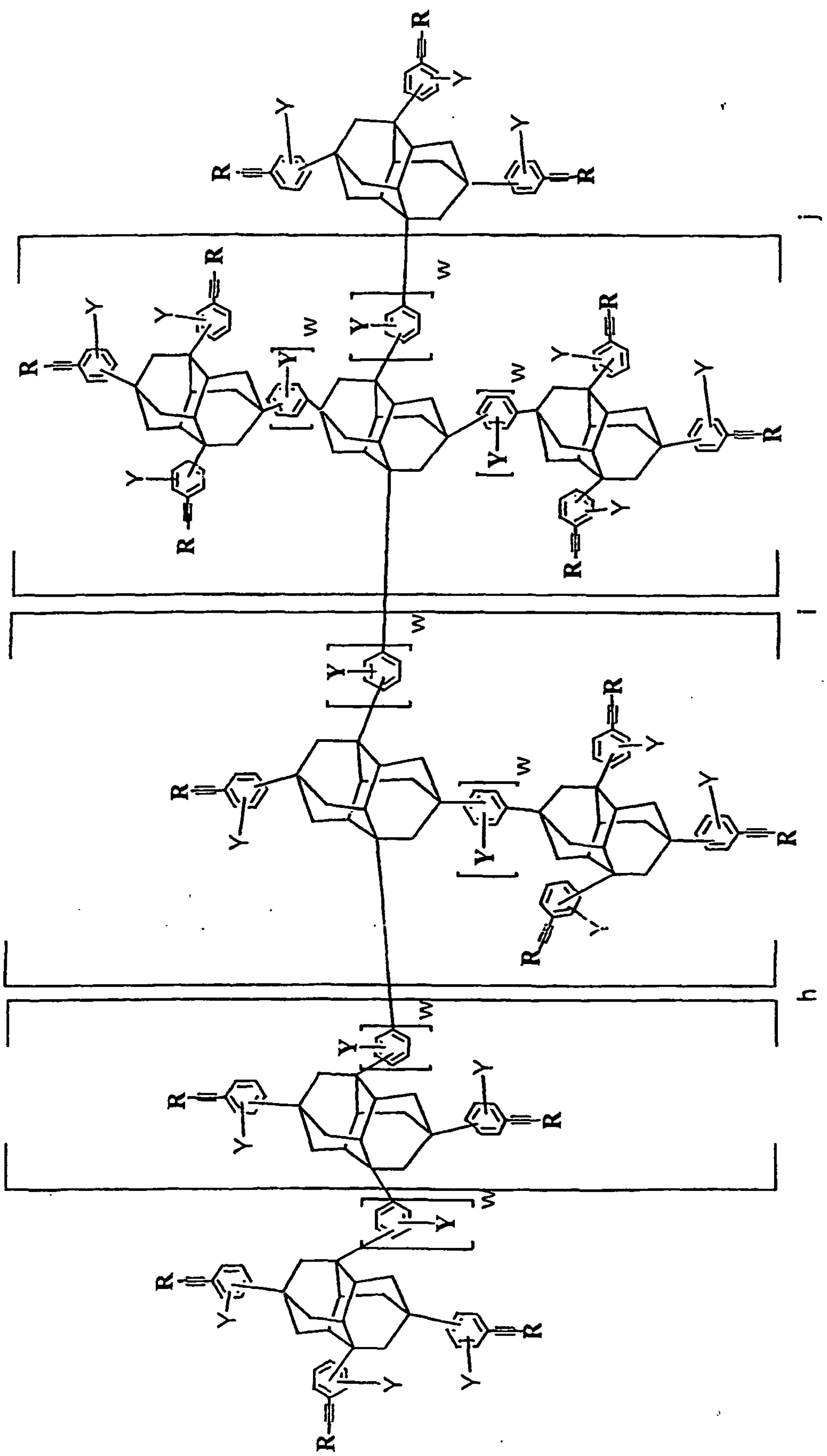

where said h is from 0 to 10; said i is from 0 to 10; said j is from 0 to 10; said w is 0 or 1; each of said R is the same or different and selected from hydrogen, halogen, alkyl, aryl, substituted aryl, heteroaryl, aryl ether, alkenyl, alkynyl, alkoxyl, hydroxyalkyl, hydroxyaryl, hydroxyalkenyl, hydroxyalkynyl, hydroxyl, or carboxyl; and each of said Y is same or different and is selected from hydrogen, alkyl, aryl, substituted aryl, or halogen.

**4.** The composition of claim 2 or claim 3 wherein said adamantane or diamantane monomer is present in a quantity of 30 to 70 area-% and said oligomer or polymer is present in an amount of 70 to 30 area-%.

**5.** The-composition of claim 4 wherein said monomer is present in an amount of 45 to 55 area-% and said oligomer or polymer is present in an amount of 55 to 45 area-%.

**6.** The composition of claim 1 wherein said monomer (a) and said oligomer or polymer (b) are adamantane based monomers.

**7.** A spin on composition comprising a composition according to any preceding claim.

**8.** A spin-on composition according to claim 7 comprising said composition of claim 3, wherein said monomers (a) and said oligomer or polymer (b) are adamantane based monomers, wherein at least two of said RC≡C groups on said phenyl groups are two different isomers and at least one of said phenyl groups between two bridgehead carbons of said adamantane monomers exists as two different isomers, and wherein said at least two isomers are *meta*- and *para*- isomers, and a solvent.

**9.** A layer comprising said spin-on composition of claim 7 or claim 8.

**10.** A microchip comprising a substrate having thereon said layer of claim 9.

**11.** A process comprising the steps of:

(A) reacting adamantane or diamantane with halogeno benzene compound of Formula XXVI

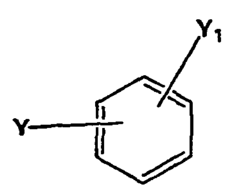

to form a mixture which if said adamantane is used, comprises at least one monomer of Formula III

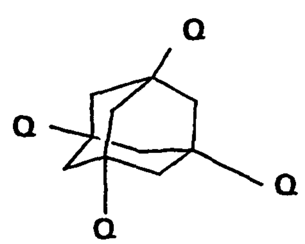

and at least one oligomer or polymer of Formula IV

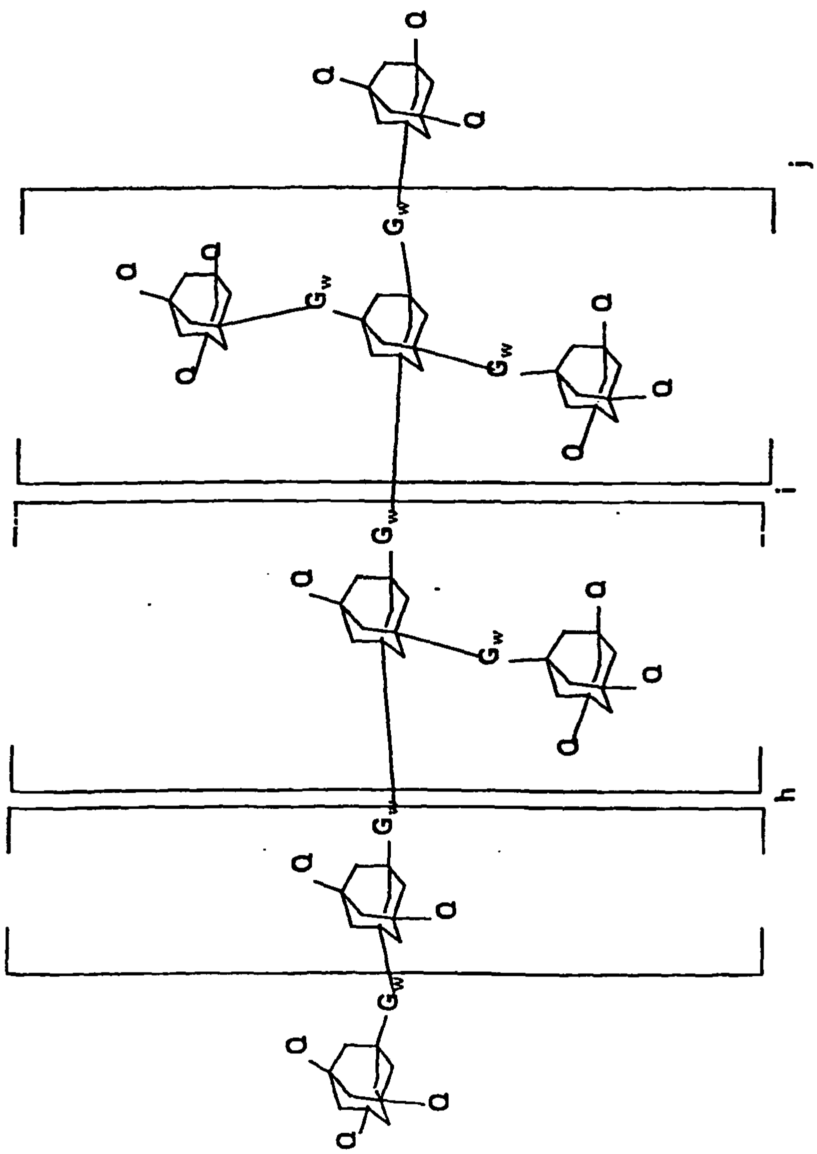

or if said diamantane is used, comprises at least one monomer of Formula V

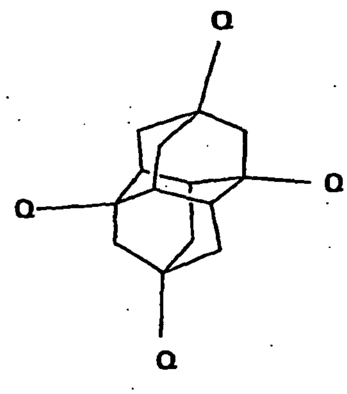

and at least one oligomer or polymer of Formula VI

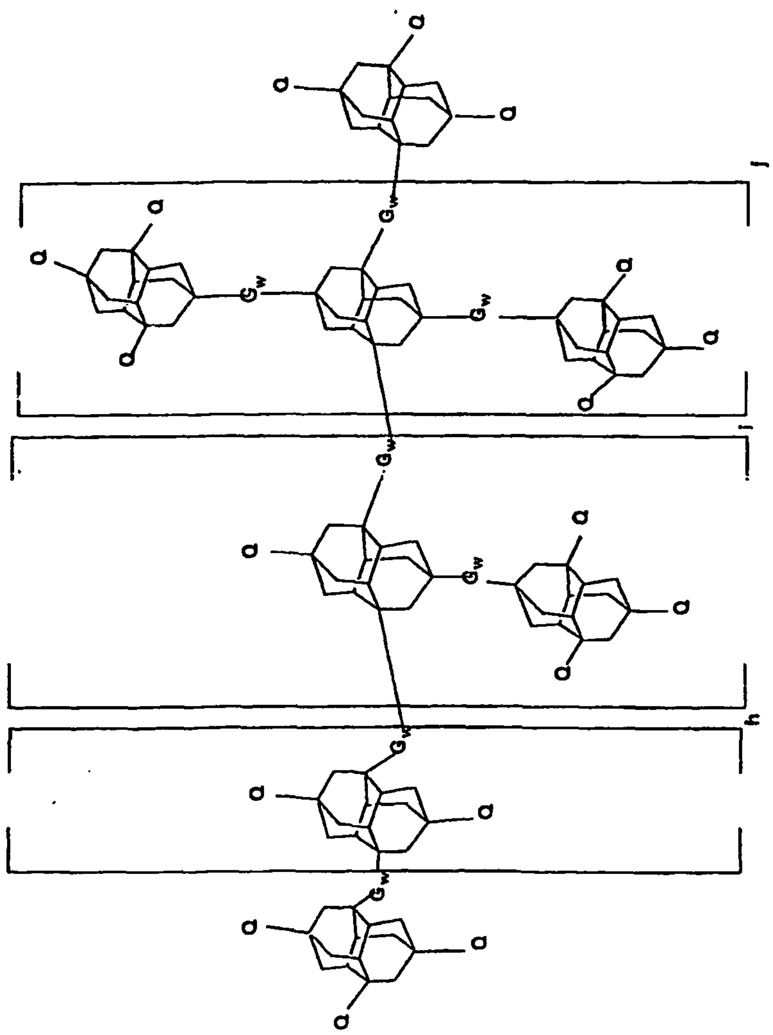

where said h is from 0 to 10; said i is from 0 to 10; said j is from 0 to 10; said w is 0 or 1; Y is selected from hydrogen, alkyl, aryl, or halogen; said $Y_1$ is halogen; and said Q is hydrogen or $-C_6H_3YY_1$.

(B) reacting said mixture resulting from said step (A) with terminal alkyne of the formula RC≡CH wherein each of said R is the same or different and selected from hydrogen, halogen, alkyl, aryl, substituted aryl, heteroaryl, aryl ether, alkenyl, alkynyl, alkoxyl, hydroxyalkyl, hydroxyaryl, hydroxyalkenyl, hydroxyalkynyl, hydroxyl, or carboxyl.

## Patentansprüche

1. Zusammensetzung, enthaltend: (a) mindestens ein Monomer der Formel I

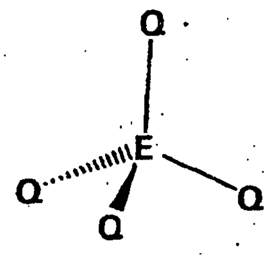

und (b) mindestens ein Oligomer oder Polymer der Formel II

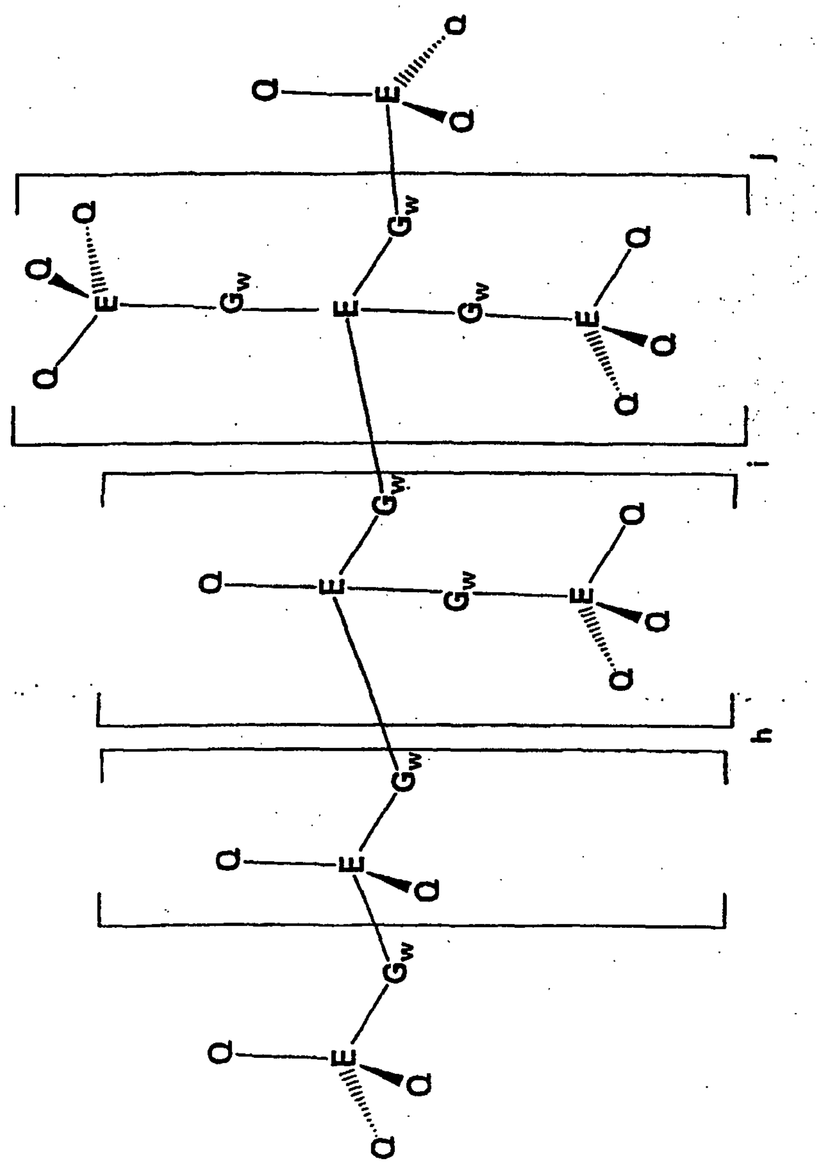

worin E eine Käfigverbindung ist; Q gleich oder verschieden ist und unter Wasserstoff, Aryl, verzweigtem Aryl und substituiertem Aryl ausgewählt ist, wobei zu den Substituenten Wasserstoff, Halogen, Alkyl, Aryl, substituiertes Aryl, Heteroaryl, Arylether, Alkenyl, Alkinyl, Alkoxyl, Hydroxyalkyl, Hydroxyaryl, Hydroxyalkenyl, Hydroxyalkinyl, Hydroxyl oder Carboxyl gehören; G für Aryl oder substituiertes Aryl steht, wobei zu den Substituenten Wasserstoff oder Alkyl gehören; h für 0 bis 10 steht; i für 0 bis 10 steht; j für 0 bis 10 steht und w für 0 oder 1 steht.

**2.** Zusammensetzung nach Anspruch 1, wobei es sich bei dem mindestens einen Monomer (a) um Adamantan der Formel III

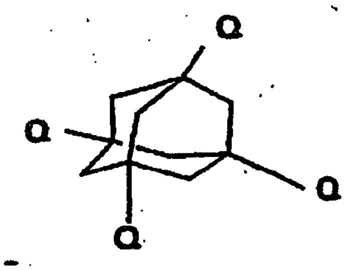

und bei dem mindestens einen Oligomer oder Polymer (b) um Adamantan der Formel IV

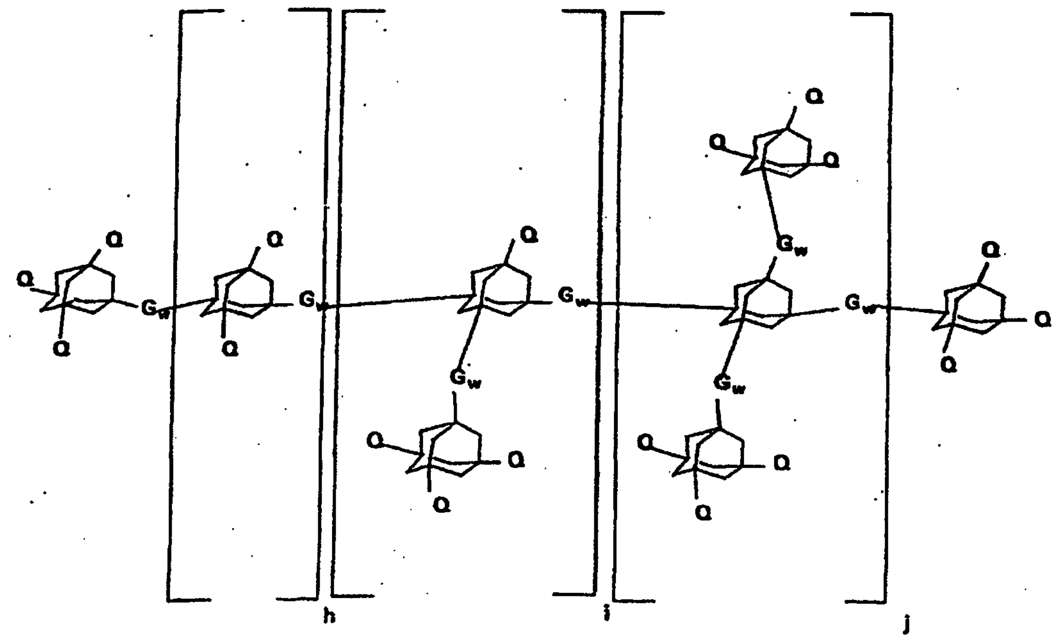

oder (a) mindestens ein Diamantanmonomer der Formel V

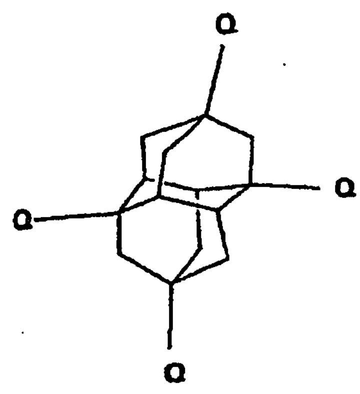

und (b) mindestens ein Oligomer oder Polymer von Diamantan der Formel VI

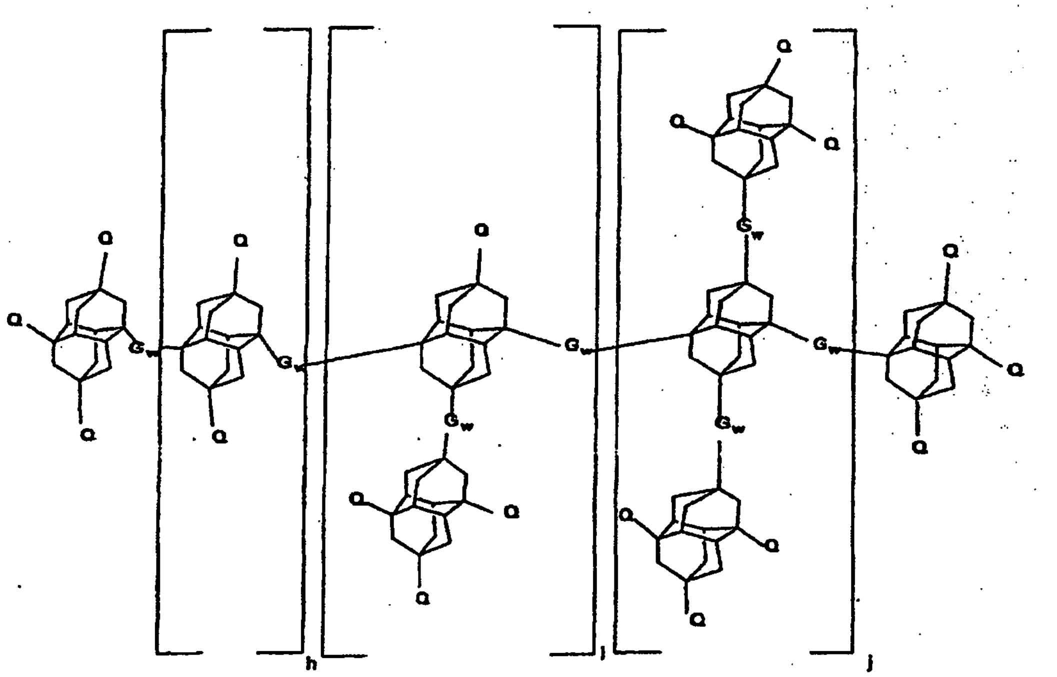

handelt.

**3.** Zusammensetzung nach Anspruch 1, wobei es sich bei dem mindestens einen Monomer (a) um ein Adamantanmonomer der Formel VIIA

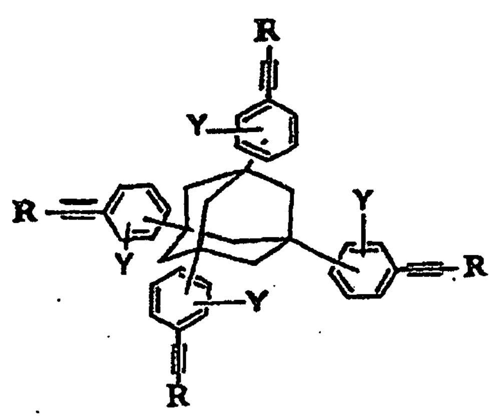

Formel VIIB

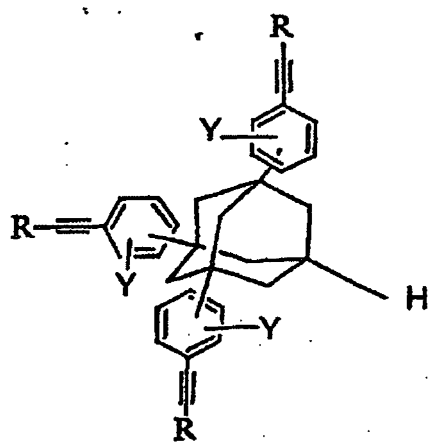

Formel VIIC

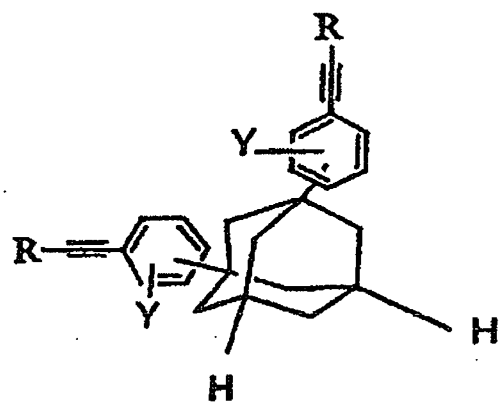

oder Formel VIID

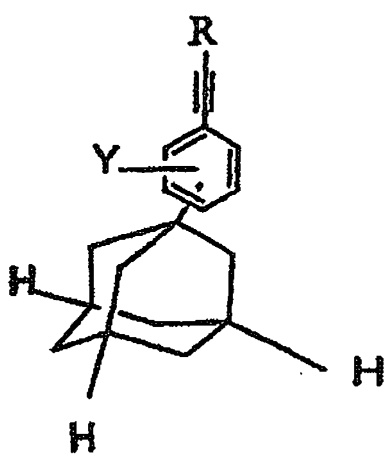

und bei dem mindestens einen Oligomer oder Polymer (b) um Adamantanmonomer der Formel VIII

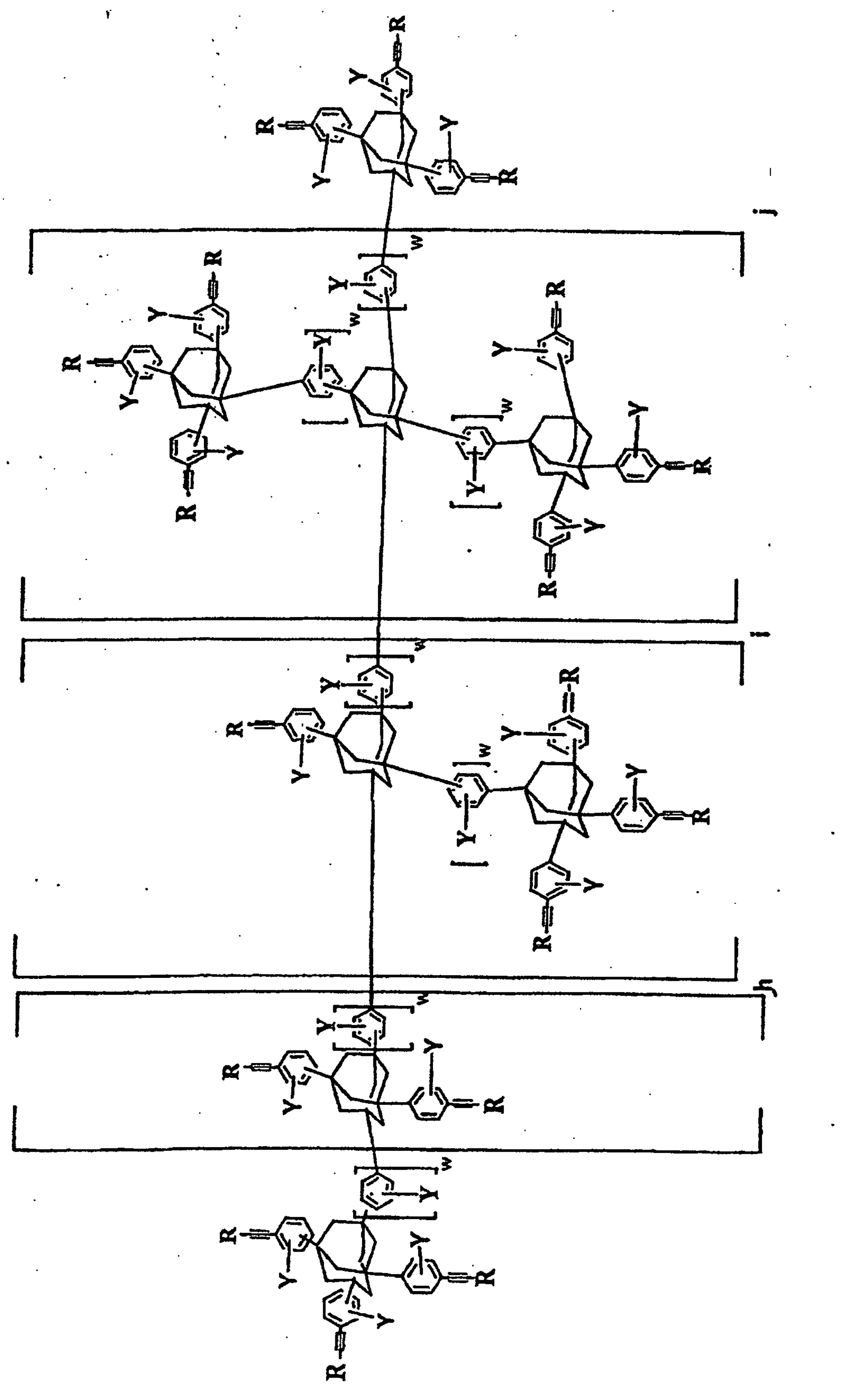

oder bei dem mindestens einen Monomer (a) um ein Diamantanmonomer der Formel IXA

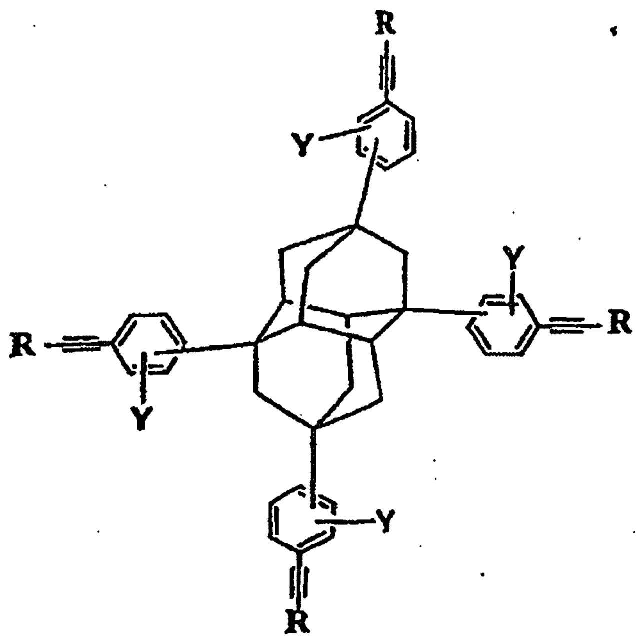

Formel IXB

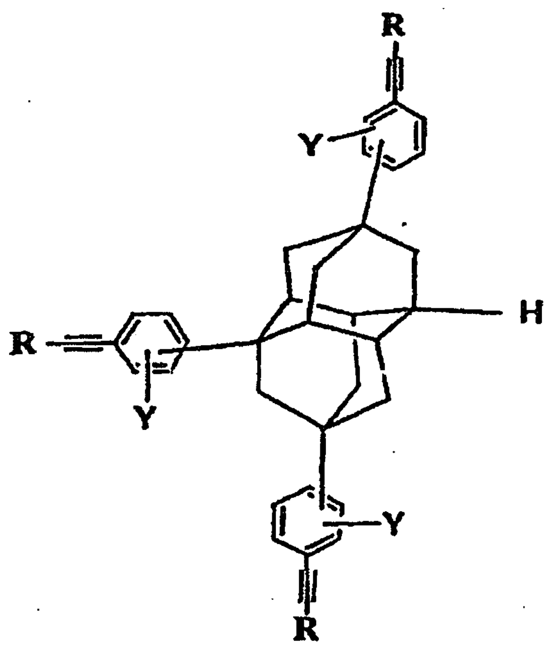

Formel IXC

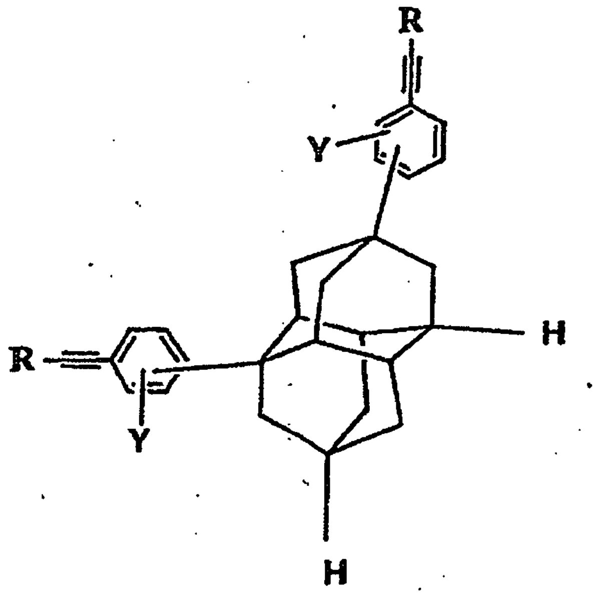

oder Formel IXD

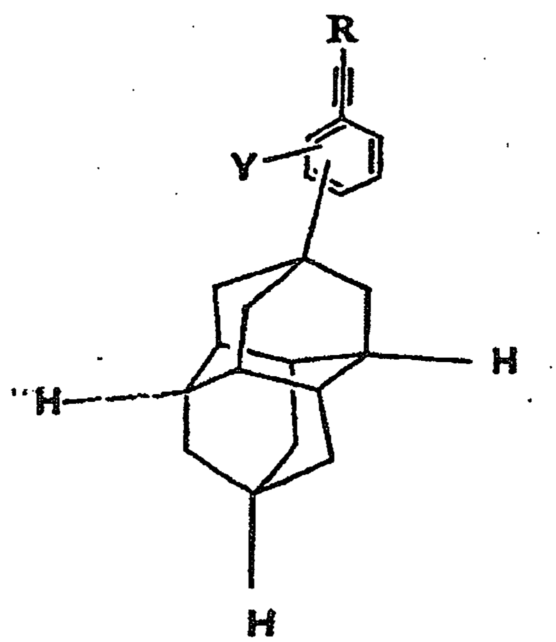

und bei dem mindestens einen Oligomer oder Polymer (b) um Diamantanmonomer der Formel X

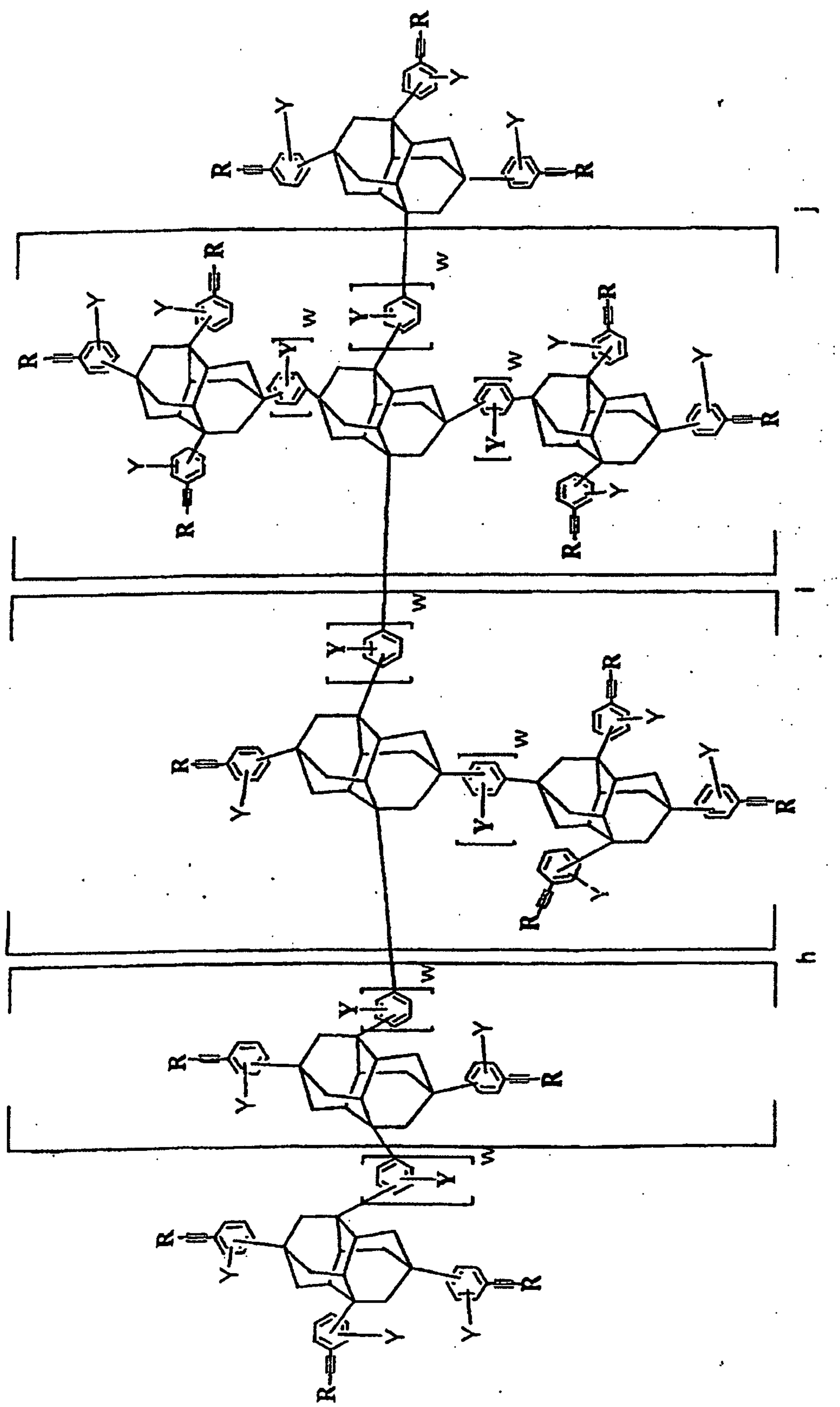

handelt, wobei h für 0 bis 10 steht; i für 0 bis 10 steht; j für 0 bis 10 steht; w für 0 oder 1 steht; R jeweils gleich oder verschieden ist und unter Wasserstoff, Halogen, Alkyl, Aryl, substituiertem Aryl, Heteroaryl, Arylether, Alkenyl, Alkinyl, Alkoxyl, Hydroxyalkyl, Hydroxyaryl, Hydroxyalkenyl, Hydroxyalkinyl, Hydroxyl oder Carboxyl ausgewählt ist

und Y jeweils gleich oder verschieden ist und unter Wasserstoff, Alkyl, Aryl, substituiertem Aryl oder Halogen ausgewählt ist.

**4.** Zusammensetzung nach Anspruch 2 oder 3, wobei das Adamantan- oder Diamantanmonomer in einer Menge von 30 bis 70 Flächen-% und das Oligomer oder Polymer in einer Menge von 70 bis 30 Flächen-% vorliegt.

**5.** Zusammensetzung nach Anspruch 4, wobei das Monomer in einer Menge von 45 bis 55 Flächen-% und das Oligomer oder Polymer in einer Menge von 55 bis 45 Flächen-% vorliegt.

**6.** Zusammensetzung nach Anspruch 1, wobei es sich bei dem Monomer (a) und dem Oligomer oder Polymer (b) um Monomere auf Basis von Adamantan handelt.

**7.** Spin-on-Zusammensetzung, umfassend eine Zusammensetzung gemäß einem der vorhergehenden Ansprüche.

**8.** Spin-on-Zusammensetzung nach Anspruch 7, umfassend die Zusammensetzung gemäß Anspruch 3, wobei es sich bei dem Monomer (a) und dem Oligomer oder Polymer (b) um Monomere auf Basis von Adamantan handelt, wobei mindestens zwei der RC=C-Gruppen an den Phenylgruppen zwei verschiedene Isomere sind, mindestens eine der Phenylgruppen zwischen zwei Brückenkopf-Kohlenstoffatomen der Adamantanmonomere in Form von zwei verschiedenen Isomeren existiert und mindestens zwei Isomere meta- und para-Isomere sind, und ein Lösungsmittel.

**9.** Schicht, umfassend die Spin-on-Zusammensetzung gemäß Anspruch 7 oder 8.

**10.** Mikrochip, umfassend ein Substrat mit einer Schicht gemäß Anspruch 9 darauf.

**11.** Verfahren, bei dem man:

(A) Adamantan oder Diamantan mit einer Halogenbenzolverbindung der Formel XXVI

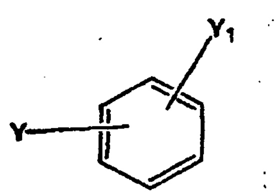

zu einem Gemisch umsetzt, das bei Verwendung von Adamantan mindestens ein Monomer der Formel III

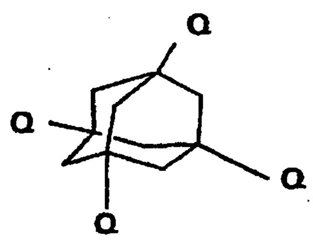

und mindestens ein Oligomer oder Polymer der Formel IV

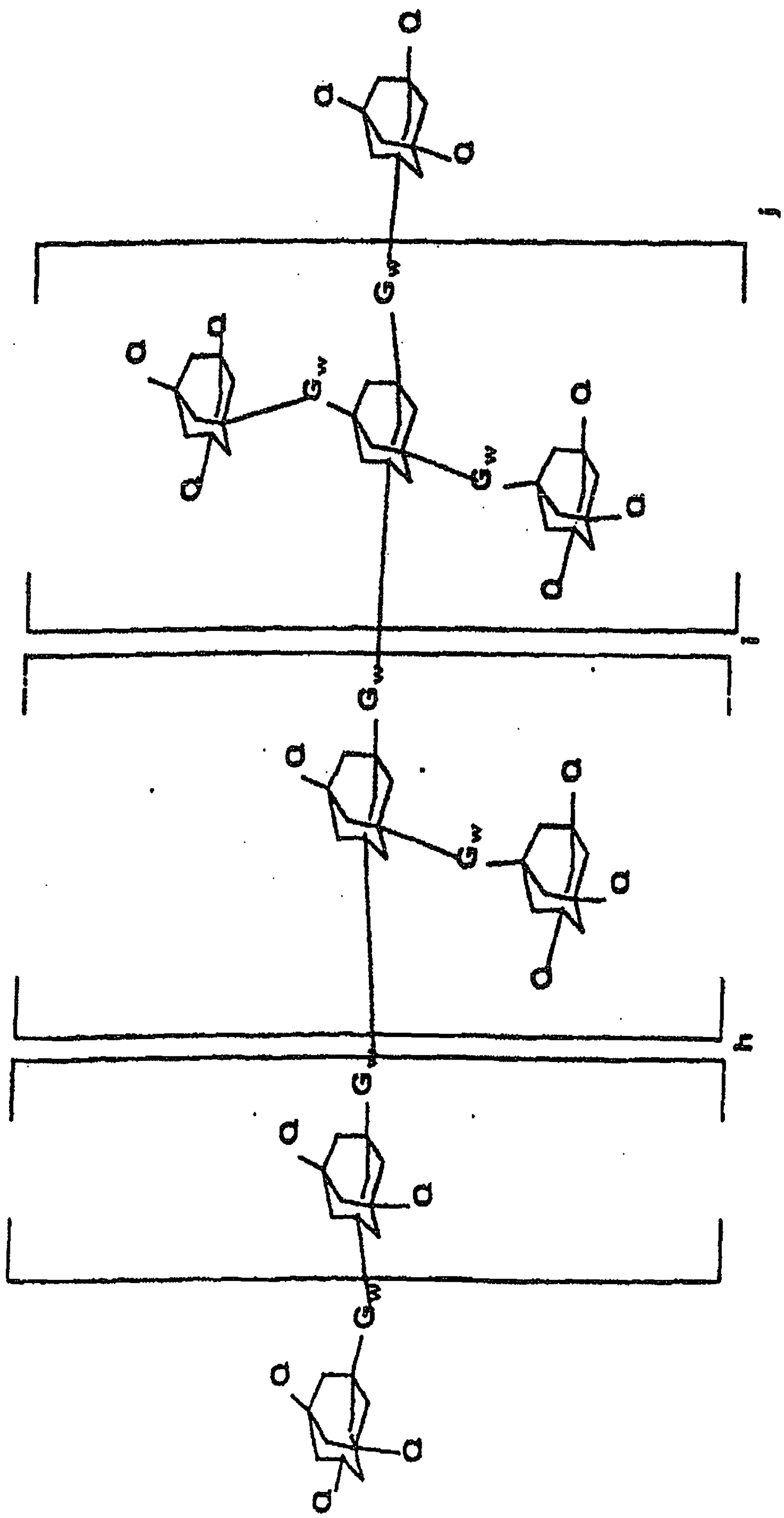

oder bei Verwendung von Diamantan mindestens ein Monomer der Formel V

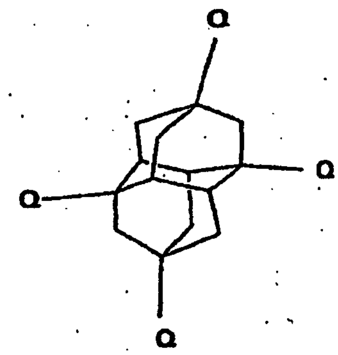

und mindestens ein Oligomer oder Polymer der Formel VI

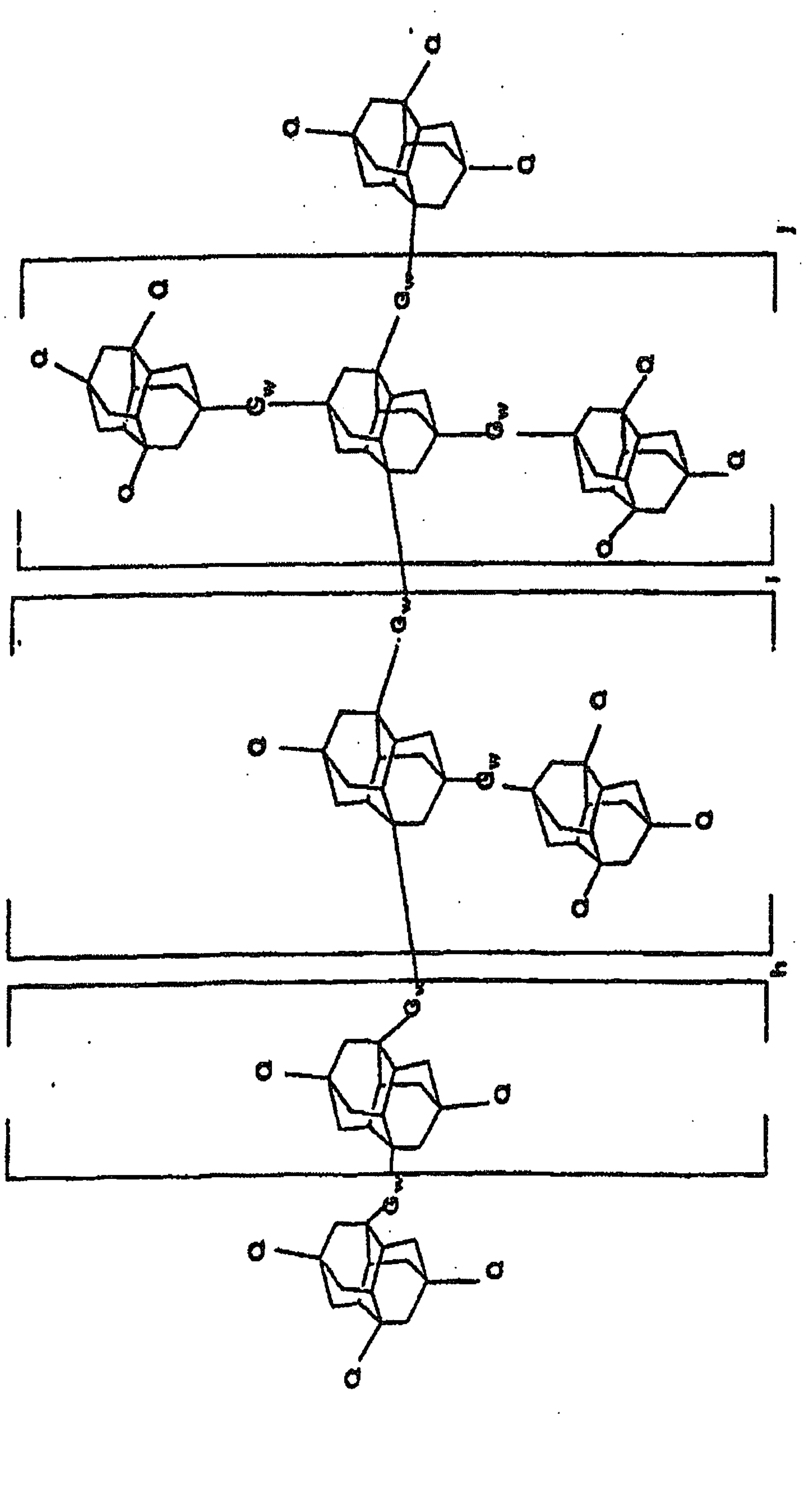

enthält, wobei h für 0 bis 10 steht; i für 0 bis 10 steht; j für 0 bis 10 steht; w für 0 oder 1 steht; Y unter Wasserstoff, Alkyl, Aryl oder Halogen ausgewählt ist; $Y_1$ für Halogen steht und Q für Wasserstoff oder $-C_6H_3YY_1$ steht; und (B) das aus Schritt (A) erhaltene Gemisch mit einem endständigen Alkin der Formel RC=CH, worin R jeweils

gleich oder verschieden ist und unter Wasserstoff, Halogen, Alkyl, Aryl, substituiertem Aryl, Heteroaryl, Arylether, Alkenyl, Alkinyl, Alkoxyl, Hydroxyalkyl, Hydroxyaryl, Hydroxyalkenyl, Hydroxyalkinyl, Hydroxyl oder Carboxyl ausgewählt ist, umsetzt.

## Revendications

**1.** Composition comprenant : (a) au moins un monomère de la formule I

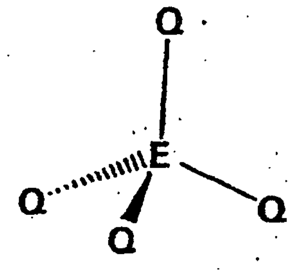

et (b) au moins un oligomère ou un polymère de la formule II

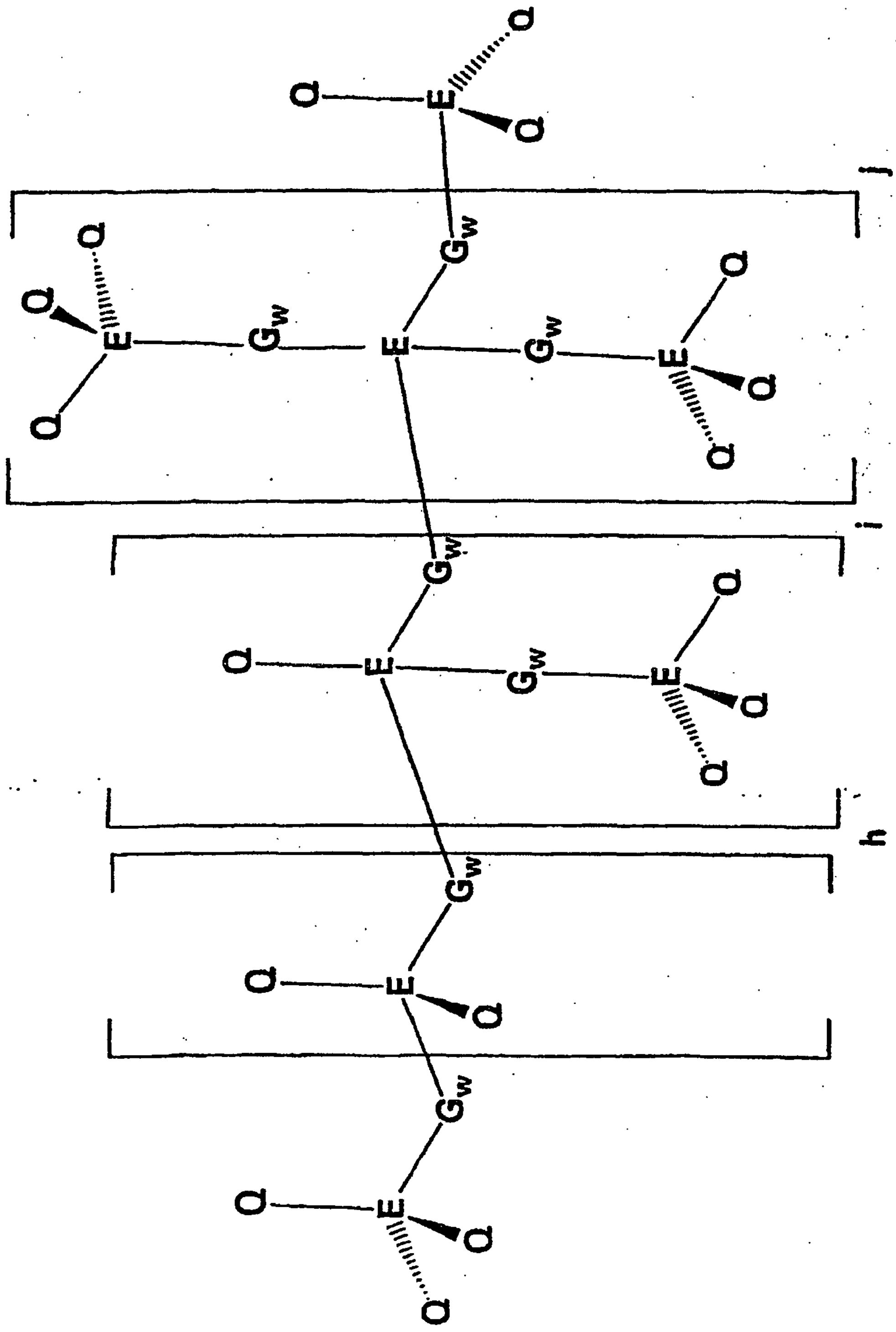

dans laquelle E représente un composé cage ; ledit Q est identique ou différent et est choisi parmi l'atome d'hydrogène et les groupes aryle, aryle ramifié et aryle substitué, dans lequel lesdits substituants comprennent l'atome d'hydrogène, un halogène, d'un groupe alkyle, aryle, aryle substitué, hétéroaryle, éther d'aryle, alcényle, alcynyle, alcoxyle, hydroxyalkyle, hydroxyaryle, hydroxyalcényle, hydroxyalcynyle, hydroxyle ou carboxyle ; ledit G représente un groupe aryle ou aryle substitué dans lequel les substituants comprennent un halogène et un groupe aryle ; ledit h vaut de 0 à 10 ; ledit i vaut de 0 à 10 ; ledit j vaut de 0 à 10 ; et ledit w vaut 0 ou 1.

**2.** Composition selon la revendication 1, dans laquelle ledit au moins un monomère (a) est un adamantane de la

formule III

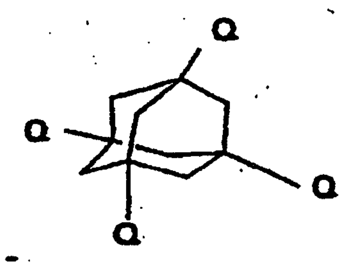

et ledit au moins un oligomère ou un polymère (b) est un adamantane de la formule IV

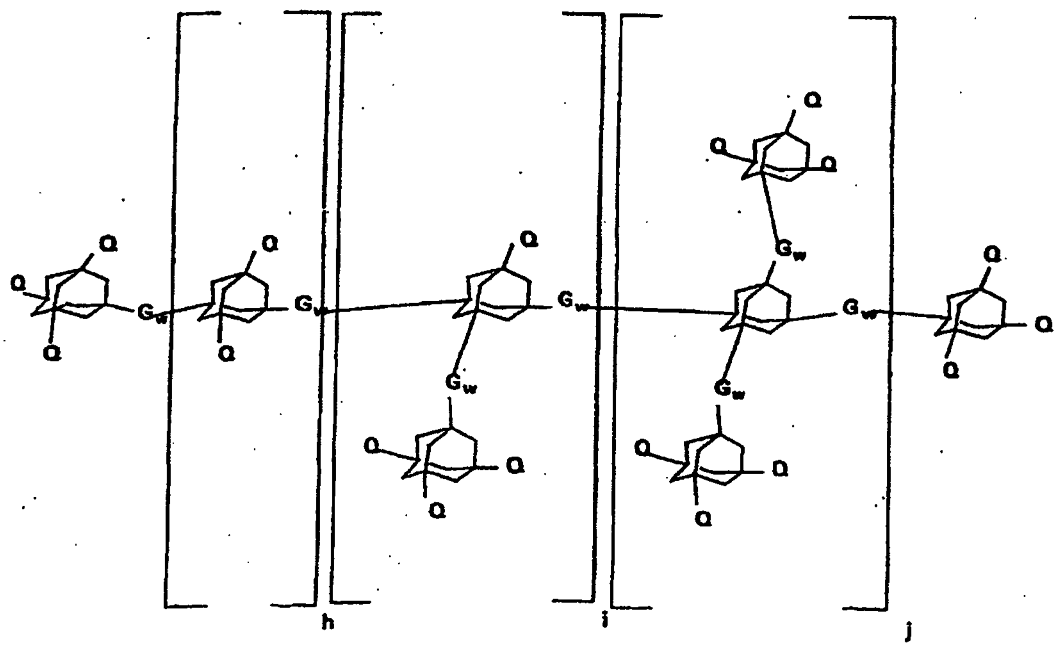

ou (a) au moins un monomère de diamantane de la formule V

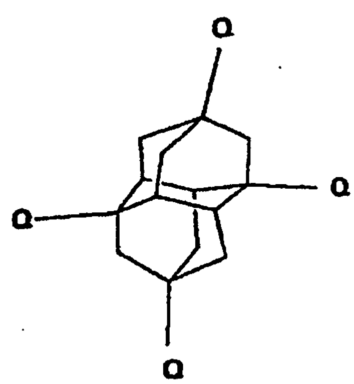

et (b) au moins un oligomère ou un polymère de monomère de diamantane de la formule VI

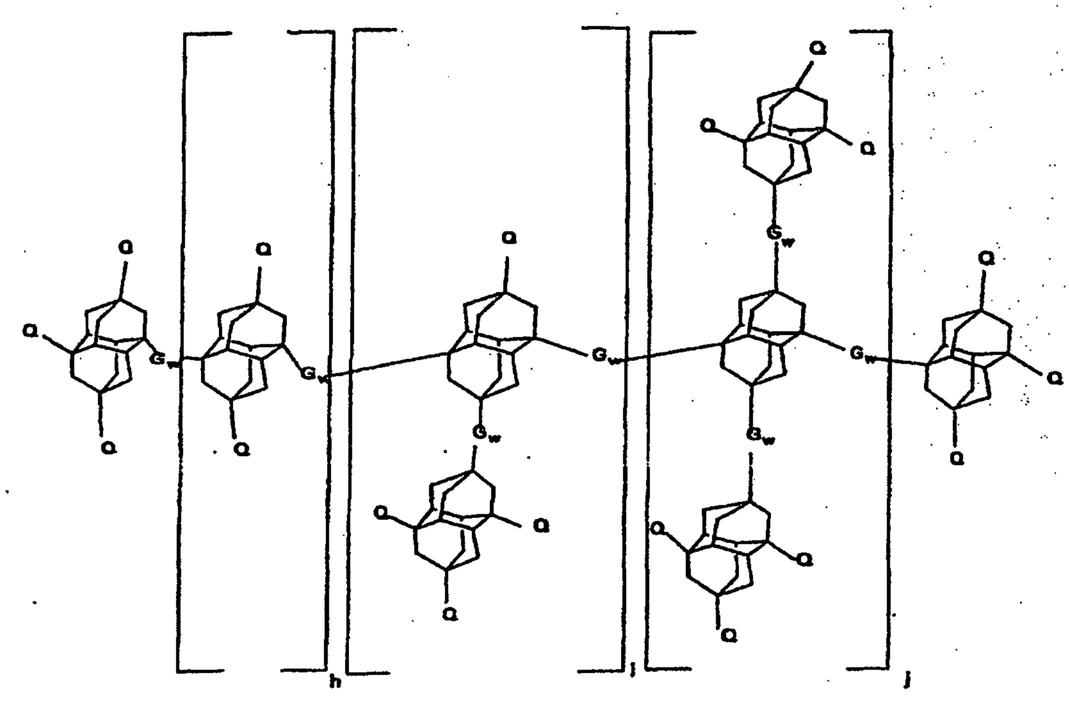

3. Composition selon la revendication 1, dans laquelle ledit au moins un monomère (a) est un monomère d'adamantane de la formule VIIA

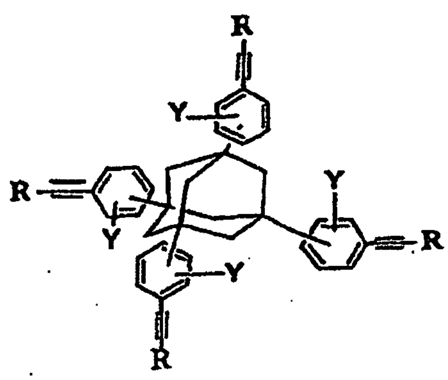

de la formule VIIB

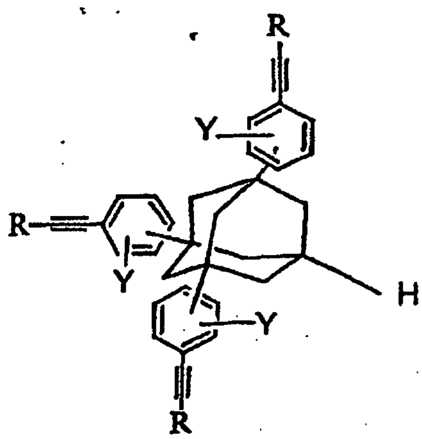

de la formule VIIC

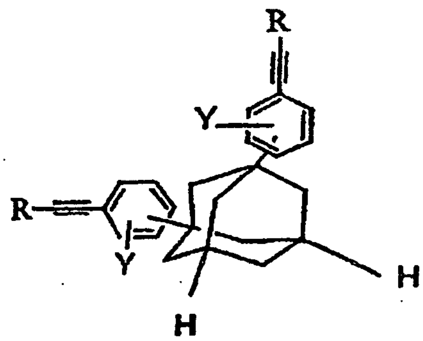

ou de la formule VIID

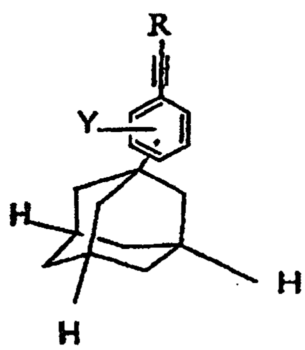

et ledit au moins un oligomère ou un polymère (b) est un monomère d'adamantane de la formule VIII

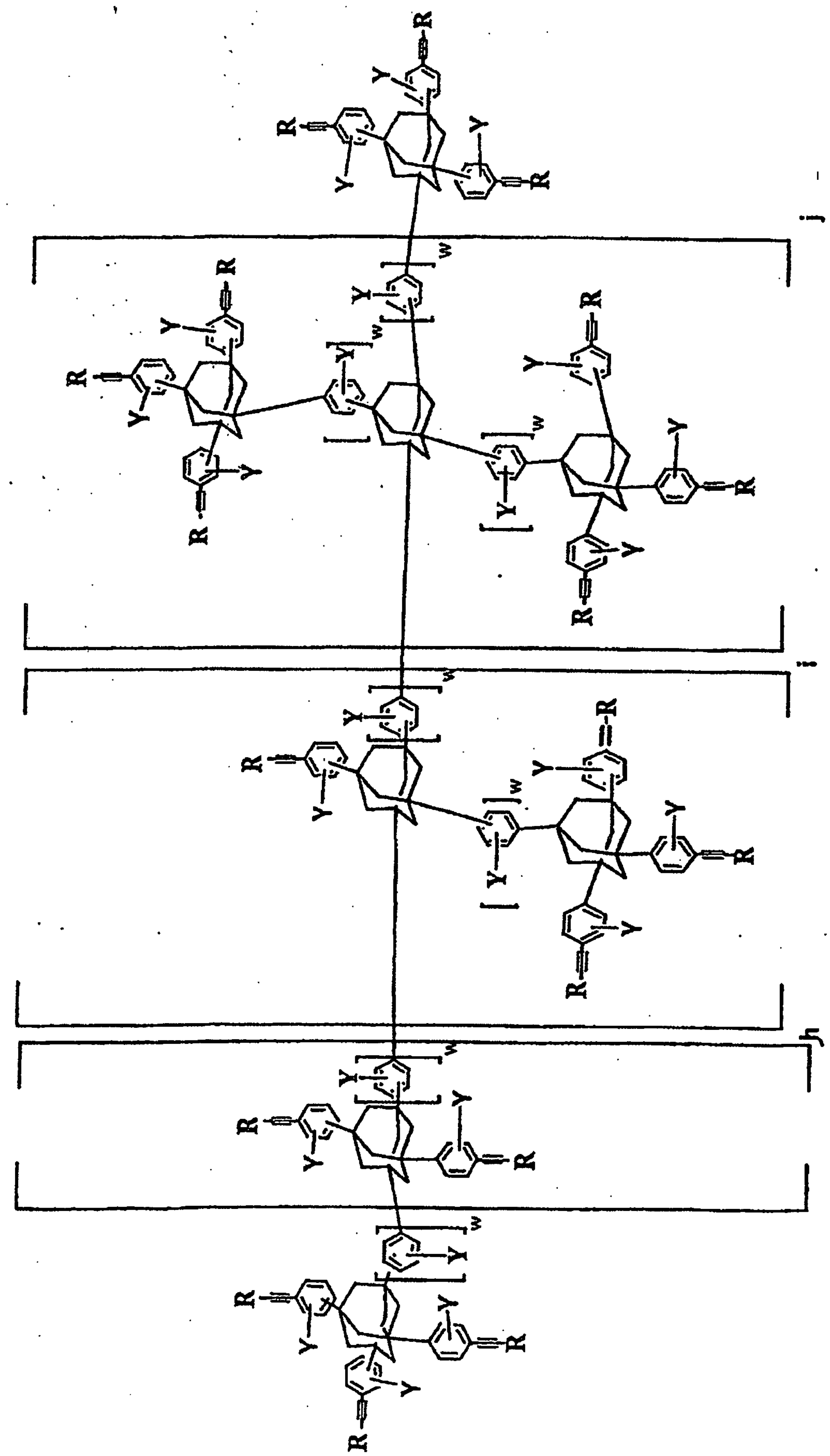

ou (a) ledit au moins un monomère (a) est un monomère de diamantane de la formule IXA

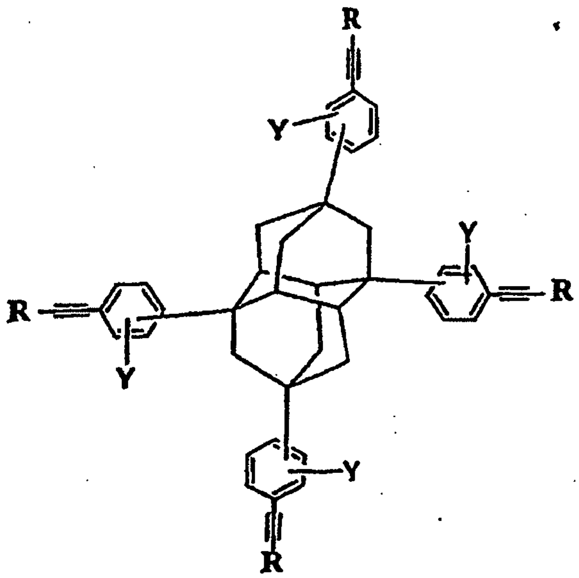

de la formule IXB

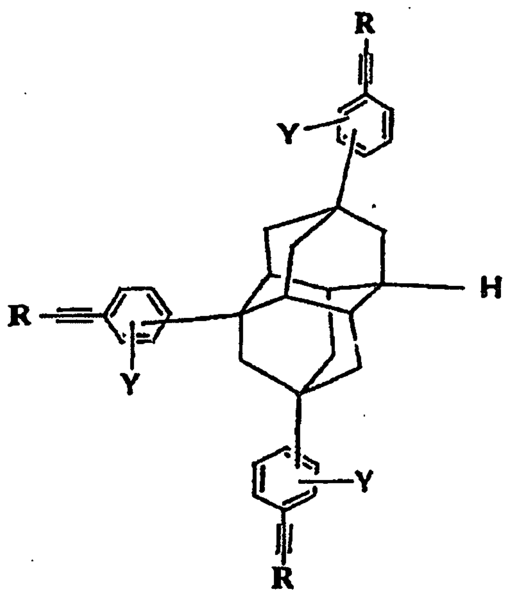

de la formule IXC

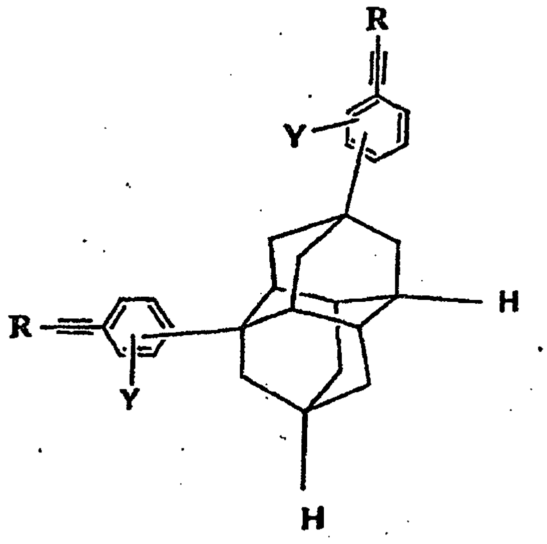

ou de la formule IXD

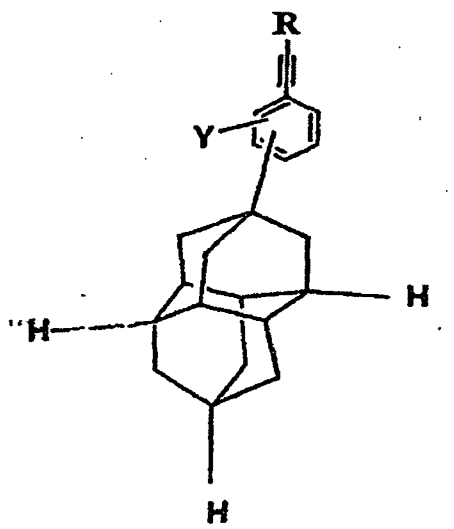

et ledit au moins un oligomère ou un polymère (b) est un monomère de diamantane de la formule X

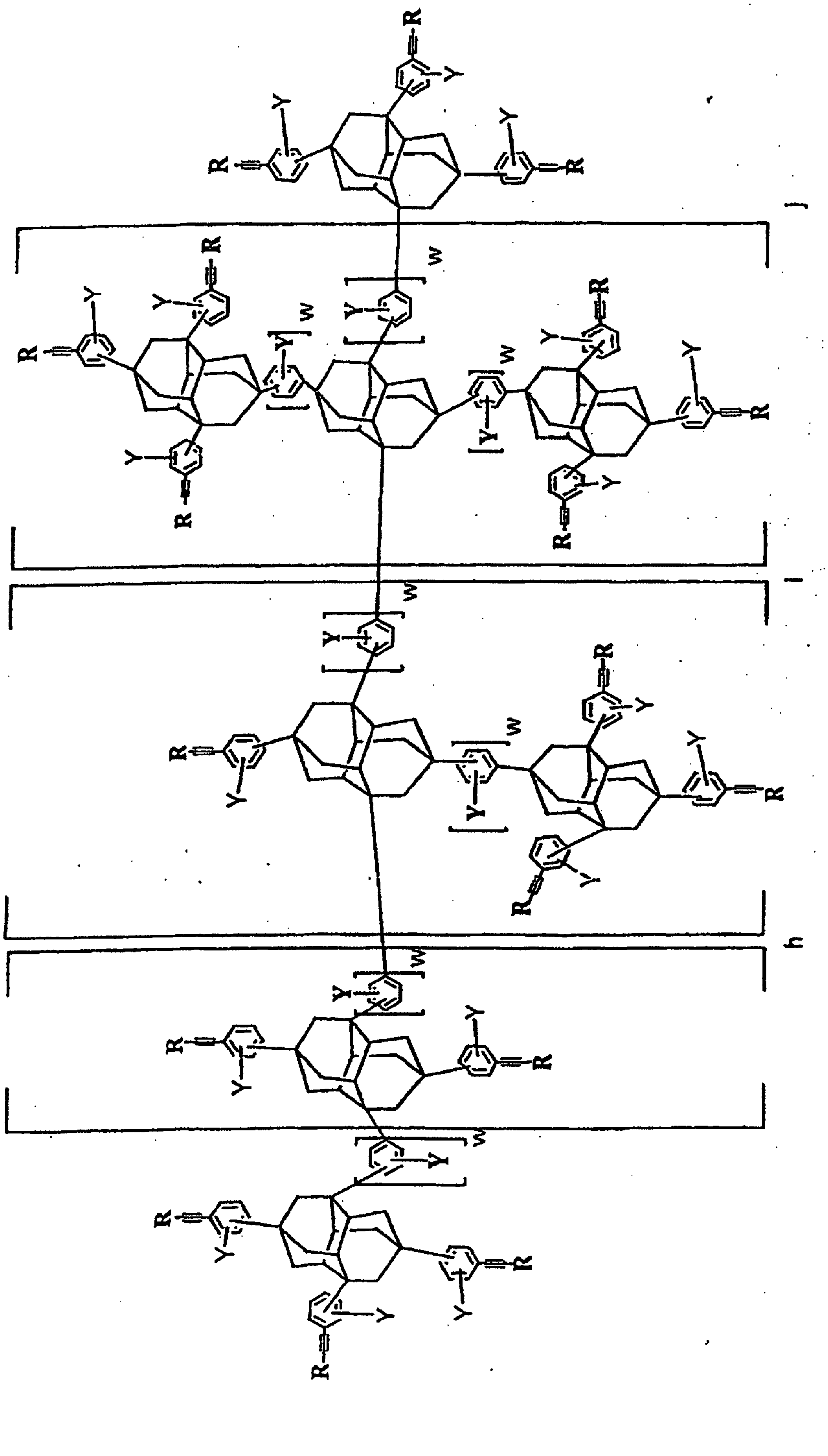

dans laquelle ledit h vaut de 0 à 10 ; ledit i vaut de 0 à 10 ; ledit j vaut de 0 à 10 ; ledit w vaut 0 ou 1 ; chacun desdits R est identique ou différent et est choisi parmi l'atome d'hydrogène, un halogène, un groupe alkyle, aryle, aryle substitué, hétéroaryle, éther d'aryle, alcényle, alcynyle, alcoxyle, hydroxyalkyle, hydroxyaryle, hydroxyalcényle, hydroxyalcynyle, hydroxyle ou carboxyle ; et chacun desdits Y est identique ou différent et choisi par l'atome d'hydrogène, un groupe alkyle, aryle ou aryle substitué, ou un halogène.

**4.** Composition selon la revendication 2 ou la revendication 3, dans laquelle ledit monomère d'adamantane ou de diamantane est présent en une quantité de 30 à 70 % en surface et ledit oligomère ou polymère est présent en une quantité de 70 à 30 % en surface.

**5.** Composition selon la revendication 4, dans laquelle ledit monomère est présent en une quantité de 45 à 55 % en surface et ledit oligomère ou polymère est présent en une quantité de 55 à 45 % en surface.

**6.** Composition selon la revendication 1, dans laquelle ledit monomère (a) et ledit oligomère ou polymère (b) sont des monomères à base d'adamantane.

**7.** Composition pour dépôt par centrifugation comprenant une composition selon l'une quelconque des revendications précédentes.

**8.** Composition pour dépôt par centrifugation selon la revendication 7 comprenant ladite composition de la revendication 3, dans laquelle ledit monomère (a) et ledit oligomère ou polymère (b) sont des monomères à base d'adamantane, dans lesquels au moins deux desdits groupes RC=C sur lesdits groupes phényle sont deux isomères différents et au moins un desdits groupes phényle entre les deux atomes de carbone de tête de pont desdits monomères d'adamantane existe sous forme de deux isomères différents, et dans laquelle ledit au moins deux isomères sont des méta- et des para-isomères, et un solvant.

**9.** Couche comprenant ladite composition pour dépôt par centrifugation selon la revendication 7 ou la revendication 8.

**10.** Micropuce comprenant un substrat qui supporte ladite couche de la revendication 9.

**11.** Procédé comprenant les étapes de :

(A) la réaction de l'adamantane ou du diamantane avec un composé d'halogéno benzène de la formule XXVI

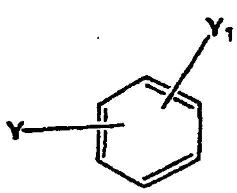

pour former un mélange, lequel, si ledit adamantane est utilisé, comprend au moins monomère de la formule III

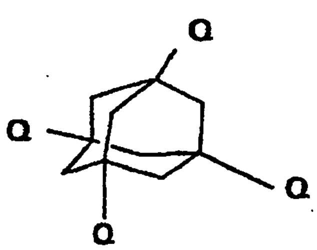

et au moins un oligomère ou un polymère de la formule IV

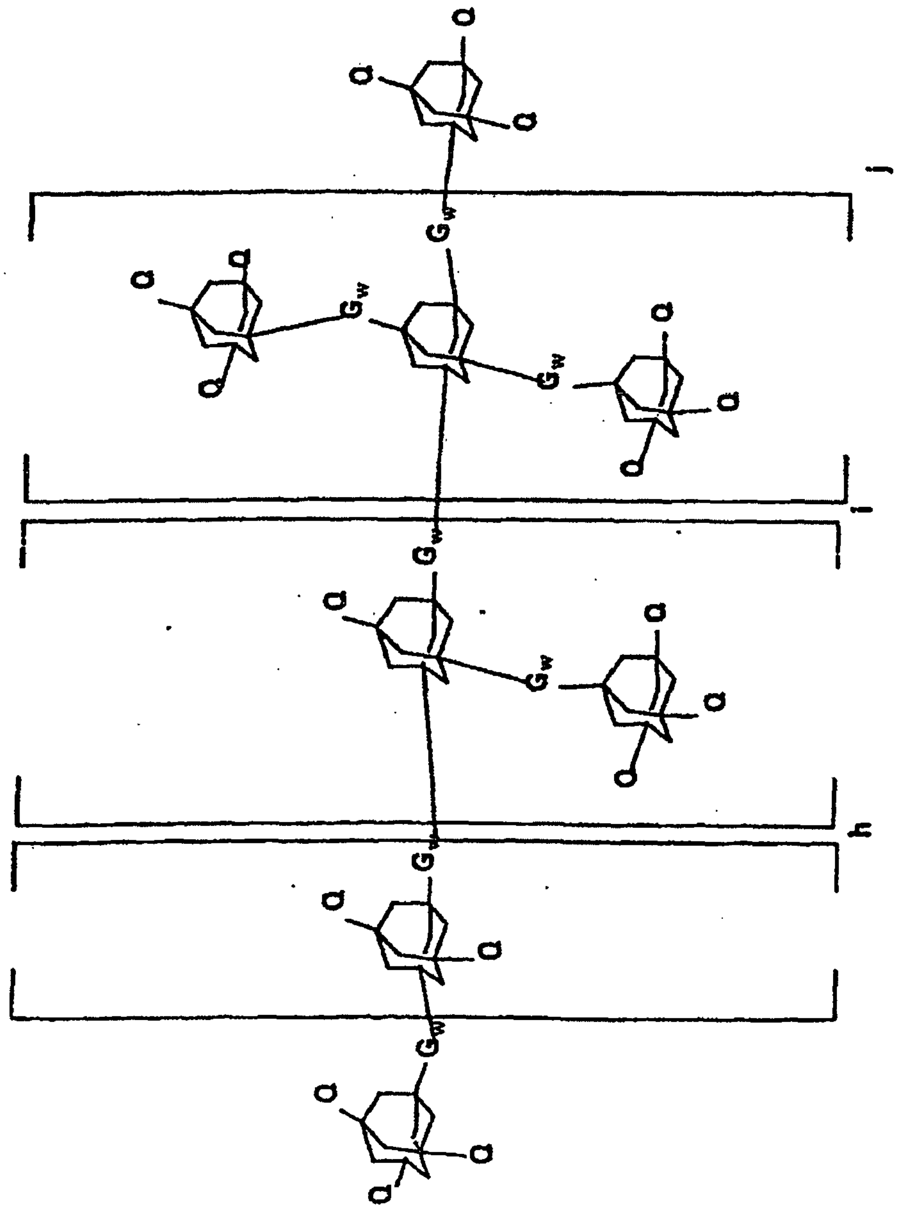

ou si ledit adamantane est utilisé, comprend au moins un monomère de la formule V

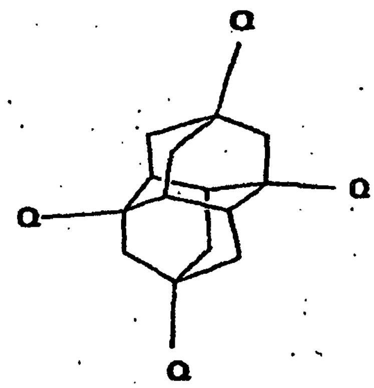

et au moins un oligomère ou un polymère de la formule VI

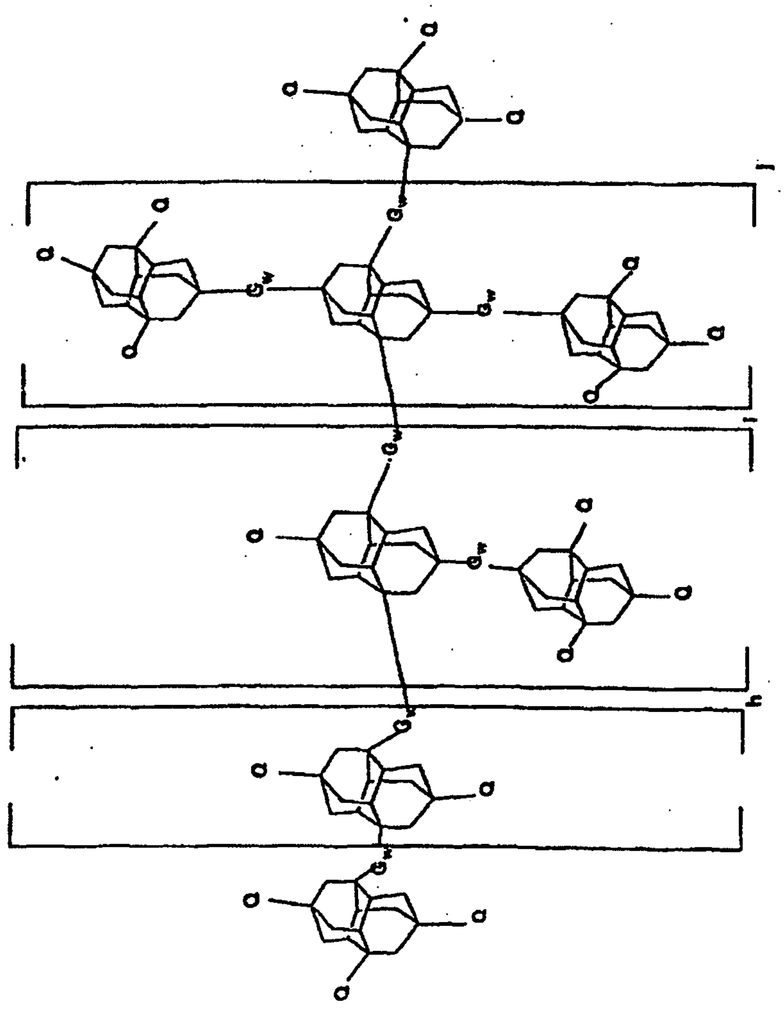

dans laquelle ledit h vaut de 0 à 10 ; ledit i vaut de 0 à 10 ; ledit j vaut de 0 à 10 ; ledit w vaut 0 ou 1 ; Y est choisi parmi l'atome d'hydrogène, un groupe alkyle ou aryle, ou un halogène ; ledit $Y_1$ représente un halogène ; et ledit Q représente un atome d'hydrogène ou un groupe $-C_6H_3YY_1$.

(B) la réaction dudit mélange provenant de ladite étape (A) avec un groupe alcyne terminal de la formule RC≡CH

dans laquelle chacun desdits R est identique ou différent et est choisi parmi l'atome d'hydrogène, un groupe alkyle, aryle, aryle substitué, hétéroaryle, éther d'aryle, alcényle, alcynyle, alcoxyle, hydroxyalkyle, hydroxyaryle, hydroxyalcényle, hydroxyalcynyle, hydroxyle ou carboxyle.

# FIGURE 1

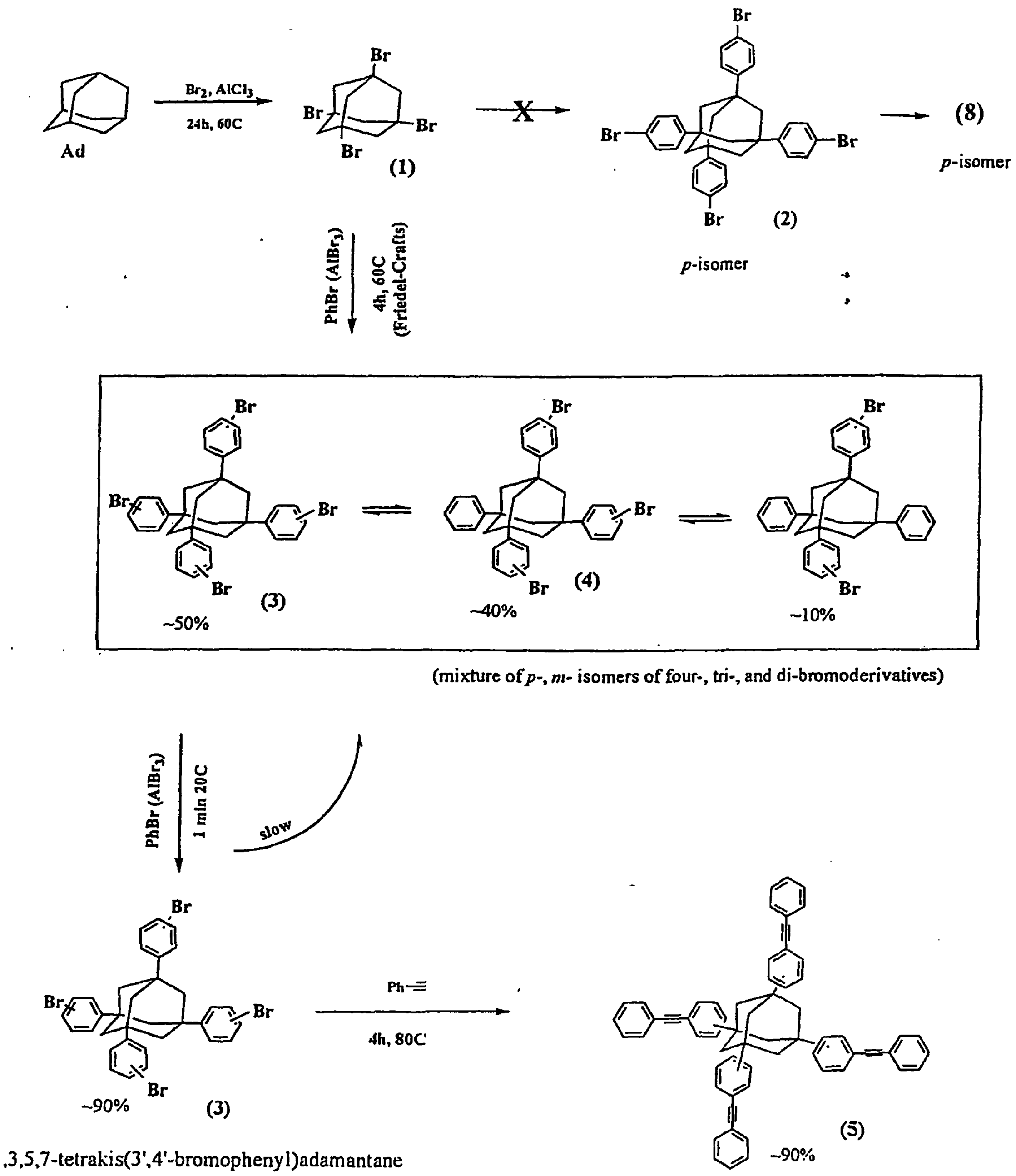


Ad

(1)

(2)

p-isomer

(8)

p-isomer

(3)

(4)

(mixture of *p*-, *m*- isomers of four-, tri-, and di-bromoderivatives)

(3)

1,3,5,7-tetrakis(3',4'-bromophenyl)adamantane
(mixture of *p*-,*m*- isomers)

(5)

1,3,5,7-tetrakis[3',4'-(phenylethynyl)phenyl]adamantane
(mixture of *p*-, *m*- isomers)

# FIGURE 2

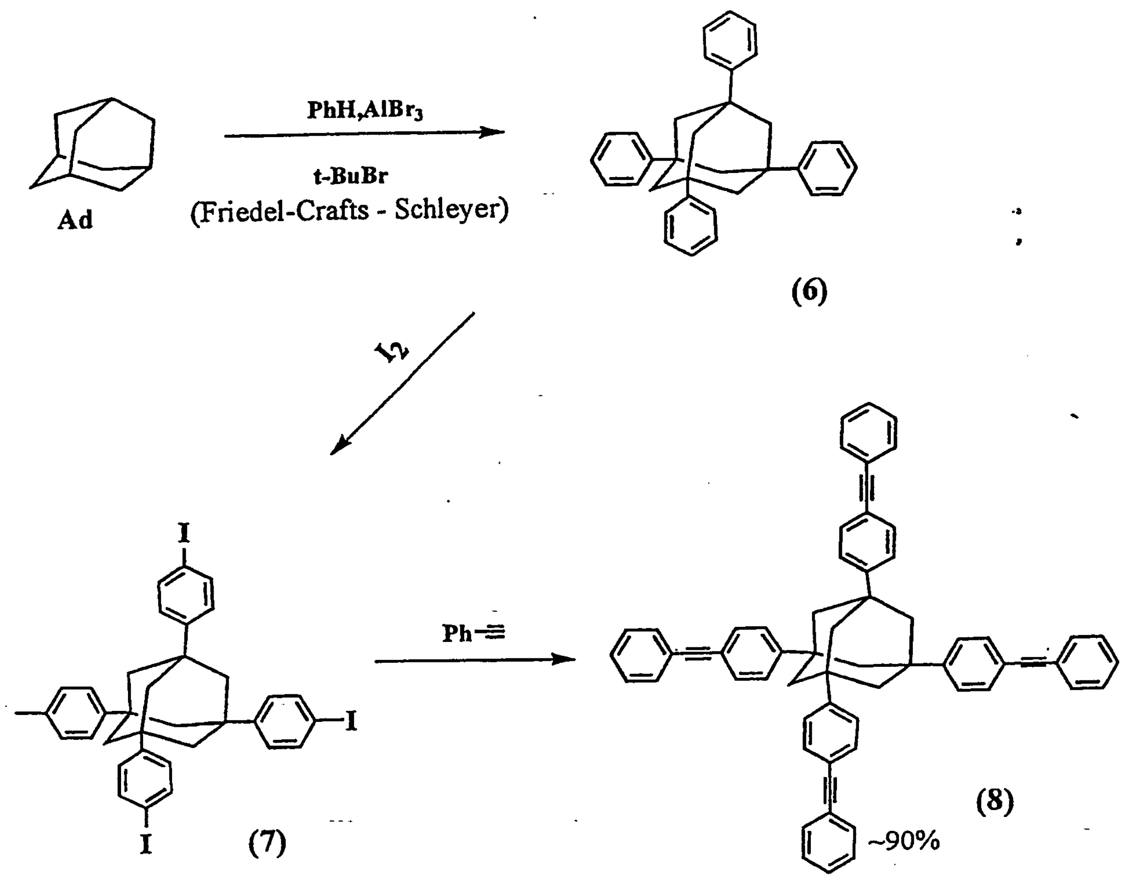


Ad

(6)

(7)

(8)

5,7-tetrakis(4'-iodophenyl)adamantane

(*para*-isomer)

1,3,5,7-tetrakis[4'-(phenylethynyl)phenyl]adamantane
(*para*-isomer)

# FIGURE 3A

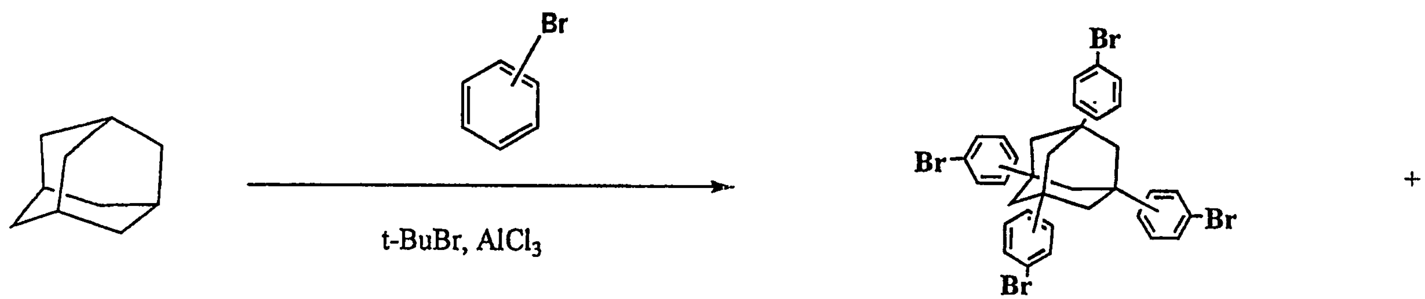


1,3,5,7-tetrakis(3'/4'-bromophenyl)adamantane

FIGURE 3B

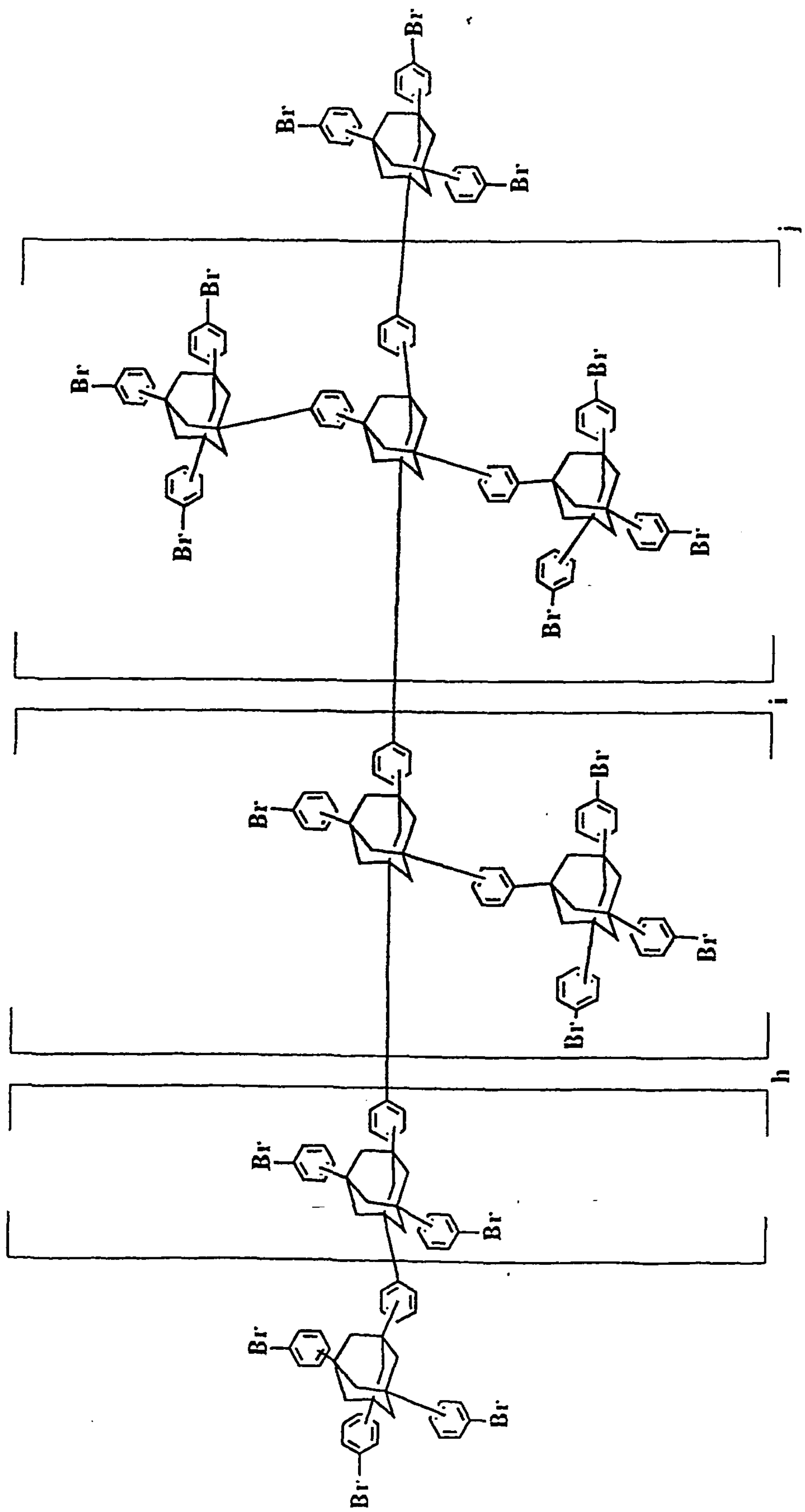

## FIGURE 3C

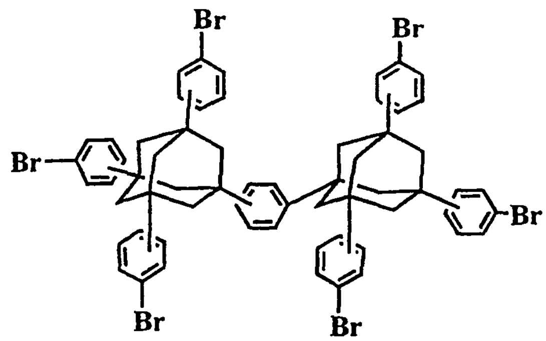

1,3/4-bis[1',3',5'-tris(3''/4''-bromophenyl)adamant-7'-yl]benzene

+

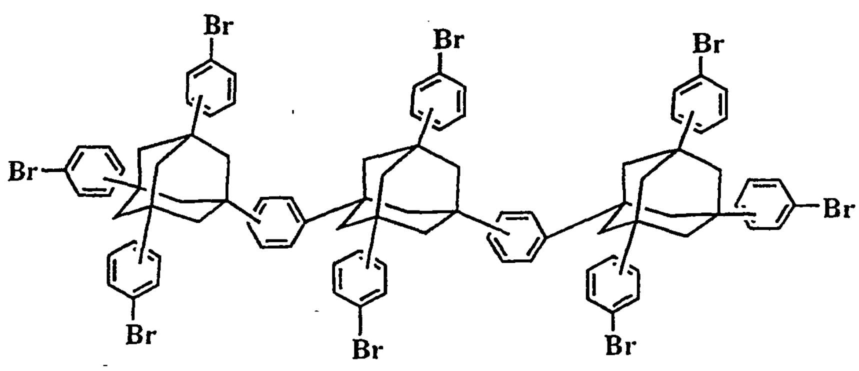

1,3-bis{3'/4'-[1'',3'',5''-tris(3'''/4'''-bromophenyl)adamant-7''-yl]phenyl}
-5,7-bis(3''''/4''''-bromophenyl)adamantane

## FIGURE 3D

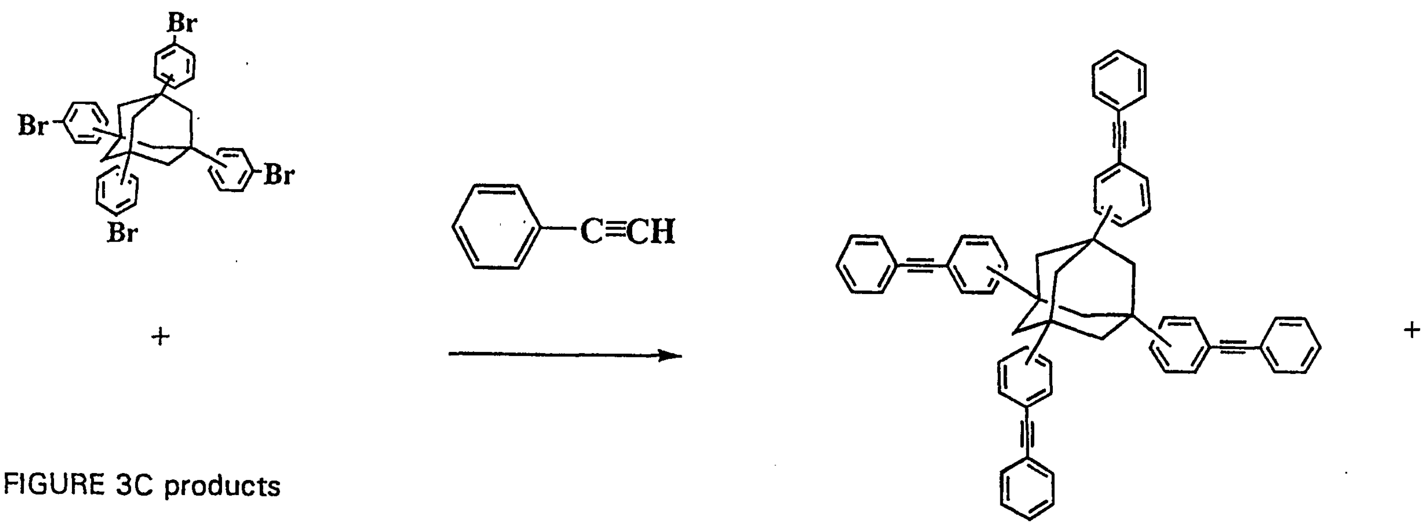

FIGURE 3C products

1,3,5,7-tetrakis[3'/4'-phenylethynyl)phenyl]adamantane

FIGURE 3E

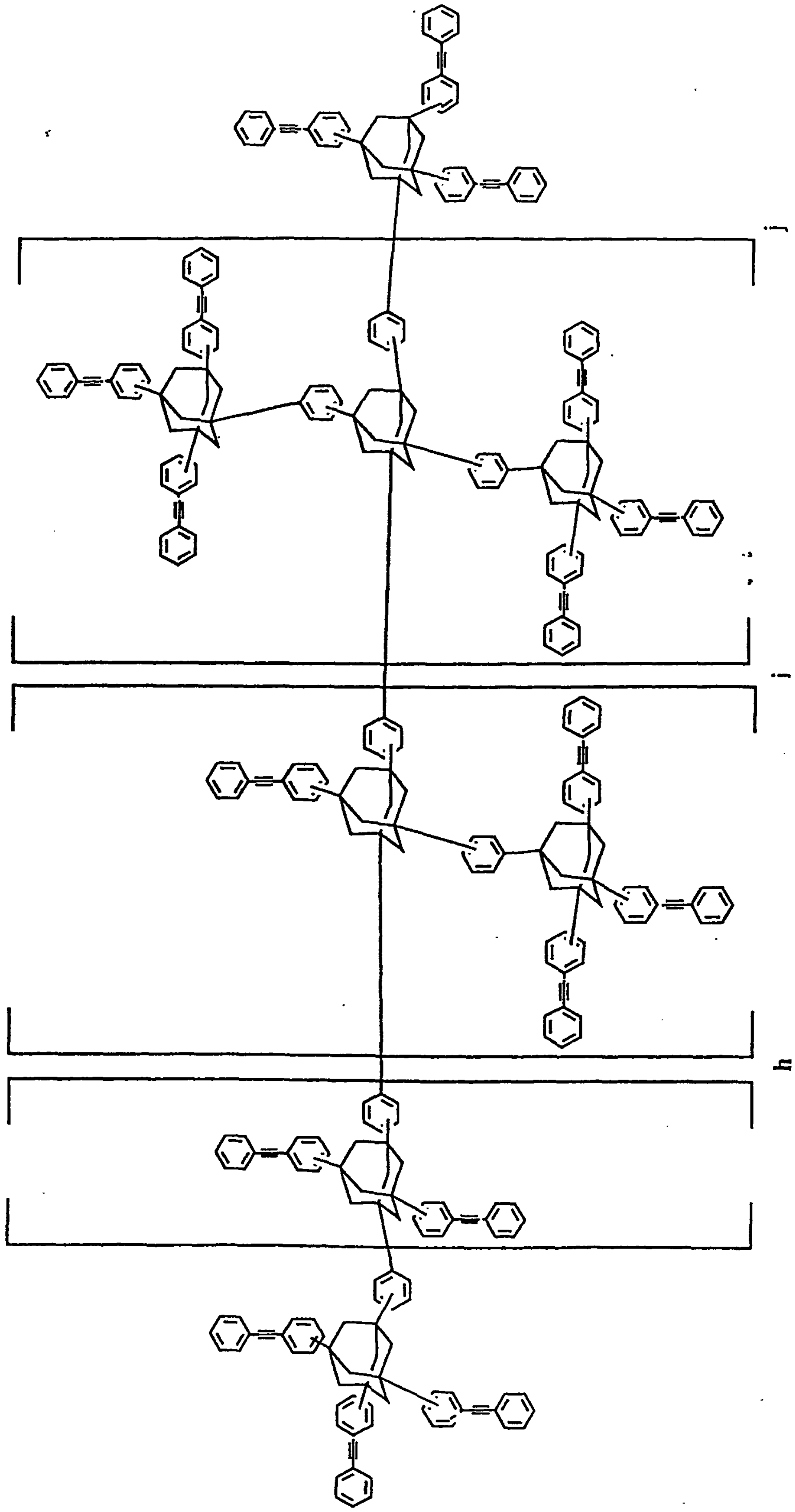

# FIGURE 3F

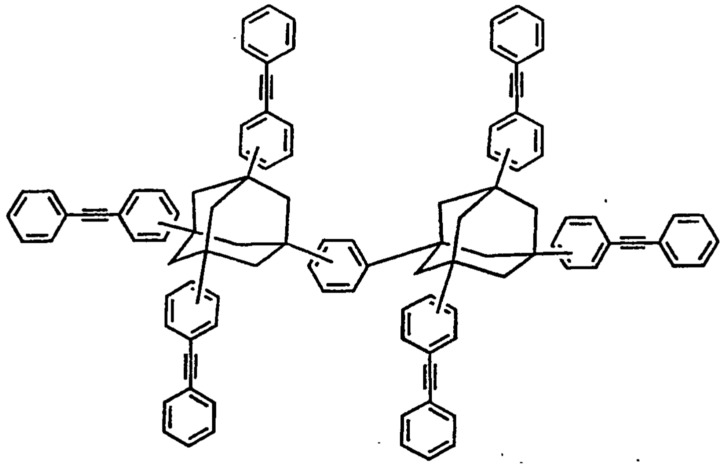

1,3/4-bis{1',3',5'-tris[3''/4''-(phenylethynyl)phenyl]adamant-7'-yl}benzene

+

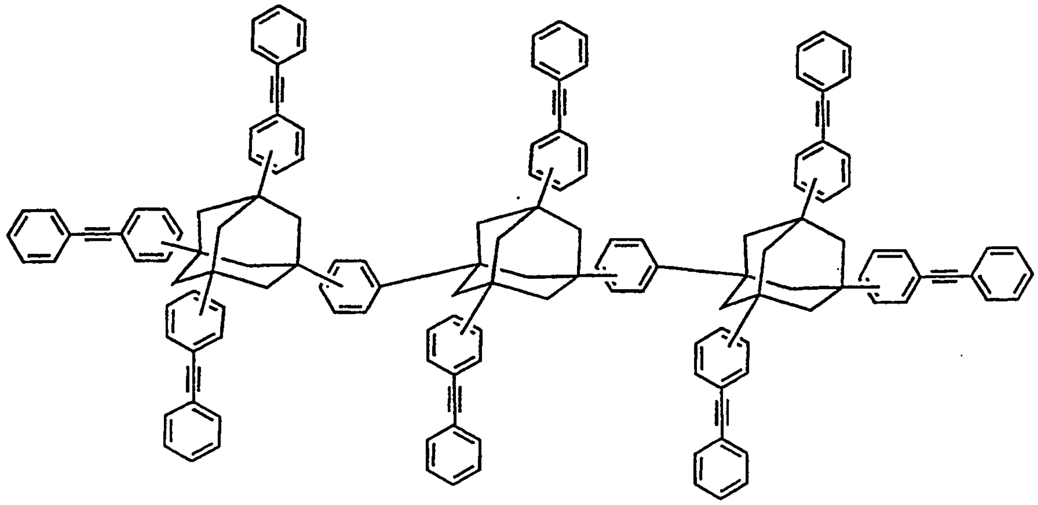

1,3-bis{3'/4'-[1'',3'',5''-tris[3'''',4''''-(phenylethynyl)phenyl]adamant-7''-yl]phenyl}-5,7-bis{3'''',4''''-(phenylethynyl)phenyl]adamantane

## FIGURE 4

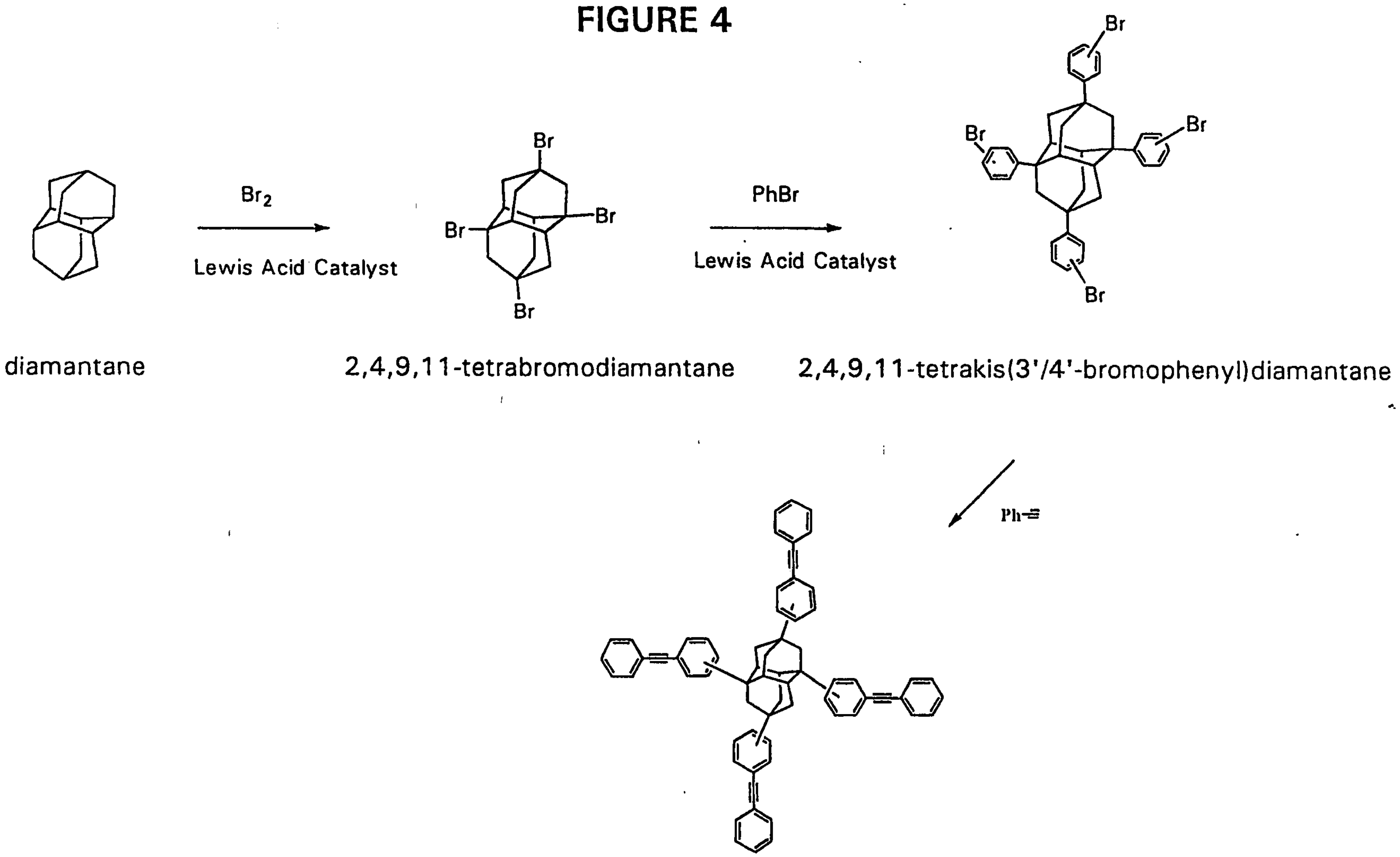


diamantane

2,4,9,11-tetrabromodiamantane

2,4,9,11-tetrakis(3'/4'-bromophenyl)diamantane

2,4,9,11-tetrakis[3'/4'-(phenylethynyl)phenyl]diamantane

# FIGURE 5A

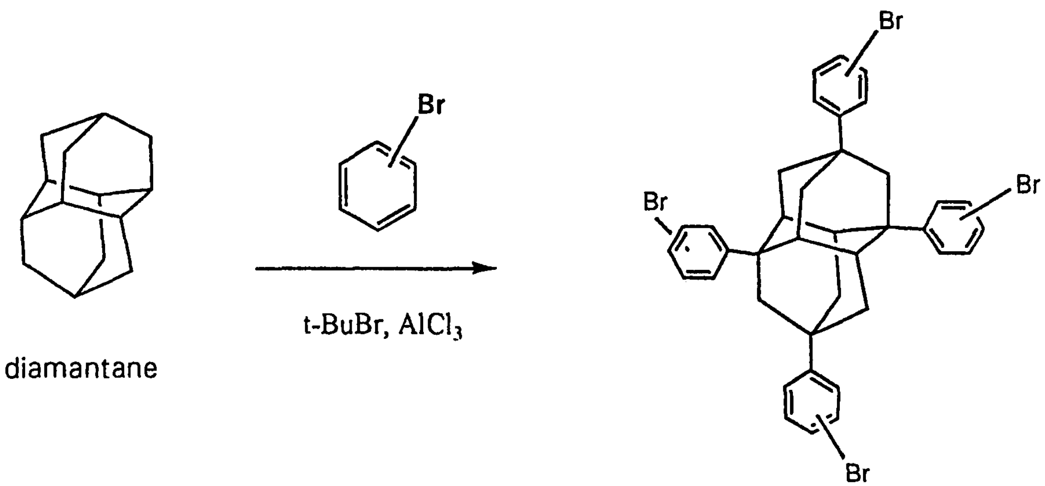


diamantane

2,4,9,11-tetrakis(3'/4'-bromophenyl)diamantane

FIGURE 5B

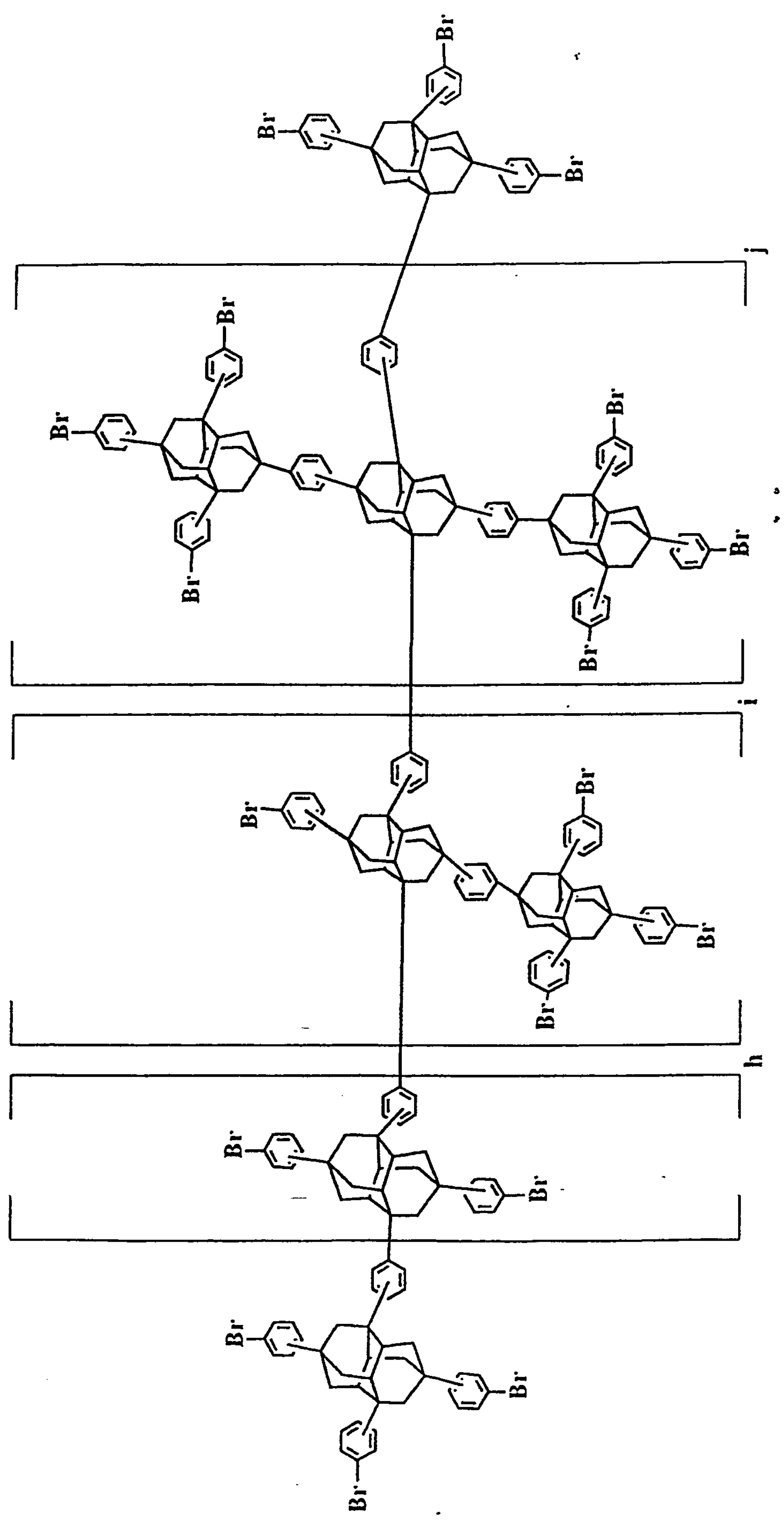

# FIGURE 5C

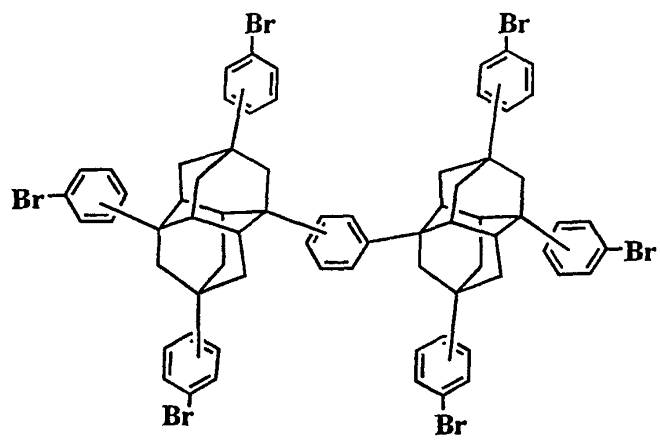

1,3/4-bis[2',4',9'-tris(3''/4''-bromophenyl)diamant-11'-yl]benzene

+

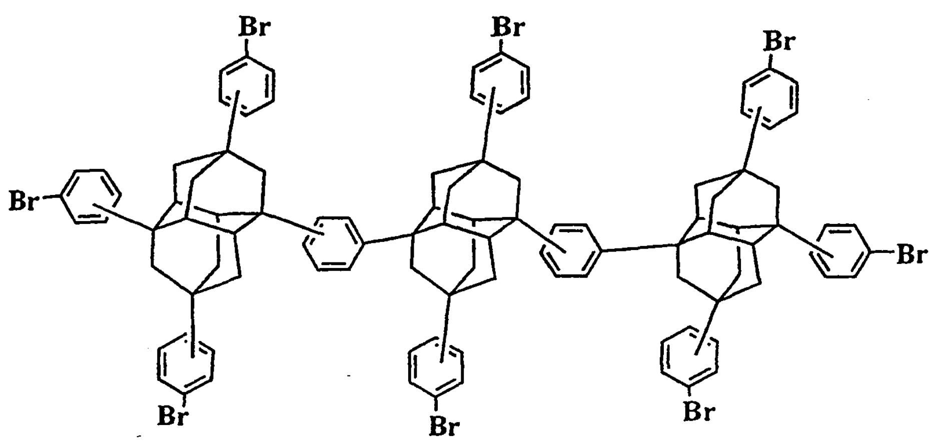

2,4-bis{3'/4'-[2'',4'',9''-tris(3'''/4'''-bromophenyl)diamant-11''-yl]phenyl}-9,11-bis(3''''/4''''-bromophenyl)diamantane

FIGURE 5D

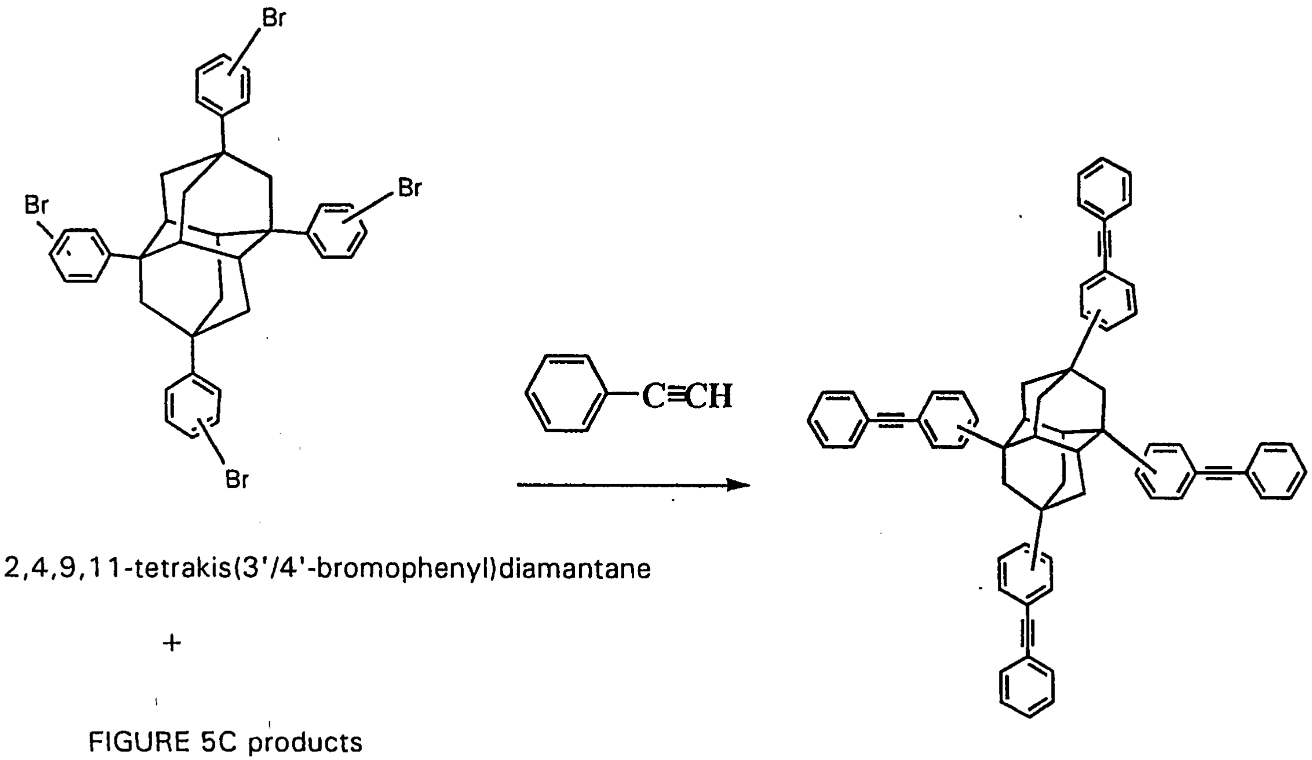

2,4,9,11-tetrakis(3'/4'-bromophenyl)diamantane

+

FIGURE 5C products

+

2,4,9,11-tetrakis[3'/4'-(phenylethynyl)phenyl]diamantane

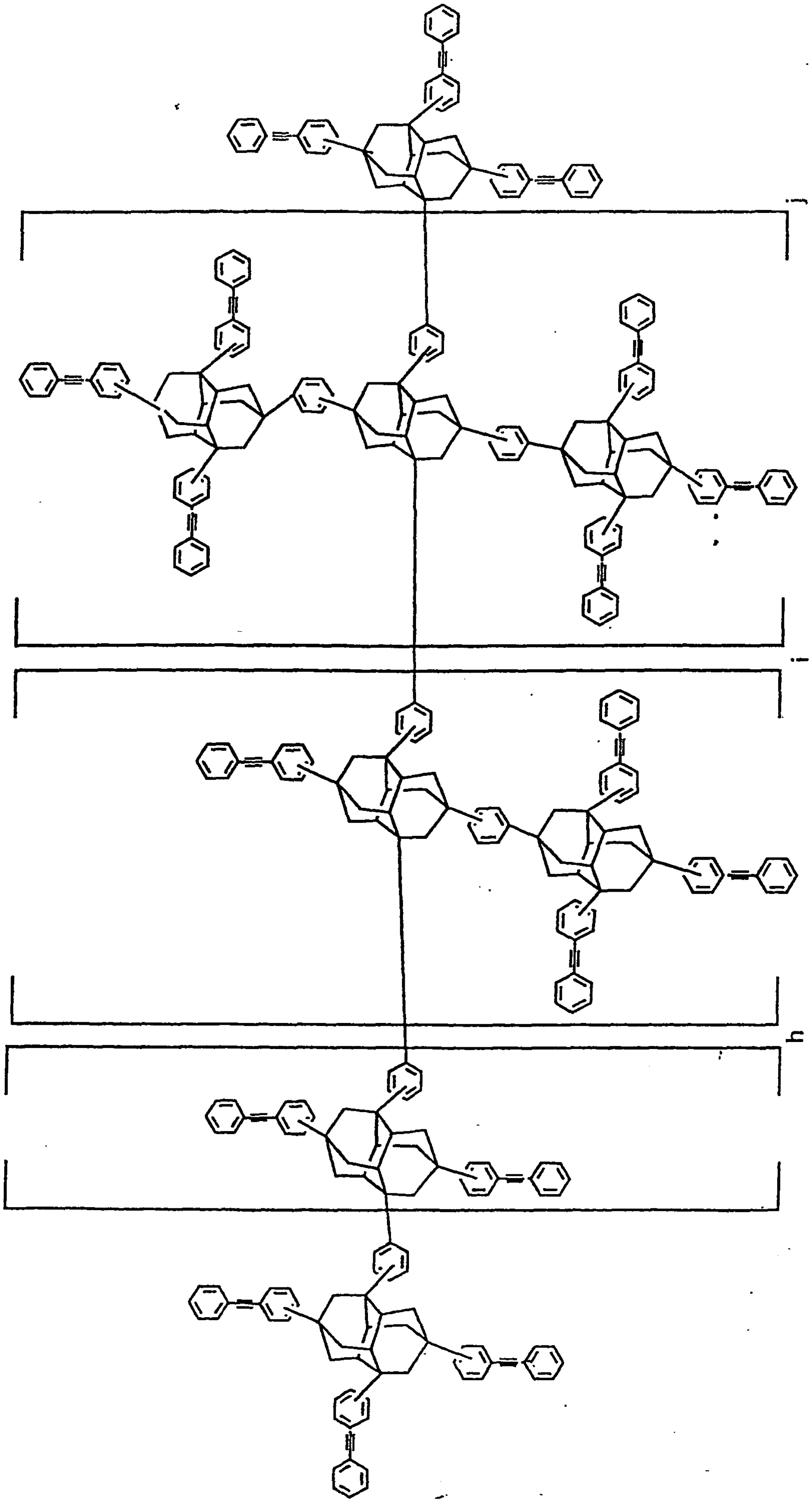

FIGURE 5E

## FIGURE 5F

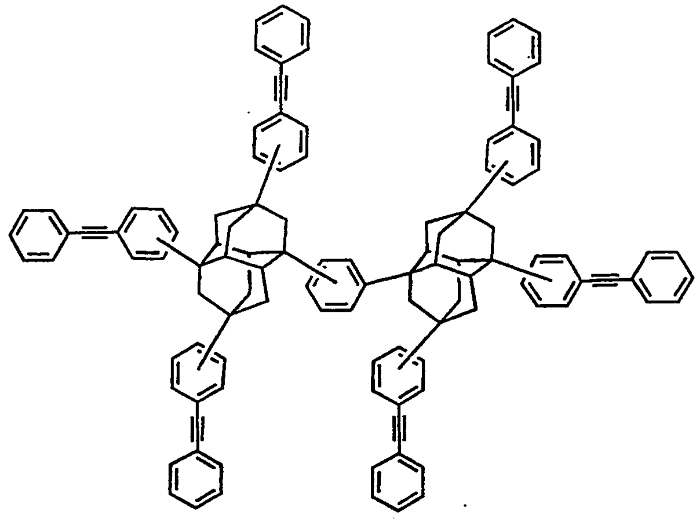

1,3/4-bis{2',4',9'-tris[3",4"-(phenylethynyl)phenyl]diamant-11'-yl}benzene

+

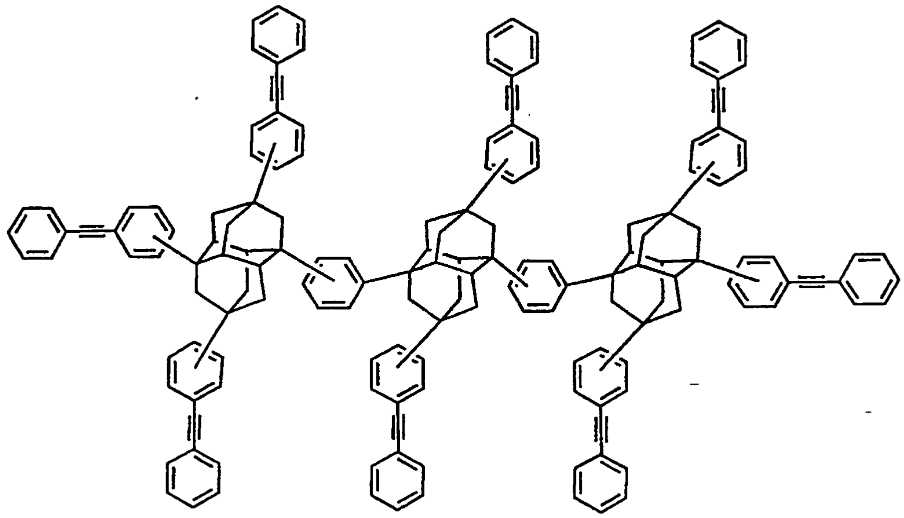

2,4-bis{3'/4'-[2",4",9"-tris[3'''/4'''-(phenylethynyl)phenyl]diamant-11"-yl]phenyl}-9,11-bis[3''''/4''''-(phenylethynyl)phenyl]diamantane

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6278174 B
- US 4756977 A
- US 5370903 A
- US 5486564 A
- WO 0040637 A
- US 6143855 A
- US 6225238 B
- US 5900290 A
- US 5225586 A
- US 5986045 A
- US 5874516 A
- US 5658994 A
- US 5268202 A
- US 5965679 A
- US 6288188 B1
- WO 0129052 A
- WO 0129141 A
- US 0122204 W
- US 09545058 B
- US 09618945 B
- US 09897936 B
- US 09902924 B
- WO 0178110 A
- US O15O182 W
- US 9608678 W
- US 6042994 A
- US 6080526 A
- US 6177143 B
- US 6235353 B
- US 4973526 A
- US 10078919 B
- US 6372666 B


### Non-patent literature cited in the description


- Ultra Low k Silsesquioxane Based Resins. **E.S. MOYER et al.** Concepts and Needs for Low Dielectric Constant < 0.15 μm Interconnect Materials: Now and the Next Millennium, Sponsored. American Chemical Society, 14 November 1999, 128-146
- **WAETERLOOS et al.** Integration Feasibility of Porous SiLK Semiconductor Dielectric. *Proc. Of the 2001 International Interconnect Tech. Conf.,* 2001, 253-254
- Am. Chem. Soc., Div. Polym. Chem. *Polym, Prepr.,* 1993, vol. 34 (1), 495-6
- Am. Chem. Soc., Div. Polym. Chem. *Polym, Prepr.,* 1992, vol. 33 (2), 144-5
- *Chem. Mater.,* 1993, vol. 5 (1), 4-5
- *Macromolecules,* 1994, vol. 27 (24), 7030-7034
- *Macromolecules,* 1994, vol. 27 (24), 7015-7023
- Am. Chem. Soc., Div. Polym. Chem. *Polym, Prepr.,* 1995, vol. 36 (1), 741-742
- *205th ACS National Meeting, Conference Program,* 1993, 312
- *Macromolecules,* 1994, vol. 27 (24), 7024-9
- *Macromolecules,* 1992, vol. 25 (9), 2294-306
- *Macromolecules,* 1991, vol. 24 (18), 5232-3
- **VERONICA R. REICHERT.** *PhD Dissertation,* 1994, vol. 55-06B
- *ACS Symp. Ser.: Step-Growth Polymers for High-Performance Materials,* 1996, vol. 624, 197-207
- *Macromolecules,* 2000, vol. 33 (10), 3855-3859
- Am. Chem. Soc., Div. Polym. Chem. *Polym, Prepr.,* 1999, vol. 40 (2), 620-621
- Am. Chem. Soc., Div. Polym. Chem. *Polym, Prepr.,* 1999, vol. 40 (2), 577-78
- *Macromolecules,* 1997, vol. 30 (19), 5970-5975
- *J. Polym. Sci, Part A: Polymer Chemistry,* 1997, vol. 35 (9), 1743-1751
- Am. Chem. Soc., Div. Polym. Chem. *Polym, Prepr.,* 1996, vol. 37 (2), 243-244
- Am. Chem. Soc., Div. Polym. Chem. *Polym, Prepr.,* 1996, vol. 37 (1), 551-552
- *J. Polym. Sci., Part A: Polymer Chemistry,* 1996, vol. 34 (3), 397-402
- Am. Chem. Soc., Div. Polym. Chem. *Polym, Prepr.,* 1995, vol. 36 (2), 140-141
- Am. Chem. Soc., Div. Polym. Chem. *Polym, Prepr.,* 1992, vol. 33 (2), 146-147
- *J. Appl. Polym. Sci.,* 1998, vol. 68 (3), 475-482
- *Macromolecules,* vol. 27, 7015-7034
- Metal-Catalyzed Cross-Coupling Reactions. Wiley-VCH, 1998
- **MARCH, J.** Advanced Organic Chemistry. John Wiley & Sons, 1992, 717-718

- **SONOGASHIRA ; TOHDA ; HAGIHARA.** *Tetrahedron Lett.,* 1975, 4467
- **MICHAEL E. THOMAS.** Spin-On Stacked Films for Low keff Dielectrics. *Solid State Technology,* July 2001
- **H.G. THOMPKINS ; WILLIAM A. MCGAHAN.** Spectroscopic Ellipsometry and Reflectometry. John Wiley and Sons, Inc, 1999
- **G.A. OLAH ; W..S.TOLGYESI ; R.E.A.DEAR.** *J. Org. Chem.,* 1962, vol. 27, 3441-3449